# EUROPEAN PATENT SPECIFICATION

(11) **EP 2 581 248 B1**
(45) Date of publication and mention of the grant of the patent: **02.11.2016**
(21) Application number: 13150499.5
(22) Date of filing: 31.03.2004
(51) Int. Cl.: B60K 1/00, B60K 37/02, G06F 3/041, G06F 3/042, G06F 3/048, B60K 35/00, B60K 37/06

(54) **Reconfigurable vehicle instrument panels**
Rekonfigurierbare Fahrzeuginstrumententafeln
Panneaux de bord de véhicule reconfigurable

(30) Priority: 31.03.2003 US 458434 P; 02.07.2003 US 611814; 04.09.2003 US 499890 P; 12.09.2003 US 502271 P; 29.01.2004 US 539578 P
(43) Date of publication of application: 17.04.2013
(62) Divisional of application: 04759053.4
(73) Proprietor: Apple Inc., Cupertino, CA 95014 (US)
(72) Inventor: Pryor, Timothy R., Tecumseh, ON N8N 3S8 (CA)
(74) Representative: Barton, Russell Glen

(56) References cited:
- US-B1- 6 181 328

## Description

### FIELD OF THE INVENTION

The invention concerns Vehicle Instrument Panels (also called an "IP", and in some cases a dashboard, or dash panel or dash), based on what I call a "Reconfigurable Tactile Control Display" (or RTD for short) to provide a wide range of information, and the safe input of data to a computer controlling the vehicle subsystems. The invention may make use of a unique tactile form of display screen and control surface employing physical selection or adjustment control means which can be felt in a tactile sense, and typically utilizes electro-optical transduction of knob position, finger location, and other variables at multiple points at once on a rear projection display. A revolutionary, yet familiar, large screen form of instrument panel enabling safer vehicle operation results which is simple to operate, stylistically attractive, customizable by the user, and programmable in both the tactile and visual sense. It is also thought to be lower in cost than most conventional instrument panels and may have applications in other fields such as military vehicles, control systems, home automation systems, CAD or Graphics terminals, and the like.

### BACKGROUND OF THE INVENTION

US 6 181 328 B1 discloses a method as well as a device for associating operations in a touch-sensitive device, the method consists of displaying a plurality of icons on a touch-sensitive display of the device, where each icon represents an operation; detecting finger positions in contact with the touch-sensitive display and determining an operation based on the icon(s) touched; and causing the touch-sensitive device to perform the corresponding operation.

The Automobile Dashboard or instrument Panel (IP) as we know it today has evolved in the last 60 years or so, into a combination of control details such as knobs, switches, and sliders for actuation and selection of functions, together with analog or digital displays and light based tell-tales for communication of information to the driver. The actual provision of such components is governed in the USA by FMVSS (Federal Motor Vehicle Safety Standard) 101: Controls and Displays. In general, this standard specifies overall ground rules for the more critical functions operated by hand by the driver, leaving non-critical functions such as entertainment to the option of the manufacturer. Even some non-critical controls however, are specified as to their design goals, to avoid driver confusion. A particular stipulation of FMVSS 101 states that the Labelling (written or pictograph) for controls must be on or adjacent the control.

However, the Vehicle Instrument Panel is very constrained as to available space for the instrumentation and control functions. Controls used by the driver cannot be so high as to obscure the drivers vision, or too low so as to require too much angular diversion of ones line of sight while in motion. In a right - left, or cross-car context, the hand operated controls cannot be significantly behind the steering wheel used in present day vehicles, or too far to reach over to the passenger side by the smallest driver using them.

In terms of the control of the vehicle, there are basically three major components (not including foot based controls):
Data Displays by instruments either analog or digital, and accessories. Vehicle data is generally speed, fuel level , engine rpm, battery charge, etc. Some of these are rapidly varying (e.g. RPM) others slow (e.g. fuel). Some are more important than others;

Hand operated controls, generally today in the form of knobs, switches, sliders, levers and dials. Switches and knobs are most common today it seems. Most are located on the instrument panel, but some are on stalks protruding from the steering column, and window and seat controls and outside mirror controls can most often be found on the doors, or seats: Some controls (such as cruise control, auxiliary radio controls etc) can be found on the steering wheel in many vehicles;

Control labelling, today nearly universally achieved with printed data (language or pictograph) on or adjacent the control, to comply with FMVSS 101. In several cases, the data cannot rotate with the knob.
Modern technology has the ability to greatly expand the amount of data which can be provided, as long as the means exists to display it safely (legibility, position, etc). However, the means to interact with the data, if required or desirable has to be present in the controls, which at the same time need to comply with regulations. The steering wheel, which is a logical place for more control functions, is pretty much constrained today in this regard by the presence of the airbag, and the requirement for slip rings or other complex wiring

Central to the issue, is the question of just how the driver uses the controls?. I have observed that a driver of a vehicle today, interacts with the controls of the vehicle instrument panel, primarily in three ways:
By sight only;
By touch /feel only (possibly accompanied by a sound, such as a click-usually corresponding to a feeling sensation such as provided by a detent;
By a quick glance, and then touch - possibly followed by another quick glance to check a further or final setting of a knob, slider control, etc.

Feedback as to correctness of the action taken, if not obvious from sight or feel of the controls, is often times derived from the action of the device controlled itself, for example seeing and hearing the windshield wipers moving at high speed, when they were moving at low speed at a previous control setting.

Often while driving, only methods 2 and 3 above can be effected, as the control details may be too small to read or operate (radio function buttons are notorious) and/or require too much concentration (i.e. too many glances at the controls and their lettering, pictographs, and position) while driving to allow one to take ones eyes off the road for the time required to use sight only. Accordingly, for many users today, some functions are effectively inoperable while driving, since they cannot be worked by touch alone due to the crowded nature of their placement, and they are too hard to see in a glance- especially for those who cannot easily correct their vision away from the far sighted vision needed to drive.

It should be noted that certain technical papers indicate that single glances of more than 2 seconds duration are considered unsafe, and some traffic safety researchers feel the limit to do any control activity should be just a few glances of no more than 1.2 sec. each. These studies indicate in considerable detail that excessive glance time can be related to ten's of thousands of deaths per year in the USA alone.

The new Auto Industry guide lines for "Glance time" suggest that control of the vehicle function should not require one to take ones eyes off the road for than 2 sec max, and no more than 10 glances (of 1-2 sec. ea) should be required to complete the operation in question. (while seemingly are a large number, some navigation tasks in certain vehicles have historically taken considerably more than this). This would seem the minimum stipulation one could possibly recommend in light of the suggestions in many technical papers. And it suggests that indeed there is considerable room for improvement to not only the situation today, but even what is being contemplated.

Not only are there problems seeing or touching small complex controls, but some controls are not intuitive, and hard for the general public to understand in the manual, even if one has time to read and comprehend it. This manual comprehension problem is increased considerably, for those buying more expensive vehicles on short term leases. These vehicles are in addition, usually the ones with the most features, (and generally therefore the smallest buttons, due to instrument panel congestion), and many persons seldom take the time to fully digest the manual.. (Some manuals today for feature oriented luxury cars are several hundred pages long I)

Generally a few functions, such as turn signal stalks, transmission levers, and some knobs are big enough and/or simple enough such that only touch is needed, combined with feedback from sensing the physical action enabled (e.g. wipers switched to high speed). Thus after some acquaintance period, most vehicles enable the driver to perform the basic functions by touch alone, or just a reasonably quick glance and then touch. However, this often applies only to basic operations, given the learning curve involved and the difficulty in operation of added features, such as complex HVAC (heating ventilation and air conditioning) systems, navigation systems, and "infotainment" devices.

The present situation thus greatly constrains the addition of still further vehicle related functions, made possible by computing, electronics and communication technology. Heretofore, the addition of such functions in some cases has been distracting to the driver and thus dangerous to the public. With fixed instrument panel space, much of which is taken up by airbags, glove compartments and the like, manufacturers have resorted to the above mentioned expedient of ever smaller and more complex controls in the remaining space, in order to gain functionality. Many are in addition located out of the drivers normal line of sight, and some even require one to stare at changing numbers in an awkward location. Others require reading very small print (often impossible for those requiring reading glasses while driving - a real dilemma for many drivers over middle age particularly).

In order to achieve added functionality made possible by modern electronics while at the same time reducing the ever increasing clutter of further controls required to achieve even present day functions, there is a big incentive to develop Instrument Panels which can fit in the available instrument panel space (particularly of the center stack) yet be reconfigured to serve multiple purposes, always with safe operation paramount. In particular, there is a need to provide such IP's which can not only be used on less critical control and informational functions, but for primary control functions as well, reducing cost and complexity and increasing justification.

Examples of prior art directed at some aspects of the problem are:
- US Patent 6,246,935 by Buckley, June 12, 2001 Vehicle instrument panel computer interface and display
- US Patent 6344793 Process for assisting a user of a motor vehicle..., Geck et al, assigned to Daimler Chrysler
- US Patent 5,757,268 Toffolo , et al. May 26, 1998 Prioritization of vehicle display features (on a reconfigurable display), assigned to Lear Corporation
- US Patent 6,373,472, Driver Control Interface System, Palalau et al, assigned to Lear Corporation
- US Patent 5,539,429 Yano , et al. July 23, 1996 Touch device panel, assigned to Mitsubishi
- US Patent 6,067,081 Hahlganss , et al. Method for producing tactile markings on an input surface and system for carrying out of the method , assigned to VDO
- US Patent 5,956,016 Kuenzner et al Operating device for Menu controlled functions of vehicle, Assigned to BMW
- US Patent App 09/963,565 April 4, 2002 by Hirose, et al. Display device with screen having curved surface, assigned to Nissan
- PCT Patent application PCT /GB99/04006, Touch Sensitive Switch, Butler et al, assigned to Ford Motor co.
- US pat app Kind Code 20020002432 Bockmann et al. filed January 3, 2002 assigned to Volkswagen. Automobile multifunctional display and control device method
- US Patent 6,421,046, by Edgren. Control Panel, assigned to SAAB
- US Patent 5844500, and 5923267, by Beuk , et al. Device with a human-machine interface, assigned to Philips

One approach to reconfigurability is a touch screen , which is widely regarded as one of the most intuitive of computer interfaces. To my knowledge, the application of touch screens for computer input in automobiles was first achieved in the 1988, in the General Motors Buick Riviera using a relatively small CRT display located in the center stack, in a relatively low position. Such a display is described in USP 4,787,040 by Ames, et al. entitled Display system for Automotive Vehicle issued to IBM Corporation November 22, 1988.

However, widespread employment in vehicles of such touch screens has been relatively limited because it cannot be operated by feel, and requires of a driver more than a quick glance to operate successfully. This is in part I believe because there is nothing on a conventional touch screen to reference ones self to, except the displayed data itself - which then has to be continually read.

To combat this problem (experienced in the early Buick display and others), some vehicles such as the Cadillac CTS have incorporated ordinary non-touch screen LCD displays, with buttons and other conventional touch type controls around the periphery thereof to effect reconfigurable operation in conjunction with icons displayed on the screen nearby (and thus to a degree meet FMVSS 101). Taking this a step further, the Denso Company has worked with Jaguar to introduce a touch screen of the LCD type in the their X model. It has a small 7 inch screen, also surrounded by conventional buttons and touch controls, and located in the center stack. But the display itself has no reference and no feel, and the surrounding buttons are, as in many other examples, small and hard to read. Thus the fact that certain touch icon functions on the screen are reconfigurable is only a small improvement on the previous and prevailing situation.

No prior art reconfigurable instrument panels known to me provide any feel on a display screen itself, as to where on the screen the users finger is, nor do they provide a method for tactilely signalling information back to the user which would make reliance on long and dangerous glances unnecessary

In addition, no prior art vehicle instrument panel uses common knobs and other selection and control details familiar to the driving public of today which can be reconfigured either physically or in terms of their displayed function, data or other variables in a manner that appears to intrinsically comply with FMVSS 101.

No prior art instrument panel I am aware of provides means for safely displaying real time or down loaded video data to the driver in a large enough to easily to see in a cost effective manner, vital for observation of critical events inside and outside the vehicle, as well as to make downloaded information from remote sources easy to see at a glance. And in the same vein, no known instrument panel is capable of providing large lettering or other control labelling for all necessary controls to aid the elderly or vision impaired driver. And none can provide a video display of rear view images, traffic related data or other information big enough to see clearly with just a glance, especially for the older driver who has difficulty focusing on the center stack mounted display. And no known prior art instrument panel allows the driver designate or confirm presented video information.

And in the same vein, no prior art reconfigurable instrument panel to my knowledge, and even many controls of conventional IP's, do not utilize controls which can easily worked, with just a helping glance or by feel alone. And, no prior art teaches incorporation of both knobs or other control details and tactile touch functions on an instrument panel to allow one to optimally execute functions in concert.

It should also be noted that the lack of natural intuitive tactile feel in many computer based interfaces, further makes menu driven "computer screen" type systems slower to operate and constantly requiring visual concentration. This is an issue when the control system is used for any time-critical tasks and has obvious safety connotations. This is not just true in cars, but in other stressful situations as well where I also believe my invention can be of use, for example in military vehicles, construction equipment, and control of home appliances by a harried housewife in the kitchen.

In addition to the instrument panel prior art referenced above, there are a series of related US Patents by Denny Jaeger, some of which are in conjunction with Kenneth Twain (e.g. USP 5572239, 5712661, 5805146, 5841428, 6326936) which relate to techniques for implementing control devices such as knobs and switches on flat panel displays (electro luminescent or LCD) to achieve the benefits of controls function reconfiguration. The approach taken however, results in complex (and expensive) systems which, while programmable as to the display, do not facilitate interchange of the physical components. In many embodiments too, they require significant optical compromises in the display (such as large blank spots) and the flat panels used require specialized bus bars removing these displays from the mainstream activity. In some cases, intolerable leakage problems can occur as the LCD liquid crystal material can leak around the knob shafts for example.

To solve the problems encountered, some embodiments (of the many shown) of Jaeger and Jaeger et al., have attempted to use optical techniques to shoot through the screen so to speak. In the earliest example, a photo detector and source for each device such as a knob or switch, is located and attached to the other side of the display, in the manner of a photo switch to see an incremental encoded knob. It is positioned to shoot through either a specialized transparent bulbar or a bus bar routing hole specially created in the display. This can work presumably, but is complex and expensive, and would appear to use up or obscure valuable display space, as well as requiring a device dedicated and positioned to operate each physical control. In Lads requiring separate specialized backlight sources for their operation (as all do today), such sensing devices would appear impractical, as they would block the radiation from the backlight.

In another group of attempts to solve some of the difficulties, Jaeger et al in cases such as 5841428, and 5805146 disclose physical controls such as knobs and sliders placed on a base member placed in front of a LCD display screen on which electrical connections to knobs and sliders are provided without requiring one to go thru the LCD display and the attendant problems thereof. While more attractive, this has disadvantages of parallax or other display obscuration causing possible reading difficulties. In addition it results in another member which must be mounted and potentially can come loose or cause difficulties in the vehicle. And it can still result in blank display areas taken up by the electronics (including cabling) in front of the display, though specialized transparent conductors can be used in some cases. As in all the Jaeger and Jaeger et al inventions, every physical control, such as a knob, requires its own potentiometer or encoder, which represents a lot of hardware to place in front of the screen and potentially in a position to be damaged by various activity in the vehicle.

Where optical sensing (as opposed to capacitive, inductive, potentiometric, or whatever) is employed in later patents by Jaeger and Jaeger et al, the inventors have apparently focused on having the sensing device (e.g. a phototransistor) on the front of the screen of the display, located on a member attached to the screen in some way. Either the light source is also on the front, or light from the display is programmed to interrogate the position of the sensor on the knob which senses this activity. The inventors also have disclosed sensors of the optical type which are generally incremental, rather than absolute, which limits some control regimes and can cause errors. Additionally, Jaeger has disclosed a small LCD device electrically placed on the front of a knob or button and controlled to change information thereon, an approach which requires specialized wiring and LCDs for every physical control detail used.

While not taught in Jaeger or Jaeger et al, adaptation of a conventional touch screen capability to the their invention would result in substantial increase in hardware in front of the screen and would be nearly impossible to provide in co-located with the physical controls- an easy task in the instant invention. It is also noted that Jaeger and Jaeger et al, and for that matter all other known prior art, make no reference to the synergistic combination of reconfigurable physical control details and virtual controls such as provided by a touch screen of the instant invention.

Finally, Jaeger and Jaeger et al inventions are specific to flat panel displays and cannot provide curved or irregular display capability of maximum utility and style for Automobile instrument panels, and teach little or no ability to use materials other than glass as the display surface, also a requirement in vehicles (for passive safety and other reasons), especially as the displays grow in size. Edgren, in US patent 6421046 has disclosed a device for the center stack section of the instrument panel which allows one to move conventionally constructed physical control means placed in front of a flat panel display out of the way, in order to make a larger information display by itself. This obviates some of the problems of display space, at a cost of complexity, cost, style, and potential passive safety problems.

The following document may also provide background to the present invention.
Patent application US 2006/0067557 A1 relates to a data-processing system having a touch-sensitive display unit wherein touch-sensitive icons displayed within the touch-sensitive display unit may be calibrated according to physical characteristics associated with a particular user.

### SUMMARY OF THE INVENTION

The above drawbacks can be overcome with the features of claims 1,5,6,10 and 12.

The invention herein concerns a new form of control device particularly suited for, but not limited to, automotive instrument panel application. It introduces the concept of a "Control Surface" which together with the associated display creates what I have called a "Reconfigurable Tactile Display" (or "RTD"). As explained further herein, it can be much larger than a conventional instrument panel display as it can much more efficiently utilize the available instrument panel "real estate" of vehicles today. Because of this, it is further capable of displaying video, textural, or graphical images in a manner which can be acted on easily by the driver of the vehicle. The RTD invention herein not only has a number of quasi- conventional and other tactile characteristics that make it ideal for instrument panel usage in vehicles, it also may find application in aircraft and certain military control applications, as well as in the home.

The disclosed invention, is similar in certain key aspects to the conventional instrument panel of today (for example in its use of quasi conventional knobs, sliders and switches), and appears to comply with the US National Highway and Traffic Safety Administration Federal Motor Vehicle Safety Standard 101 for Controls and Displays (FMVSS 101). It may be one of the few, and perhaps the only, fully reconfigurable device capable of doing so, an extremely important feature. And it easily meets and exceeds the recent industry promulgated guidelines in so far as glance related Driver Distraction issues are concerned.

See for example, Automotive News, April 5, 2002, "Automakers set Telematics guidelines - Alliance (of Automobile Manufacturers) seeks to limit driver distraction".

The disclosed invention, encompasses four main areas, generally, but not necessarily, employed in synergistic combination:
1. A display including several features commonly associated with a touch screen, but in a new and greatly expanded form which can be sensed by the driver or others in several tactile manners, as well as visually. This allows the screen of the display to double as a control surface, and in some examples the tactile sensation indicates where to touch, but does not appreciably disrupt video or other data which may be displayed in the same area of the screen. One can with this feature, find the appropriate place to touch with only a very brief glance at the screen. And in some cases by one can determine this by feel alone, using the programmable feedback, or if the user has learned by previous use, the location of certain tactile points in relation say to the sides of the screen, orto knobs or other features on the screen;
2. One or more tactile, physical, selection or adjustment means, (also called herein a control detail), such as a knob, slider, lever, dial, or switch, generally programmable in labelling and function, and often (but not necessarily) operated in conjunction with the touch screen type virtual control function disclosed herein. In one example, one or more knobs, sliders or other details are located right on the screen/control surface, such that the representation of their meaning or magnitude can be reconfigured by
   programming the display and the associated readout of their angular or Cartesian position on the screen;
3. A large, aesthetically pleasing, display/control surface providing maximal utilization of the available "real estate" on the instrument panel within easy vision and control of the driver (and typically in the center stack region). Ideally this display/control surface is as substantially large as possible and provides the ability to safely display and interact with much more data, in a much more visible and effective manner. Besides allowing the driver to more optimally control the vehicle functions , video and graphic data can also be safely provided, for example, from sources within the car (such as children in car seats, or mechanical conditions, such as power or braking distribution, engine data etc), on the exterior of the car (such as obstacles, rear view TV images or curb locations), or transmitted to the car from remote sources, such as "Onstar" or TV cameras located at intersections along the roadway;
4. An optional programmable touch sensation generator as well as means for generating audio feedback as desired, operable with either 1 or 2 above, which further assists "eyes on the road" driving while utilizing a programmably variable control and display device. This allows the driver to determine the state of controls, and even what to do with the control, with little or no visual data needed in some cases, thus greatly enhancing utility of electronic and other features which may be provided to the driver using modern camera and computer technology, for example. A force, vibration, pulsation, or other sensation felt may itself be programmably changed, adding to driver understanding, and enhancing safety.

Because of its unique design in which the control surface and the display coexist, the invention can provide, at affordable cost, 5-10 times the effective display area (relative to conventional LCD based flat panel displays used in vehicles today for navigational systems and other purposes) and provide a substantially increased control surface and its attendant ease and flexibility of operation, while still meeting the FMVSS 101 regulations regarding labelling of the controls. This means many advantages, can be provided the user. For example:
- Larger lettering or pictographs can be used, making comprehension with quick glances easier. For many drivers, this could be the difference between something of great use, and something use-less. The lettering can be in ones language of choice as well.
- More data of the same size can be presented at once obviating the need for frustrating menu selection.
- The size of any tactile control devices such as knobs can be larger, also because they can provide multiple functions.
- Because the display is also a touch device, the much bigger nature of it also allows one to more easily select, operate, or" hit", in the case of a displayed button say, the desired function.
- Video and graphical data can be presented alongside text data.
- Video data and close-ups of certain sections can be provided. Another example is a navigational display of an overall geographic region with an inset near the instant location showing detail, both side by side
- Video and other data can be provided for driver confirmation or designation in the case of critical images and stereo camera pairs.

One of the synergistic aspects is that at little or no added cost, the RTD invention can be provided in a size and configuration that can be used to safely and cost-effectively supplant many of the normal IP functions. The manufacturer' can standardize on the device for all customers of not only a particular model, but perhaps all models, with only cosmetic variations, provided in software or with relatively inexpensive plastic trim, screen and control pieces. This has huge savings implications, also in retooling costs, and can enhance safety by promoting a degree of standardization between vehicles not now practical from a marketing point of view. Certain functions can be common if desired, with the decorative and other portions customizable.

The instant invention solves the cost and functional complexity problems of the group of Jaeger and Jaeger et al, inventions in three primary ways, also in combination.
1. It uses in one example a rear projection arrangement, which allows curved or irregular screen shapes where desired, and since the screen contains no active components, allows a freedom of choice of material for the screen. This further allows the physical control details such as knobs to be attached directly to the screen with a minimum of complexity. No overlay on the screen is required to effect the attachment.
2. An extremely cost effective, and synergistic combination of control via both touch sensing and physical devices such as knobs sliders, switches and the like can be provided. This allows maximum utility of the device, freeing up space for variable functions while still maintaining a familiarity for many users;
3. Some examples, use an electro-optical detection means, typically an inexpensive TV camera, to sense control position, typically from the rear of a rear projection display. A single camera can sense the position of a plurality of physical control details and generally in absolute position as opposed to incrementally. And it can operate on any desired combination of physical control details (such as knobs sliders etc) with only a software change. This then enables the complete interchange of the display and control surface, including any control details such as knobs, which are simple passive devices with no wires needed;
4. In addition, the invention herein, unlike the prior art, allows an integrated touch screen capability to be provided which can be completely integrated with the physical control capability, in some cases even at no added manufacturing cost. The Instant invention is thus arguably of higher performance, simpler to maintain, and lower in cost - especially critical for high volume applications such as automobiles.

In a vehicular application, one example employing a rear projection type display, maximizes the limited center stack space available and allows one to share space between some types of control actuation functions and video displayed information. It can be cost effectively scaled to large areas of the instrument panel as desired, as well as provided at increasingly economic cost.

This allows one to incorporate enough control functionality on the display (making it a control surface in effect), that a significant number of control and display functions can be incorporated, making the invention cost justifiable even on economy vehicles. Heretofore such advanced features as the invention provides have heretofore only been available to wealthy buyers of high line vehicles. The use of a rear projection display has the added benefit too of cost effectively providing not only a large tactile display surface (incorporating physical details and virtual touch sensitive features), but where desired an irregular, curved, and stylistically attractive one as well, also contributing to and allowing maximal utilization of the available instrument panel space.

Furthermore, the large display in the drivers line of sight without appreciable head movement, also provides a the driver a means to validate and confirm data from intelligent subsystems inside and outside the vehicle, and further allows the driver to assist such systems by designating regions or features of interest on the display.

The position or movement of any knobs (rotation) or levers (linear motion) or switches is monitored, as is the location of finger touch on the screen. In one example, the same machine vision system performs both functions, and is integrated with the computer control of the display and the force feedback. The total system is elegantly simple, and allows for a myriad of additional features. Particularly of interest are those in which the tactile aspects of the instrument panel can be tailored in their entirety to the needs of individual users or the desires of individual vehicle model development.

An improved version for the home is also disclosed, in which commensurate savings in switch gear and displays of individual appliances and other devices such as furnace thermostats and the like can be expected. In addition, the home application in conjunction with the car further reinforces the familiarity and commonality of controls and provides added economies of scale.

Embodiments and examples are described according to the following figures.

### BRIEF DESCRIPTION OF FIGURES

Figure 1 illustrates an overall view of an example located in this example in the center stack region of the instrument panel.
Figure 2 illustrates a further the example, including detail concerning knobs and other controls, and examples of their use.
Figure 3 illustrates further details concerning control details of the fig. 2 example.
Figure 4 illustrates additional detail and features of the preferred embodiment additionally (or alternatively) incorporating a touch screen capability (which may also be in combination with the knob or other physical tactile selection or adjustment detail).
Figure 5 illustrates a touch screen like fig 4, additionally having indented or raised portions of the screen or overlays thereon for passive guidance of user finger position and actuation.
Figure 6 illustrates force sensing or contact closure means to determine that a touch has occurred, and associated vision processing steps.
Figure 7 illustrates acoustic or other mechanical wave generation capable of providing a programmable force based response to inputs, or control states. An optional sound based response can also or alternatively be provided, such as a loudspeaker sound.
Figure 8 illustrates examples including interchangeable screens and overlays.
Figure 9 illustrates force based touch location sensing.
Figure 10 illustrates several examples improving safety of vehicle operation using real time data made possible by the big screen area in which the invention enables-both to make it easier to see data, and to interact with it.
Figure 11 illustrates virtual displays of controls with arbitrary start points on a touch screen of the invention or other touch screen capable of the required response to human inputs needed.
Figure 12 illustrates the use of touch vector inputs on a touch screen of the invention
Figure 13 illustrates rear projection display examples.
Figure 14 illustrates alternative vent location and related projection examples.
Figure 15 illustrates additional aspects of physical details and touch.
Figure 16 illustrates an example employing knobs of fig 1 based on a traditional Radio layout, located in the center stack region ofthe instrument panel and its the reconfiguration under computer control into climate controls (also known as HVAC).
Figure 17 is a block diagram which illustrates sensing and control utilized in the above examples.
Figure 18 illustrates a curved irregular screen/control panel example having variant focal depth.
Figure 19 illustrates optical or other sensing of touch occurrence or position from quasi rigid body movement of the screen/control surface.
Figure 20 illustrates an alternative display device employing a MEMs based flying spot scanner and laser or LED sources and the additional use of such scanners to perform sensing of both control details and fingers or other touching objects.
Figure 21 illustrates examples for control of vision and projection processing steps, including methods for determining finger touch and physical detail location also in the presence of significant sunlight or other background radiation.

### EMBODIMENT AND EXAMPLES

### Figure 1

In this application I will define the instrument panel has having both a display surface and a control surface. In a conventional instrument panel, the two are completely distinct - a Display, such as an LCD display (if any) goes in one place, knobs or other controls in another. There is seldom a link between the two issues of display and control, except in certain vehicle touch screens for navigation, and the BMW I-drive joystick relation to its screen (the joystick control being in a completely different region of the vehicle however).

In the instant invention the display and control surface generally occupy the same physical area, which means that much more space is freed up for both- especially the display, relative to a conventional Instrument panel.

While the location of the invention in the instrument panel of the vehicle can be anywhere the driver needs to interact, an example of this application (at least for near term commercialization) is located in the vehicle "center stack" region of the instrument panel and utilizes both conventional knobs and other tactile control and selection means, plus unique touch screen like capabilities.
As noted above, these functions are desirably (but not necessarily) achieved using TV camera and image processing computer means to determine knob or finger state or location (for example). This is preferably accomplished by using a rear projection type display, and viewing the region of the screen from the rear, with the camera located near the image projector, and both controlled by interconnected computer means (which may be the same computer). Use of rear projection also allows a desirably large display capable of easy reading and tactile interaction to be provided at modest cost, both of the display portion and the means to read the control or finger location.

The knobs and other selection means are typically located right on the screen itself, or less desirably an overlay member thereon. This screen or overlay is thus also a control surface, on which several other forms of controls coexist as well with the displayed data.

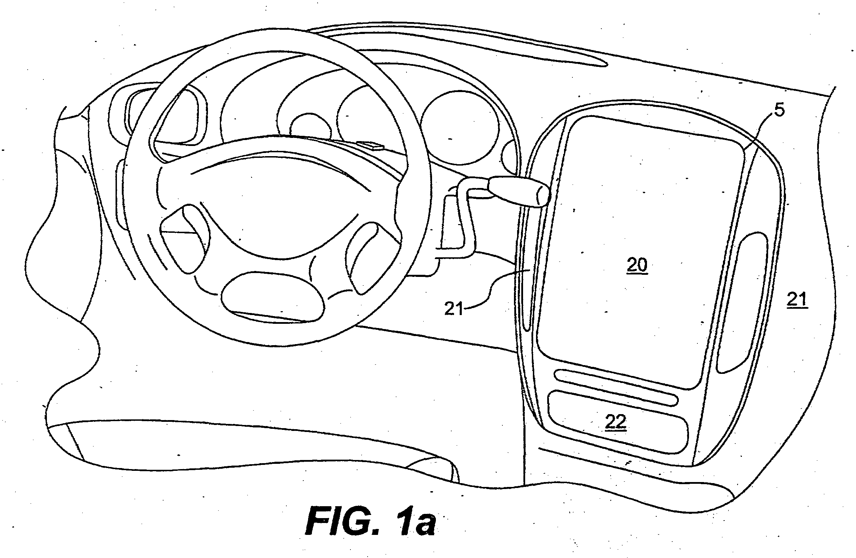

Figure 1a illustrates a slightly curved (or optionally flat) display and control surface, 5, in the center stack area 10 of a 2002 Chrysler Minivan optionally
having tactile adjustment means such as knob 20 located within the display area. Side vents 21 and lower vent 22 are provided if needed for air distribution.

This type of layout, safely provides for control functions on a large screen area and can be adapted to many variations of considerable utility, while providing all the advantages and safety of large screen display and control surface, and interaction therewith, which will be come evident in consideration of the invention embodiments and related disclosure herein. In the preferred rear projection arrangement, at little additional cost the screen can be made still bigger to incorporate more and more of the total control functions of the vehicle.

There are many configurations possible with the invention, each with many permutations. For example the display and control surface 5 can be featureless as shown (except for the presence of knob 20), but still provided with tactile feedback. In addition it can have certain sections with relief features such as ridges or grooves acting as tactile references for the user's finger. And, as often would be desired, it can also have conventional controls such as knobs switches and so forth.

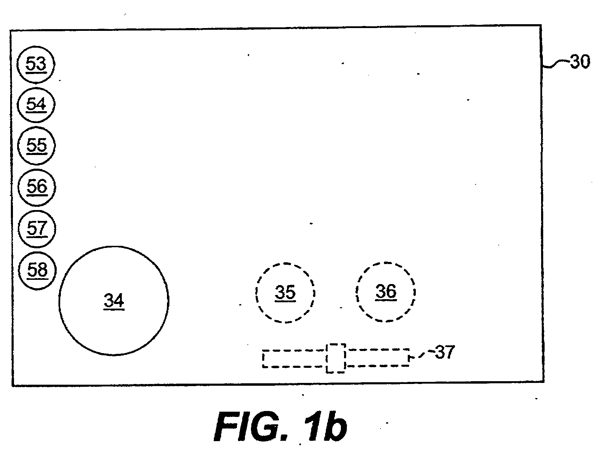

For example consider fig 1b which shows a front view of a tactile version of a display and control surface 30, like 5 of fig 1a, but with a different aspect ratio. This tactile version in this example has a knob 34 and six (for example) shallow dish shaped indents 53-58 which are located on the display screen 30 itself (which serves therefore as a control surface). The operation of these indents (which serve to locate projected virtual icons serving, for example, as reconfigurable virtual switches) will be more fully explained below. These indents may alternatively be out dents (bumps), and they may be of different shapes (round, square, triangular, etc) so as to be distinguished one from the other by feel. And they generally are distinguished by lettering projected on them, or adjacent to them, such lettering may be projected on all indents at once, or just on particular ones, for example those which are "active" for a given control or display situation. Besides being arrayed in a vertical column as shown, a group of indents can be horizontal, or annularly arrayed as well (like an old telephone dial). Such an annular arrangement could, for example, be around a knob.

An optional second knob 35 or third knob 36 or slider 37, or even more physical details not shown are often desirable, and are noted in dotted lines. The invention indeed can generally accommodate on the screen any reasonable number of physical knobs, switches, sliders etc that might be desired or practicable, all of which can be economically sensed if desired using the same machine vision system to determine a control state from their position. And such physical details can be operated where desired in concert with virtual projected functions.

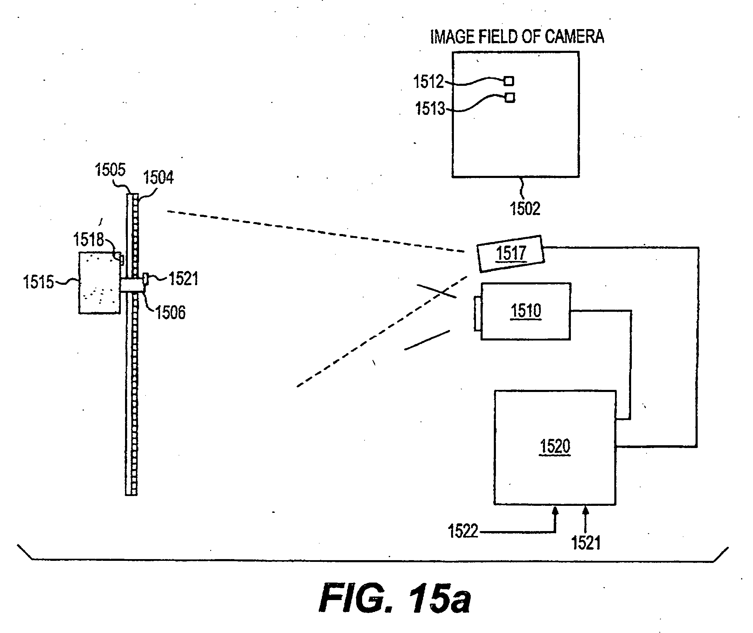

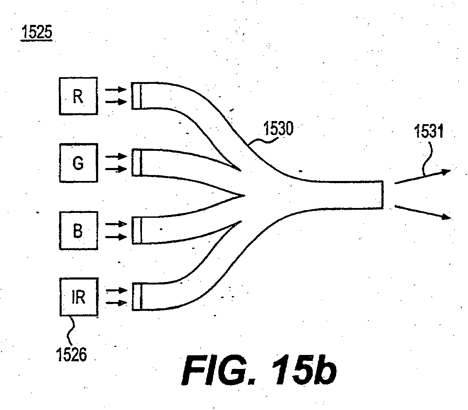

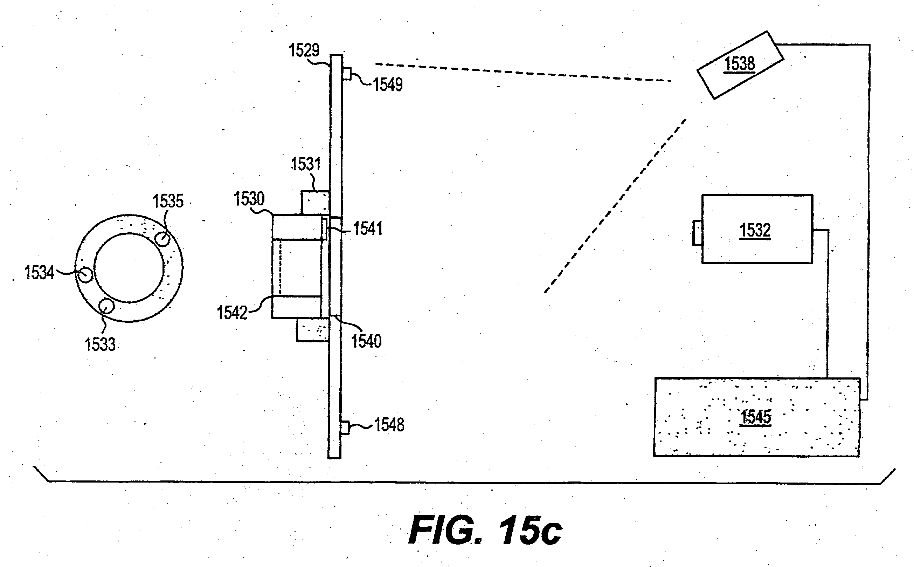

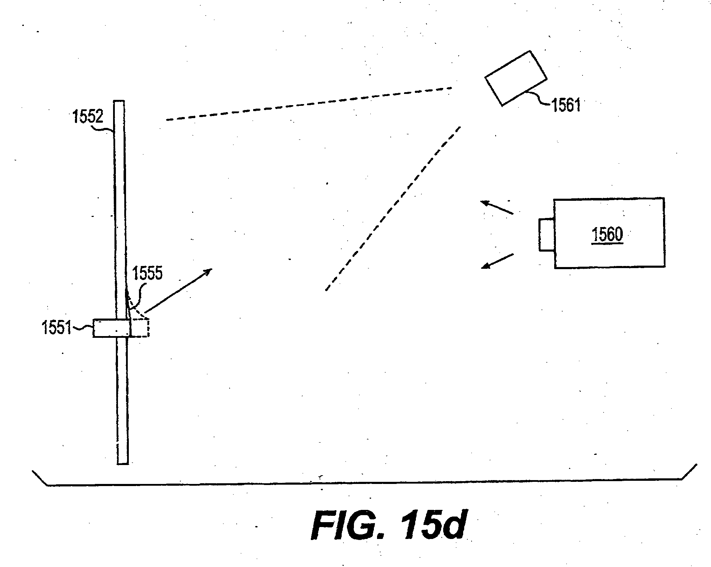

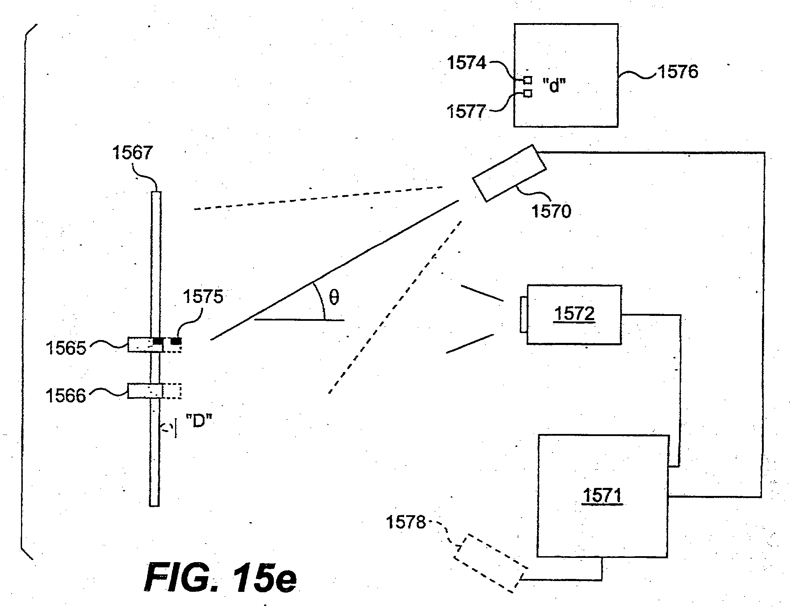

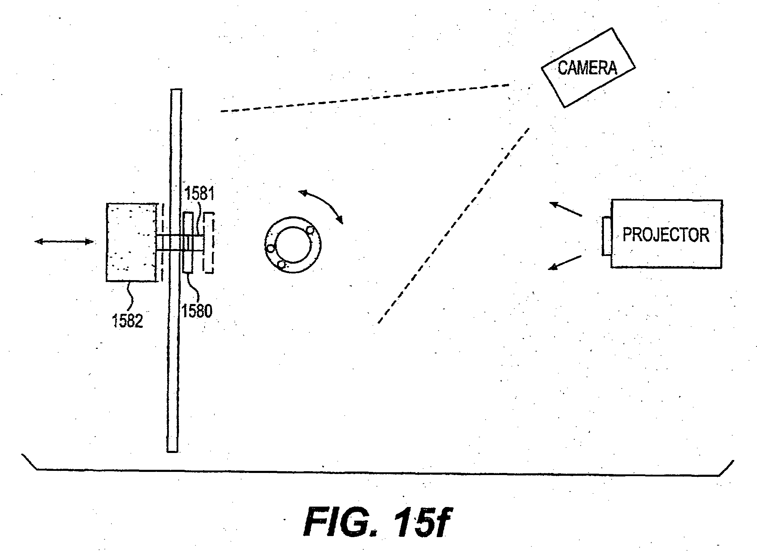

The knobs or other physical details can be of clear or tinted plastic (e.g. Lexan) or other sufficiently transparent material, typically, like the screen itself, and generally with diffusive outer surfaces to scatter light there from. Such surfaces for example in one case can be made by sandblasting or coating the surface facing the driver, or providing diffusive elements such as micro beads in the material just below the surface, if for example, a smooth outer surface is desired. Or the beads may be micro spheres such as the 3M Vikuiti material described in fig 15 for example, and spaced away from the outer surface by a few millimeters or more if desired.

If the knob is transparent, the lettering can be projected on its face or on the screen beneath it and can be projected to be always correctly oriented in the horizontal plane if desired, independent of knob rotational position- a big plus and in keeping with FMVSS 101. Lettering can also be projected around the knob, and lettering can be of different sizes depending on the task at hand, or some lettering can be turned off as well if not actively needed by the user for a task.

The invention can provide in an economic and functional manner, large controls and easy to read data - much larger than possible today, and ideally suited for just quick glances and elderly drivers, and drivers in general who are far sighted and don't have close up glasses. In addition the focus of eye can be on objects outside the vehicle, as letters can be big enough to read even if out of focus. Lettering for functions in use can be 10mm or even 15 mm high, given the large surface/display area provided. When not in use, the lettering can be made smaller (but still readable). And some cases it can temporarily be eliminated altogether.

Alternatively the knobs can be annular rings with the underlying diffusive screen surface exposed in the middle thereof. In either case, the area occupied within the knob circumference is largely usable for display purposes, typically of knob position or function related data. And space between knobs, or between the knob and screen edges is also available for projected data. Some of this data can relate to the knobs function, and such complies with FMVSS 101 which states that a control, such as a knob, must have data concerning its function on, or adjacent, said control.

Permanent lettering may also be used on the screen surface to denote knobs or indents or other control features. Generally however, the lettering is electronically projected, in order that it can be programmably changed, as the function of the device is changed, or to allow virtual controls or video data to be projected in places where lettering is also provided at other times.

The use of one or more "classical" tactile physical selection or adjustment means (such as knobs) common to instrument panels today is a big advantage in that it is visually and tactilely closest to the instrument panel of today, yet offers the full programmability required tomorrow and it is also thought to promote safer driving.

What makes it novel and exceedingly useful is that it has programmable visual and tactile aspects approaching, and in some cases exceeding, the utility and capability of today's IP's, while at the same time being reconfigurable as needed to provide added features and enhanced versatility. By doing so, safety is improved, and user value is enhanced.

Approximate maximum screen/control surface sizes with the invention when located in the center stack region are for example in a Minivan: 15 inches high by 12inches wide, (375 x 300mm) and in a Luxury car; 13 inches high, by 10 inches wide (325 x 250mm). Both these estimates assume the screen comes up to nearly the top of the instrument panel, but not high enough to obscure vision.

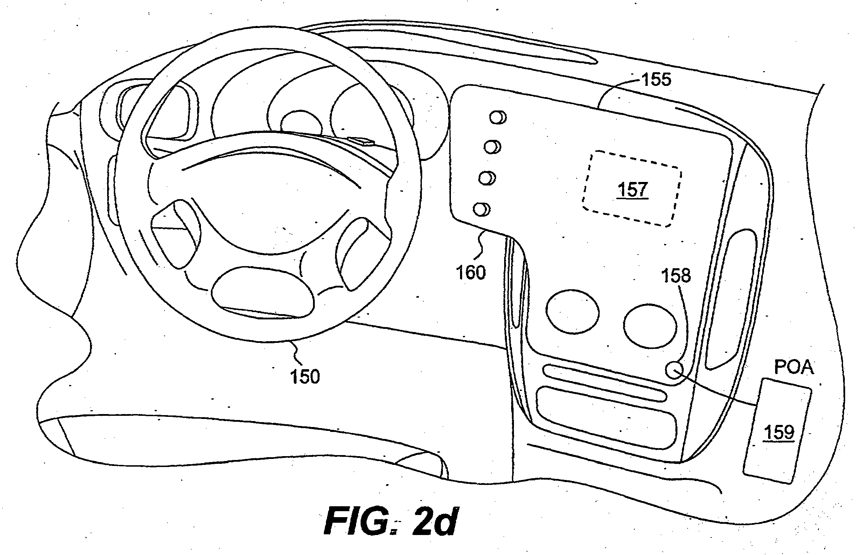

If a horizontally extensive arrangement is provided typical width can be 16 inches (400mm) wide. Even wider screens /control surfaces can be used, but the steering wheel on one end, and the persons reach limitations on the other will limit where the control features can be placed. An example of such an arrangement is shown in fig 2d and g, the screen is odd shaped to fit the space-another advantage of the rear projection arrangement. While most such screens/control surfaces are flat, they are not so limited. Again the rear projection, allows within reason curvature of the screen in either plane over some or all of its face- within the limits of the optical system to provide sufficiently sharp focus at the points in question. Such curvature can be stylistically desirable. With some added complication, the control features can also be provided on the curved surface as well.

Its noted that in one mode, the status of control can be determined by illuminating only that indent which applied to the control being worked of the moment- e.g. heat. After some time period, all the indents could be illuminated with their selection information. If the indents were used for the same functions all the time then their positions would become learned, and the status of that function could be checked at any time by touching the indent in question.

### Figure 2

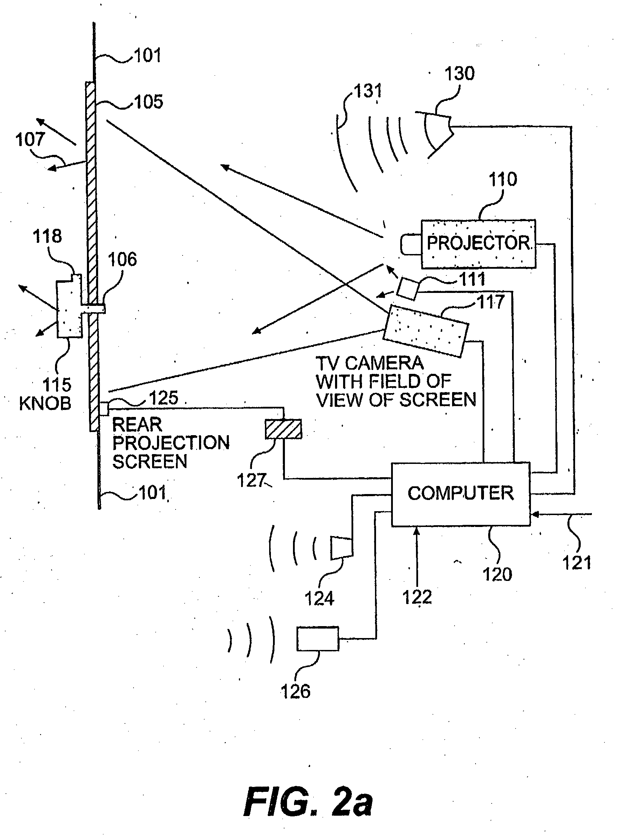

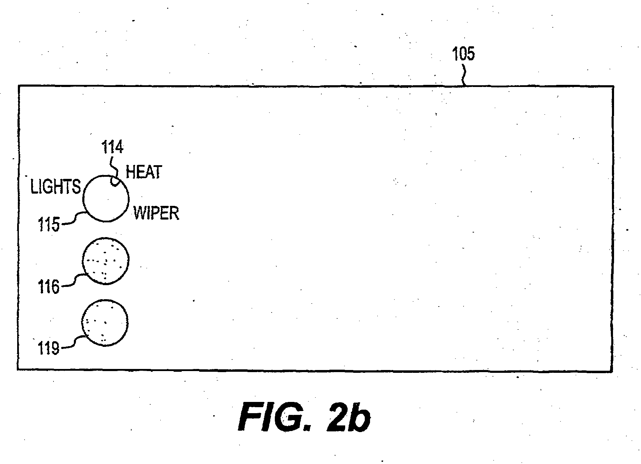

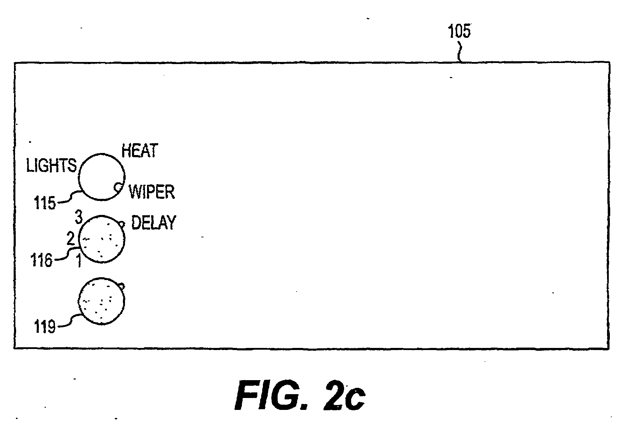

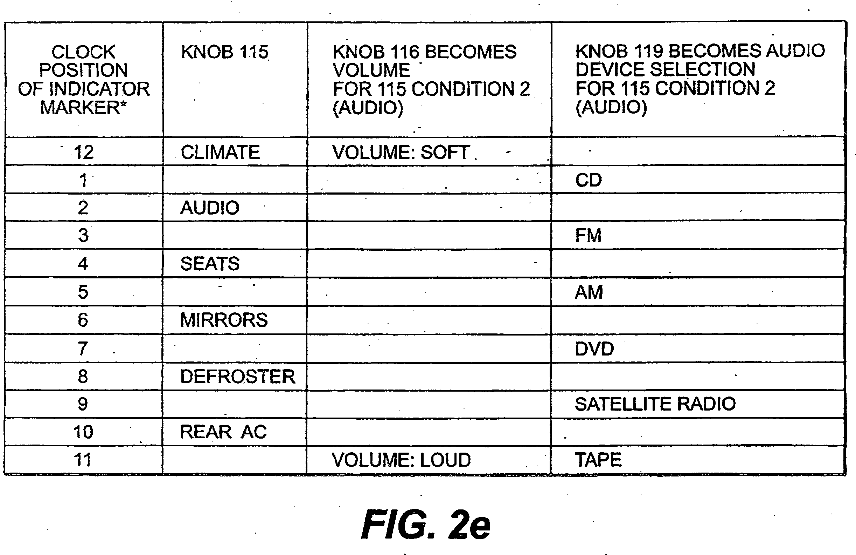

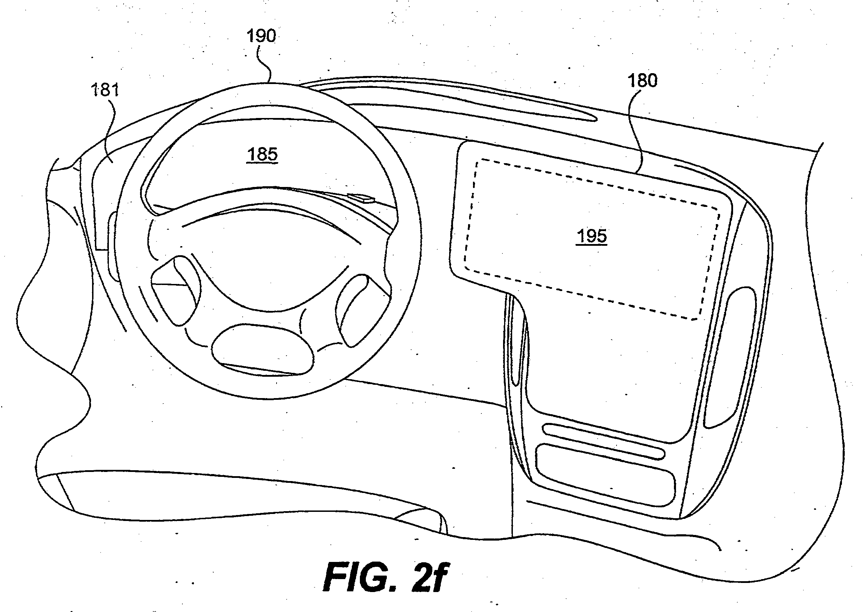

In the example of figure 2, positions of screen mounted knobs and other conventional tactile selection and adjustment means (hereafter generally called "Control Details" herein) mounted to the screen of the rear projection display, or to a overlay or cover plate in front of the screen toward the user, are electro- optically sensed. While sensing of requisite control details can be performed by a variety of electrical, magnetic, acoustic or other means known in the art, it is preferably illustrated here as electro- optically based, which has the advantage of simplicity and cost savings. Such control details are included in these examples, because the knobs and other control details are familiar to the driving public. Other aspects of the invention can be provided in addition, but the user could in the preferred near term example, always revert to familiar physical control detail based operation of the necessary portions of the vehicle.

As shown in the diagrammatic side view of figure 2a, a center stack of an instrument panel 101 is equipped with a large screen panel 105 made of Plexiglas, for example, having scattering characteristics (typically on its outward surface) so as to act as a rear projection screen for a LCOS, DMD, or other type of computer controlled display projector 110 positioned behind it when viewed from the drivers side, and controlled by computer 120. The rotational position of a feature 118 of knob 115 attached to screen 105 by pin 106 is determined by image processing software (such as Matrox MIL Version 7) in PC computer 120 processing the image of feature 118 sensed by TV camera 117 through screen
105. Other electro-optical arrangements are also disclosed herein. The camera field of view typically includes substantially the whole screen 105, and provides an economic and elegant way to see numerous control detail positions. While described above in the context of a knob movable rotationally, other tactile physical selection or adjustment means like sliders, switches, levers or the like

which are movable linearly, angularly, or in other manners can be used in a similar manner.

Screen 105 is diffuse in order to scatter light such as 107 from elemental portions on its face or internally. To improve performance, similar to rear projection televisions common seen in homes today, this screen may further include a lenticular screen or holographic grating if desired to preferentially distribute light sideways (and in some cases vertically) in the passenger compartment. And it may have a fresnel lens incorporated with it if desired to collimate or otherwise
re-direct light from the projection source. (see for example US patent 6185038 for examples of such construction).

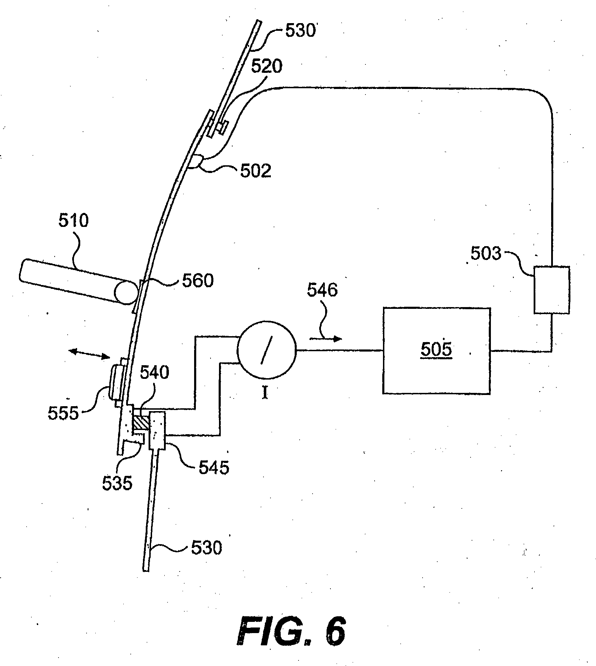

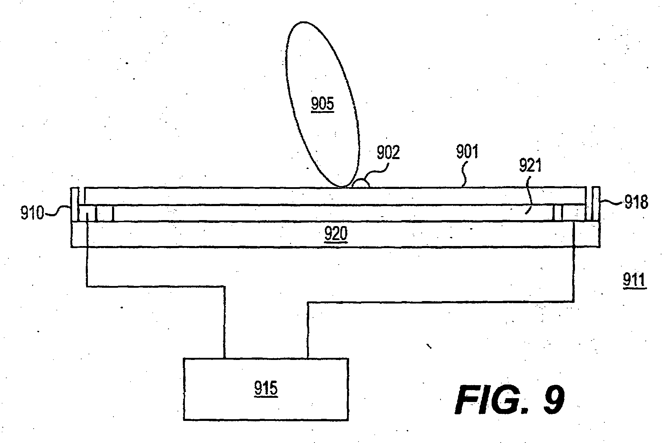

Computer data including messages and other communications 121 down loaded to the computer 120 from external sources by known means, or from sources 122 within the vehicle itself, can be thus projected on the screen. The state of knob rotational position and that of any other knobs or other physical details on the screen can be determined in each camera frame. The desired input of the driver afterturning by the driver can be determined by computer 120 by simply the fact that it is in a constant position after a movement has occurred.
Alternatively, i s noted that knob 115 may also be constructed in a manner which can be pushed by the driver in the direction of the pin 106 in to make a selection (e.g. the driver turns to the appropriate location he desires and pushes the knob into select). The state of being pushed in can be determined by piezoelectric force sensors under the screen as described in other examples such as figs 6 or 9. Alternatively, the inward position can be seen by camera 117 and computer 120 which can determine that two or more marks on the rear of the knob in known relationship and spacing , or the apparent diameter of the knob, has changed- occasioned by the change in magnification being closer to the camera. A stereo pair of cameras can be used to provide more resolution if desired.

To make a better feeling and operating knob, it can be desirable to use a metallic pin 106 sliding in a metallic bearing 144 (dotted lines) inserted into screen 105. This pin and bearing may also be equipped with a detent device (not shown for clarity) as well. What ever diameter is taken up by the detent mechanism and the metallic bearing components, is opaque and thus cannot have light projected through it. Thus the center portion of an otherwise transparent knob with a diffusive surface would not be available for image projection. However, the knob can be held by an annular race from its periphery, allowing the center to be free for such display purposes, or to allow a diffusive screen beneath the knob to be seen.

While a specialized light source such as LED array 111 can be used to illuminate the knobs and other desired features on the screen, in many cases the projector 110 maybe used to provide illumination. Since one can control various aspects of the projector, one can choose the light projected for example to clearly illuminate a distinctive feature on the knob (or a connected member rotate-able in unison therewith) such as a marker-which itself may be preferentially reflective (or alternatively non-reflective) of a certain color which may be instantly recognized in the color image obtained by camera 117 typically a solid state matrix TV camera (typically today of the CMOS or CCD variety). Identification of the marker is also made easier by the fact that its relative position is approximately known to be in a certain region of the screen.

The knob rotation can optionally have mechanical detents known in the art at different positions in its rotation function, and/or in an another example, a feeling sensation dependent on rotational position (or a variable controlled thereby), can be alternatively provided by an acoustic source such as 125, (typically a piezo-electric crystal transducer known in the art) programmed by computer 120 and driven by drive electronics 127 which, on command generates acoustic waves 126 in the screen panel 105 which can be felt by the user operating the knob or touching the screen. An actual detent feel for a knob can be programmably achieved with added complexity using rotational actuators for a specific knob in question as described in USP 6,154,201 by Rosenburg et al, for example.

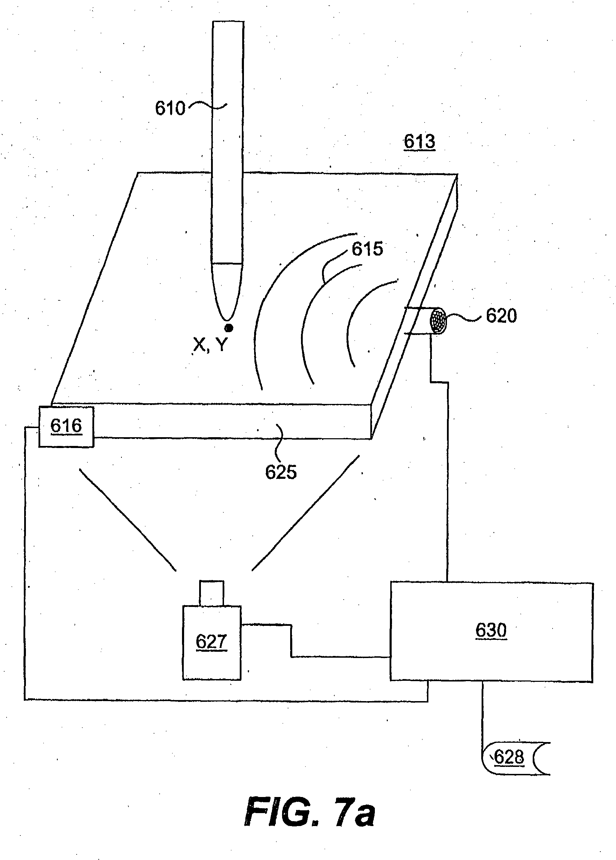

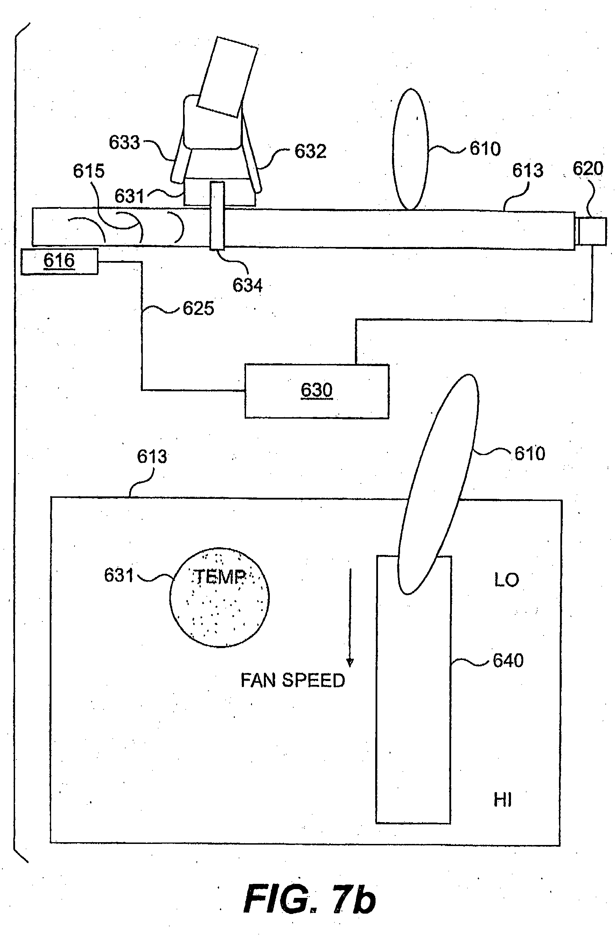

To provide excitation waves or pulses to be felt by the user without resorting to electrical contact with transducers on the screen, an acoustic source can be employed to send bulk waves thru the material, or to generate surface waves on the screen. Alternatively, transducers can be used to excite the whole screen as a member, for example using piezo transducers in the corners of the screen. (see fig 7 below). A simple vibrator such a pager motor can alternatively be used to vibrate the screen. Such a vibrator device, used for a different purpose of confirming that touch has occurred, is described in Blouin USP 5,977,867.

By sharing the display area between the knob selection or adjustment functions (and their written or pictographic description), and the display functions (e.g. display of navigational charts), space is saved on the IP and larger knobs and lettering may be provided (especially given the programmably reconfigurable operation). This then promotes safety immediately by making it easier to see what is desired, or has been affected. For further flexibility and utility, the screen can also function as a touch screen as disclosed herein.

Contributing even more to safety, the tactile feel of the knob, or other tactile physical selection or adjustment means, can itself be programmable, for example using programmable acoustic wave pulses providing many added benefits, and discussed further below and in respect to figure 7. Such a reconfigurable tactile control response can be programmed in computer 120 to change with function selected, and /or variable affected and can operate statically too, to give the driver a chance to tell the setting of the knob by feel alone. In addition, conventional cues to the driver such as the displayed values or computer generated speech can be used as well or instead.

Let us consider in more detail the operation of the aspect of the invention described above.

As shown in front view 2b, (this time illustrating display screen 105 having a different aspect ratio) three knobs, 115 and 116 and 119 are provided, preferably large for ease of use. While illustrated as vertically arrayed, a horizontal or any other positioning of such knobs or other tactile selection and adjustment means can be used. In one exemplary arrangement, knob 115 might be chosen for function selection (e.g. between heat, radio, and so forth), and 116 for the amount (e.g. amount of heat). Knob 119 is shown for selection of vent location but it is realized however, that all functions can be changed as programmed into computer 120 and this change can be made responsive to the drivers actions, and in some cases to external triggers (such as a crisis or special information situation).

Labelling too is programmable. Not only are the functions of knobs, switches and the like programmable and reconfigurable (also in some cases physically), but all function labels for a given knob for example can be displayed, or just the value selected. This too can be time dependent, with the just selected label version only coming on after selection is made, or some other action is made which makes this appropriate. Conversely the totality of possible choices can be projected only as a result of some other action. In the cased of knobs, the label can be projected at appropriate positions around the knob as is common today, and or the instant label can be in the interior of the knob as disclosed herein.

A driver can look at screen/control surface 105 and see the displayed lettering (preferably for many, projected in big letters) on or next to knob 115 indicative of its presently chosen function, e.g. the word "HEAT" as shown. If he needs to keep his eyes on the road he can, as he grabs or otherwise touches the knob, receive a sound sensation via the cars loudspeaker system 124 or a physical sensation due to the acoustic source such as vibrator device 125 exciting the screen with knob attached.

For example, if the driver touches the knob 115 either to turn it , or to indicate change in status in some other way such as push it in or pull it out, or move it sideways, or some other function, the computer 120 can cause the driver to feel for example, a 100hz vibration via transducer 125 which may indicate, for example, that the knob, is a function selector type knob and its current state of programmed operation - in this case HEAT. The word HEAT being typically differentiated by use of larger letters from other wording around the knob such as wiper or lights settings in the fig 2b example. Sensing can be accomplished by the machine vision system determining that a knob position related condition for example, has changed. And thus should be actively indicated with visual data (if not already indicated) and if desired, any tactile or audio sensation desired. In another example, the 100 hz vibration pulses might mean that the knob was set on the heater function (if there was no doubt as to what the knob was for - i.e. having a sign with big lettering right next to it.).

Alternative to detecting a knob change, such a status signal can optionally be initiated through a voice command received by microphone 126 and recognized by software such as IBM ViaVoice, in computer 120.

The definition of the setting can also be alternatively actuated by voice. To check status of a display screen whose total surface comprised, for safety or other reasons, live video data for example obtained from cameras outside of the car while in traffic, one might say "status", and a microphone array mounted in the screen 105 or near by, picks up the voice, and computer 120 processes it to determine that a status should be displayed, and subsequently, the HEAT indication is caused to be projected and displayed, possibly accompanied by an enunciated computer voice saying HEAT as well or alternatively. If desired, the lettering displayed can change in size, color, shape, or some other characteristic when selected as well.

In any case as the knob is moved, the lettering (or pictograph) projected for the knob label is typically changed to indicate the new position. For example in one program, as the knob 115 is turned 20 degrees rotationally, the function changes to wipers from heat, and in so doing the acoustic source causes 2 hertz pulses, (or another choice of signal like alternating high low pulses etc) which signify when learned, that the wiper function has been selected. Alternatively, or in addition to these pulses, an identifying sound, such as a familiar "click", may also be generated on command of computer 120, using for example stored Wave sound files in the computer, which sounds may be broadcast thru the cars audio entertainment system to loudspeaker 124 or separately.

Figure 2c illustrates a second position of knob 115 in which a wiper function has been chosen (in which case the lettering for it is preferably displayed larger). In this case, knob 116 is labelled as signifying three wiper speed positions, and a delay position. If delay is selected, knob 119 data is illuminated in this mode, and becomes the delay selection knob. Alternatively, delay positions can be included in the rotational positions of knob 116, and knob 119 can be for something else- for example headlights. This would be of interest if the information on the screen in question was of a high priority, in which lights and wipers were displayed- two safety items of more importance than climate or audio for example.

The display need not be only in the center stack. Figure 2d illustrates an arrangement (in this case having two knobs and 4 illuminated on demand indent switches (to be described further below) in the minivan example of fig 1 using all the instrument panel space from a few inches to the left of the edge of steering wheel 150 (around which it is difficult to reach, and thus not suitable for controls needed while driving) to the farthest reach point to the right capable of driver interaction. Note that the rear projection display makes it possible to have a screen/control surface shaped like 155, where the region 160 is contoured to clear the driver's right leg.

For illustration and comparison purposes a typical 7 inch diagonal rectangular display such as that used in the Jag X car (and one of the largest provided in vehicles today), is shown in dotted lines 157. The ratio of areas of the two displays is approximately 9:1. This difference is one of the features that makes possible the presentation and action on many new types of data (such as video), possible and provides for dramatically improved visibility of all data and interaction therewith.

The 3 knob based layout similar to that used in many vehicles today (and thus familiar in this sense) where one knob is function, one knob is amount (magnitude), and one knob a selector related to the function.

It is noted that while one knob such as 115 can be fixed in function like knobs in conventional vehicles today, for example always *to* act as a function select, or it can also be programmed to change is nature once selected (i.e. once heat is selected, the selection knob momentarily becomes an air distribution knob for example, obviating the need for third knob 119 to perform this function).
Alternatively, it can be always a selection control, but the complete nature of what is being selected changed.

For example, fig 2e illustrates a table of values where all functions selected by knob 115 are in the secondary category- i.e. not critical to the vehicle operation. This screen/control surface having this arrangement might only be in place when needed, and the screen could for example revert to a critical category after passage of time, or on cue from the driver or some external signal indicating need for critical functions.

In this example, when the knob 115 is turned to Audio, knob 116 becomes a *volume* knob with a continuum of analog settings, and knob 119 becomes the selector of an audio device, all with lettering or pictographs or both to match. In one example, the choices available can be arrayed around the knob at the different clock positions, while the actual choice made can be displayed in large letters in the middle of the knob - or elsewhere on the screen, say even momentarily

As noted above, and elsewhere throughout this application, the knobs shown can be augmented by programmable switches and other functions having tactile feel as well. Or the knobs can instead be sliders, or levers or dials for example. And virtual function selectors or adjusters can also be used alternatively or in addition.

For each set of choices, a table of values like table 2e can be created. This can be fixed for the vehicle, or for a particular driver of the vehicle, or can , if desired, be varied by the driver. There are a great many possible combinations, in particular since the physical presentation can also be changed, ranging from a pure blank screen with no knobs to a knob, switch, and slider filled screen with no virtual characteristics at all (nearly the same as the classical version of the last 50 years- but with the possibility of reconfiguration and force feedback feel sensations to ones fingers in working the controls).

Figure 2f illustrates a further layout capable of driver interaction spanning all areas of the dash on both sides of steering wheel 190 using two screen/control surfaces 180 and 181, each with a separate projector and camera system. This arrangement can replace all the instrumentation and controls of the vehicle, since all data such as speed, fuel etc can be displayed, and all necessary control functions can be within reach of the drivers right or left hand. With smaller diameter or other alternative steering wheels of the future, additional control functions can be placed directly in front of the driver.

Note that rear projection also makes it possible to have portions of a screen/control surface (for example portion 185 of 181 in the area of the steering wheel), at different depths and accordingly distances from the projector. In this case the "f-stop" of the projector is preferably chosen to provide a significant depth of field, to allow all areas to be substantially in focus. This is made easier if the projected data is large, so that fine focus is not required.

The display software; in one simple example to provide speedometer readings, can be generated using LABVIEW by National Instruments Co. More specialized instrument panel images can be created with the aid of "SPEED" instrumentation design software provided by the eGenuity Co. of Montreal, Canada.

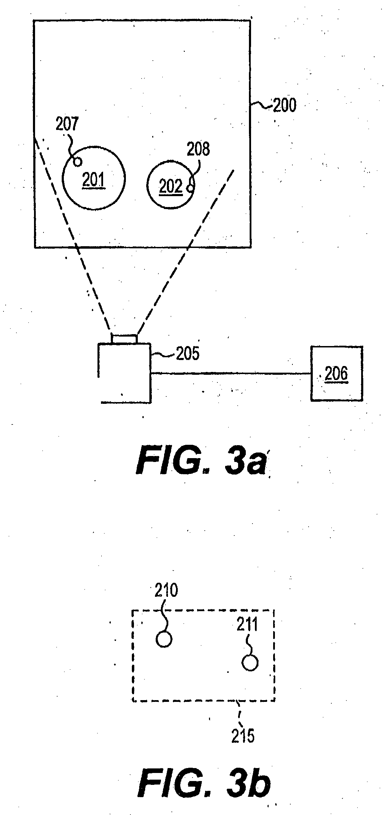

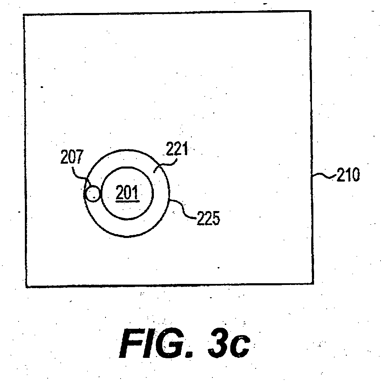

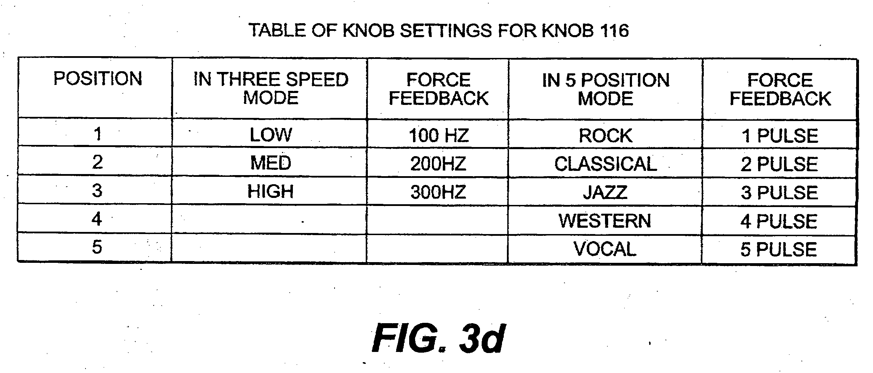

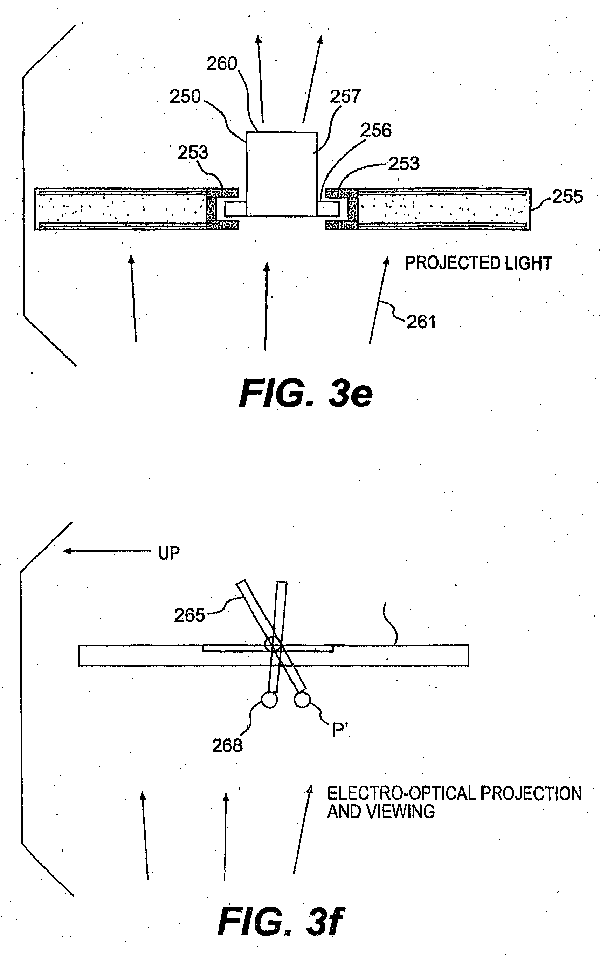

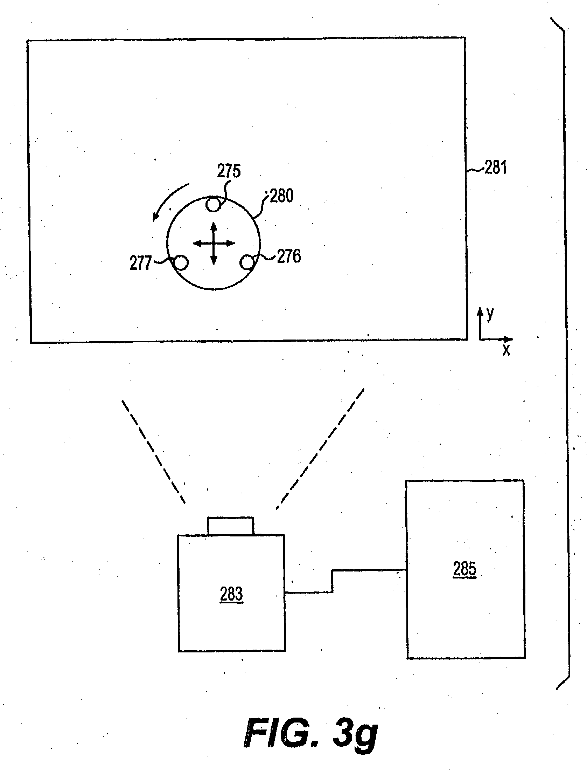

It should be noted that the function of a particular control such as a knob, can revert back to a standard state for example, after some elapsed time period, or upon a signal such as an alert from a sensor that this state should be resumed. Much the same applies to the whole screen/control surface, if its function has been momentarily changed- for example to present a video image of a critical accident threat for example. When the threat is diminished, the normal control functions can be reinstated for example. Or they may be reinstated in order of some priority, with the most critical to overall well being first, or those with the least time latency first. For example, headlights once on, likely can stay on with little time consideration associated with them. But wipers may need to be turned on or changed in speed relatively quickly. (unless automatic rain sensitive systems are provided for same, useful with this invention to all controls to focus on other matters). Clearly there is a vast array of possible layouts of knobs sliders, switches levers and so on, not to mention the ways in which different data can be displayed to enable their safe use. Some aspects of the operation of these controls will be discussed in fig 3, and other types of controls which can be used alternatively or in addition are then disclosed.

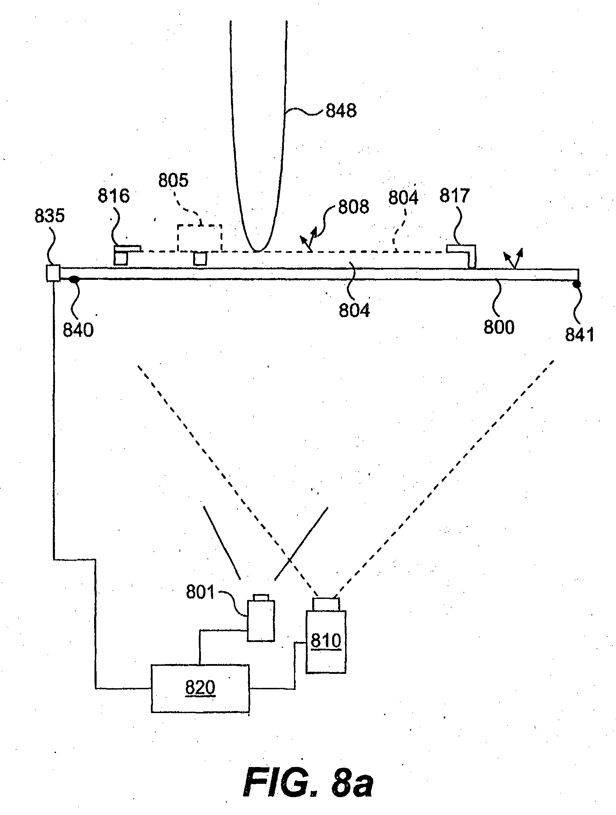

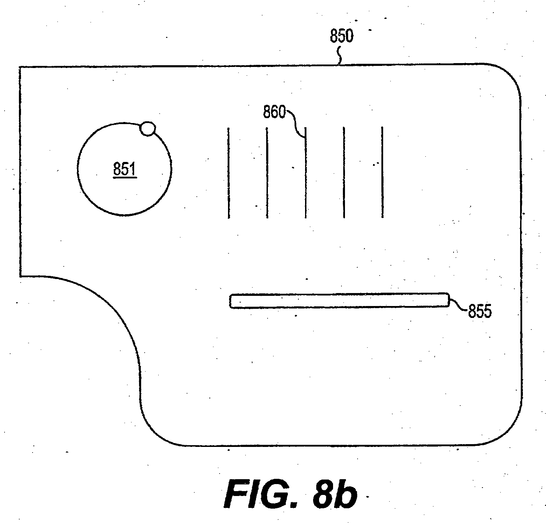

A complete automotive control and information system can be built in a novel manner as has been disclosed above. In the form above it represents in essence a programmable and reconfigurable approach to the conventional instrument panel of today. And it can even be completely reconfigured physically, as discussed further below (see for example, figure 8 illustrating substitution of screens or portions thereof).

However, the invention also comprehends the use of a touch screen capability, logically integrated with the features above, which can as disclosed operate using the same basic machine vision measurement principles. This is both elegant, and cost effective. And it is non-contact, allowing interchange of the complete user interface including the touch screen and control details such as knobs.

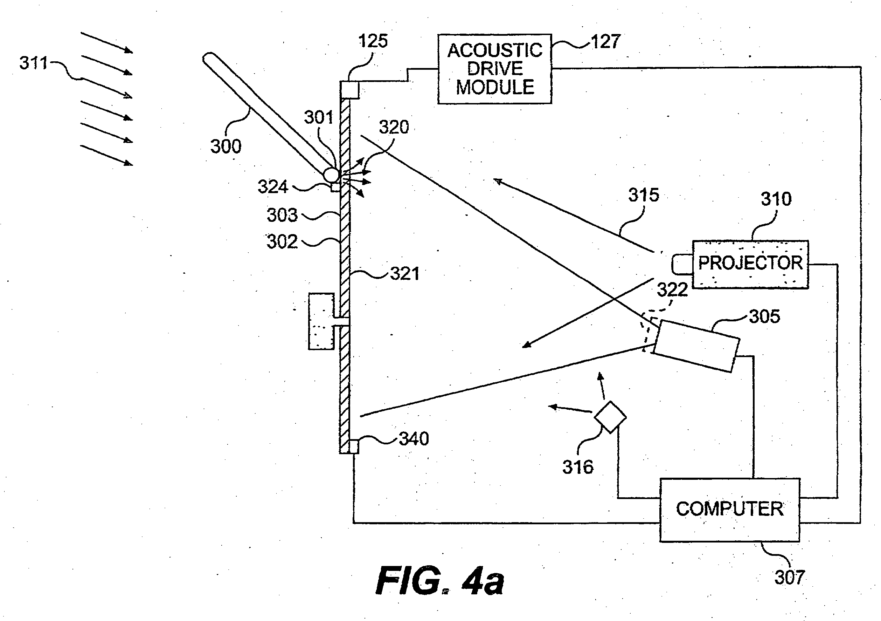

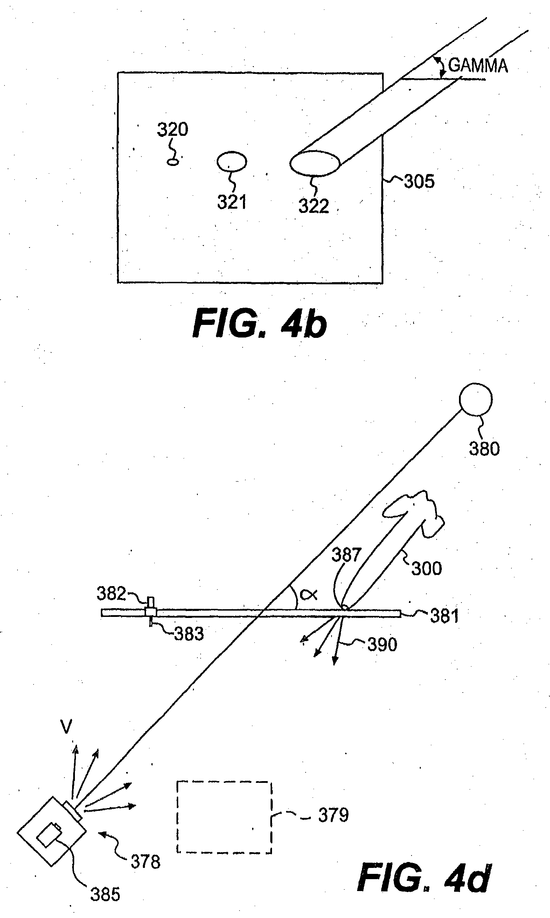

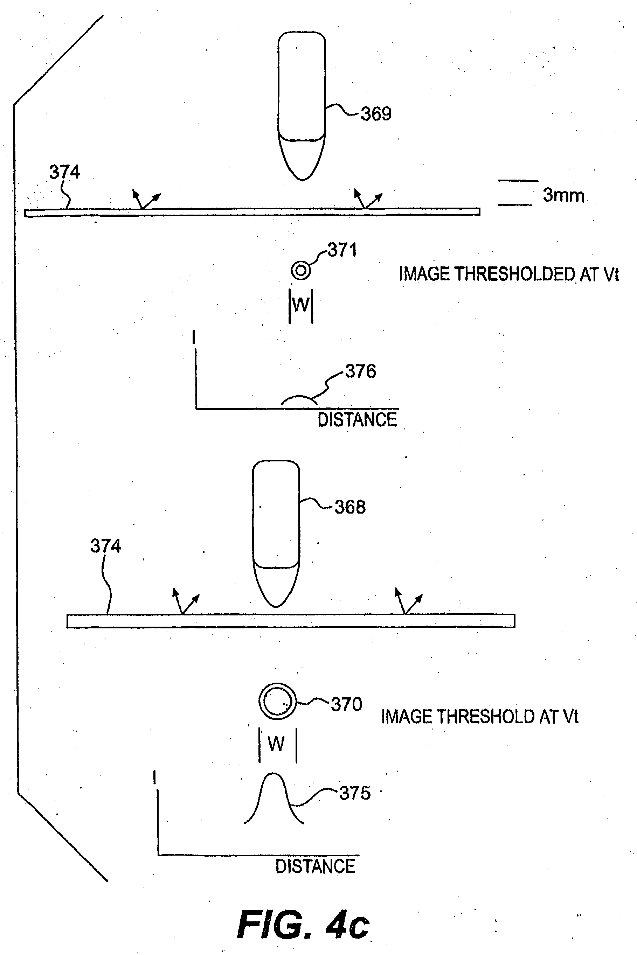

In the portion 195 shown in dotted lines of the screen 180 or any other desired portion, may be reserved in certain operation modes for video or graphical data presentation. Alternatively, or in addition in can also include a touch screen input capability for example that of fig 4 below or using resistive, capacitive, acoustic, or other touch screen means known in the art, including those in my co-pending applications.

The system is totally programmable - the degrees of turn to create a new choice of selection or function, the acoustic pulse choices, the responsive sounds, and the visual display of lettering (and language thereof too) are all programmable in the computer control unit such as 120.

This system has the ability to have its data read in a quick visual glance and/or touch and visual confirmation too after a move is made. Voice input or output can also be used. For example when the knob is stopped from being turned, the computer can cause a text to voice program such as that of Fonix Corporation to annunciate its position. Or the person can tell the system via a microphone connected to the computer equipped with a voice recognition program (not shown) what he wants the knob to represent (e.g. climate control) and the knob function and its associated display can be changed accordingly by the computer and display projector.

### Figure 3

Figure 3 illustrates further details of the sensing employed in an example. For example, fig 3a is a rear view of the screen 200 illustrating one method of sensing of knobs 201 and 202, with camera 205 located behind the screen, whose image data is analyzed by software such as Matrox MIL machine vision software resident in computer 206 to determine the position of markers (or other knob features) 207 and 208. Illumination of the knobs can be using the data projector, or a separate source, such as 111 in figure 2a. In the case illustrated the markers (such as 118) on portions of knobs on the drivers side of the screen are imaged through the screen, and the markers appear bright on the dark background of the knob image (alternatively one might chose that they appear dark on a bright background. Or they could be distinguished by color with respect to another colored background). In this case too, the knob is opaque throughout. An alternative arrangement can have the marker located on a member on the camera side of the screen, and attached to a pin such as 106, in fig 2a, such that it is turned when the knob is turned.

Figure 3b illustrates images seen of the knob markers in a first condition where knob 201 (in this case used as a function selector knob) is on "Climate" at a position at 11 O'clock in this case (when viewed from the back as shown), and the knob 202 (in this case used to ascribe a magnitude relating to the function selected) is at 3 O'clock, corresponding to a low setting of that variable. When commanded by the computer, or alternatively in free running mode, every 1/30 second say, the camera system 205 obtains an image of the region within the outer circumference of the knobs, including the images 210 and 211 of markers on the knobs. Regions outside the outer circumference are in this knob position interrogation case, ignored.

The image of the markers is obtained and the rotational position of the two knobs determined by computer 206, which then may compare the circumferential location of the marker to a look up table for the knob in question.

In order to determine the marker locations, the image is in one example, thresholded, to provide a thresholded image 215 to determine marker location. In one example the marker is typically brighter than that light in the image returning from the region of the surrounding knob. By applying an intensity threshold, only image data brighter than a certain amount within the region of the knob (dotted lines for example) is provided. Since the knob is inthis case opaque, even with sunlight behind the knob, the region of the markers is bright.

Alternatively in other cases the marker could for example be could be chosen to be darker than its surroundings, or of different color, or a shape which would all be distinguishable in image 209 processed by the image processing system of computer 206, for example using the Matrox MIL 4.0 standard image processing library in a Pentium 4 PC.

Another example is shown in figure 3c where the projector illumination is tailored to suit the region where marker location is expected. The image processing system, using projector illumination projected in an annulus 221 around the periphery 225 of the knob 201 for example, is used to determine that marker 207 is in the 9 O'clocl< position. It is noted that the camera can be used to determine the position of a Physical control detail such as a knobs at multiple locations in its travel, and is even so accurate that every degree of rotation of the knob can be determined. Similarly linear positions of a slider can be determined to high degree if desired, as the position can be solved to sub pixel accuracies if need be.

It is further noted that when the projector is used as the source of light to illuminate the knob features, the projector may project higher intensity into the annulus than in the surrounding area, as the annulus is blocked from human vision by the knob annular section which is opaque. This allows higher signal to noise from the knob marker or other knob features detected.

It is also noted that the projector (or a specialized source such as an LED array) can in general project near infrared (IR) or other invisible wavelengths which can be used for detection, but unseen by the user. This can also be done selectively around knobs and other tactile features where human interaction is likely.

The magnitude of data input by control knob 202 and represented by the control could be temperature, or fan speed for example. Or the knob 202 could be used to select vent outlet settings, if desired, with individual vent settings stored in the computer 206 and when the knob position determined, an appropriate lookup table accessed to provide data to the vent motors or other actuators to open or shut them appropriately. The further settings not covered by knob 202 can be achieved by further use of the knob, or of the touch screen or other aspect of the invention.

Detents of the classical mechanical kind can be built Into a knob or slider and its mounting. In addition, the computer 206, like that 120 may also control vibrator wave source like 125 to provide a "programmable" feel in conjunction. This can give a different feeling or vibration for each position of knob 201 or 202 for example. And one can have different frequencies, or amplitudes, or other characteristics, than the other, so as to be distinguishable one from the other. The actual location of the settings can be determined by the point at which the feel is felt, as a programmable position detent, so to speak. In this case the display may be varied as well. The sensed indicator of the marker in one of the rotational positions such as those of table 3d is used to provide input to control the programmable wave source 125.

For example consider fig 3d illustrating a table of values of display and force feed back for a knob with 3 settings, with information to match, and at a later time, after reconfiguration, the same knob having five settings. The displayed data may be completely different indicative of other functions. And in this case, the user feels something change three times in the one example, and five in the other. The change can be the same each position, like a classical detent, or can actually have different values. This is illustrated as a low medium and high frequency vibration for the 3 position case, and in a completely different sequence, 5 levels of pulse counts for the 5 position setting (e.g. 1 pulse 2 pulses... Up to 5 pulses).

In another instance, the selector knob 201 could be been moved to audio, and the magnitude knob (in this case 202) is used for volume or station tuning. The programmable detents used in the first instance are not generally as desirable here, though they could be if just a fixed set of stations was desired, one at each detent location (but with those varied to suit a selected condition say, classical music, vs. another set for Rock).

For example in the selector mode, when one begins turning the knob 201, a first wave function say with a certain frequency can be generated, to indicate you are on heat. But as you turn the knob further to the audio setting desired, the frequency of the feed back response s caused to increase, where as going counter-clockwise on the knob causes decrease in frequency. Each function of the knob can have its own pre programmed feel, and /or with audio feed back via a loudspeaker if desired. Added knobs or slides can also be provided on the screen to selector adjust further functions. Virtual controls can alternatively be provided, which are described below. These have the advantage of not permanently taking up space on the screen, but are less intuitive perhaps for some drivers, especially the elderly who are accustomed to classical physical knobs and sliders and switches. With the invention, each person can take delivery of the vehicle the way they like (assuming safety regulations are met) or convert it with aftermarket add on screens and software.

Similarly as you go to turn the magnitude knob, the programmable pulse feedback "detents" can, for example, be of long duration for high volume, and short duration for low volume

While the pulses are here described as traveling through the screen to ones fingers turning a knob or sliding a slider or pressing a switch (all physical tactile devices), the same vibrations or different choices of vibration, pulses or other physical wave signals can be used to signal a persons touch on the screen surface or a tactile relief portion such as a ridge, groove or indent in the screen as well, examples to be discussed in figures below. Since the driver of a car typically only contacts one such function at a time, (being typically limited to one handed function since the other hand is on the steering wheel), the pulse can be known to the driver to be associated with a knob or a virtual position on the screen, whatever is reasonably able to be used at the time. Alternatively certain programmable wave functions could be reserved for certain things. For example vibrations under 400 hz could be for knobs, 400-600hz for sliders, and over 800 HZ for touch portions of the screen. This is just one example of many permutations of vibrational frequency, pulse length, pulse sequence and the like.

Figure 3e illustrates a sectional view of a screen 255 where the addition of a slider mechanism 250 sliding in a metallic insert 253 placed in a portion of the screen and with projected light visible through the slider if desired.
In this case an opaque metal insert 253 has been placed in the screen to allow more precise action of a sliding metallic slider control 256 with a clear plastic inner portion 257 having a diffuse scattering surface 260 such that projected light 261 thru the slider can illuminate the region to be touched in addition or alternatively to illuminating the region of the screen nearby.

Figure 3f illustrates another type of electro-optically visible switch 265, inserted into the screen 266. In this case the switch is a three position lever action type, common to window lift controls. The switch of known construction is spring loaded to return to center, where the marker 268 is in the position shown in dotted lines. As it is pressed to the left (window upward), marker 268 moves to position P'for example. Typically such a switch is held there until the device in question (seat, mirror, window, radio seek typically) comes to its desired location. When this happens the user releases the device and the marker returns to its original position. In this case the original position as well as the new positions P' up or P' down can all be determined by the camera system.
Thus a complete return to zero state is not required in order to determine that motion should cease. Similarly, one can use the camera system to determine more than just the extremes of up or down. The lever can have two positions for example in the up direction, such as slow and fast which can both be determined by variation in the location of P'.

Use of the metallic insert in the examples above makes it easier to mechanically provide a precise detent and /or sliding mechanism in this case can be used to advantage to allow the slider to be used for transmission gear selection in a "drive by wire" mode. The standard gear identification, for example the historic PRNDL may be projected next to the slider detent positions whose position is referred to datum's on the screen and is correlated with the vision system. However, by changing inserts to have added positions these can be changed for example to provide 5 forward gear selection locations.

When a knob, for example, is at the point desired in the circumferential direction, it can be left there and after a momentary and typically pre-programmed dwell time, the computer may be programmed to register the reading desired (e.g. wipers at the second position, illustrated in fig 2c). Or, in another exemplary mode of operation, the knob function can be changed. For example, when at the "wipers" position, the knob can be pushed in by the driver to register this choice

(wipers) and then after that the knob function and the display associated with the knob are changed, for example to indicate wiper speed delay and other wiper function settings at the different circumferential positions desired.

Note that the unit may have different functions made possible for the knob or other devices when the car is stopped or in some other state. For example the knob might indicate wipers, heat and radio when in motion, but additionally when stopped could have email, internet surfing and other functions which might be too dangerous to access while in motion.

It is noted tat the knobs or sliders can provided in a manner which can also be moved transversely, for example about a pivot, such as vertical or horizontal or in any other direction \AJith respect to the screen to which they are effectively mounted (whether on the screen proper, or a member such as an overlay attached thereto).

In this manner they may be used to signal added data to the computer. Especially useful in this case is a knob with multiple markers or other features, such as now shown. This allows determination of knob position not only rotationally, but in directions transverse to the knob axis as well.

As shown in figure 3g, ,the datum's 275and 276 and 277 on knob 280 on screen or other surface 281 allow the camera 283 and computer 285 to solve from the image of the datum's on the knob, not only the rotational position of the knob but also the transverse position or movement therein as well (horizontally or vertically in the plane of the drawing). This allows added data to be provided to the system, as to any translation of the knob as well.

For example, a screen mounted joystick like device can be provided in which a lever can be moved in any direction, moving one or more target datum accordingly. This allows one to provide functions typical of a mirror adjuster or radio speaker balancing.

Another example is to employ a knob which can be rotated to a desired position, and then energized by hand by pushing side ways to select a function. And another desired input can be achieved by pushing vertically or in other directions. The function selected can always be the same, that is corresponding to the rotational position of the knob, or it can be something also relating to in which direction or amount the knob is pushed in x or y from its normal rest position, or a combination of both.

In the example shown, this knob is used to adjust seats via up down left right, after rotating the knob to "seats". Or when rotated to right or left outside mirror those as well. And it can be for speaker functions, selecting those in right front left rear etc, by pushing the knob in the direction of 11 , 1, 5, or 7 o'clock, where a compound x and y answer is of interest. In each case the display changes to the desired function, when the knob is rotated to the function of interest to be selected. In each of these cases the longer the knob is pressed in the direction desired, the move that function is activated, similar to today's controls for all of these functions on Chrysler cars for example.

This type of knob can be arranged in another fashion, where selection is made by some other means than use of knob rotation, and that knob rotation is used to control the movement magnitude, rather than the time the knob is pressed in a given xy direction.

### Figure 4

Figure 4 illustrates additional detail and features of the previous examples, here further incorporating a touch screen function (which may be used alternative to, or in combination with, the knob or other physical tactile selection or adjustment details described previously).

The touch screen function may be provided by means known in the art, such as acoustic wave, resistive, capacitive and so forth such as those made Microtouch Corp, and Dynapro corp. Of particular interest of the conventional types known in the art are piezoelectric or other stress or strain gage based systems such as further described in figures below.

However it is also possible to see the finger touch optically. In this example, one or more TV cameras are used, for example, the same camera such as 117 used for sensing physical details such as knobs as disclosed above. Just as in the case of the knob 115 of fig 3, the driver's finger or an object held by the driver ( or alternatively, a passenger) may be illuminated using light from a rear projection source used to project displayed information on the screen. Alternatively, sources of light in the vehicle can be used, such as ambient prevailing light or special lighting such as IR LEDs to either backlight the finger, or front light from the projector side, for example using LED array 111.

Several methods of electro-optically determining the location of physical touch are disclosed in this section. For example:
- The first observes the users finger through the screen, with the finger substantially in contact with the screen, using light projected from the rear (typically provided by the projector displaying images on the screen, or by a specialized IR source)
- Another method observes the shadow of the user's finger on the screen, generally while in contact with the screen, using light projected from the passenger compartment side.

Another example of an optical method to determine finger presence and even depth of push by determination of screen distortion is also disclosed in the referenced co-pending applications and patents.

Consider figure 4a, wherein finger 300 of a user touches screen 302 which is sufficiently transparent and having, for example, a diffusive front surface 303 facing the driver. TV Camera 305 is located behind the screen and out of the way of the displayed image projected by projector device 310. Camera 305 is used to view a region of the screen 302 from the rear. The camera image of features on or near the screen is processed in system computer 307, for example employing a SONY Pentium 4 at 1.7 GHz and standard image processing software such as MIL (Matrox imaging library) from Matrox, in Montreal, Canada. The camera may be for example a Sony progressive scan type with IEEE 1394 connection to image processing computer 307 , which may be the same computer as 120 used to sense knobs and the like, if desired.

In a first case, the tip 301 of finger 300 in contact with the screen 302 is front illuminated through the screen using light 315 from the projector 310 (or optionally by a separate source such as IR LED's 316 (dotted lines) located behind the screen, whose light, like that of the projector, passes through the screen from the rear. The reflected light 320 from the finger (primarily from the tip301 in contact with the screen), is sensed through the screen by the camera 305 as shown. The screen can be of ground glass or ground plastic, 3M Vacuity or other types, and may have diffusive regions inside the screen material or on the front or rear face. A fresnel lens can be used before the screen (projector side) if desired. This somewhat blurs the image however, focus usually does not have to be precise to detect finger presence at a given location.

Given the screen scattering properties required to make the projected display image visible to the driver and passengers in variant positions, the user's finger (or fingers) should be close to, or In contact with the screen for best results. In some cases the finger tends to fill in the screen front surface to reduce scattering effects caused by surface roughness of the outside surface 303 of the screen (assuming the scattering is from the front surface, and not from scattering elements within the screen or elsewhere).

For best results in the presence of bright projection images, it is generally desirable where possible to apply a vacuum deposited or other anti -reflection coating 321 to the back of the screen to reduce backscatter reaching the camera from the projection source. (if the camera is operating using the projection light, and not separate IR sources for example). For the same reason, the camera 305 may be purposely located such that it is not at the angle of direct reflection off the screen from the source.

If a separate quasi monochromatic source such as IR LED, or LED array, 316 is used to illuminate the knobs, details, or fingers on the screen, a band pass filter at the source wavelength such as 322 (dotted lines) can be placed in front of camera 305 in order to preferentially pass light from the LED source, and not from the projector (which projector could also include a band blocking filter at that wavelength- desirable in some cases anyway to limit heat reaching the screen.

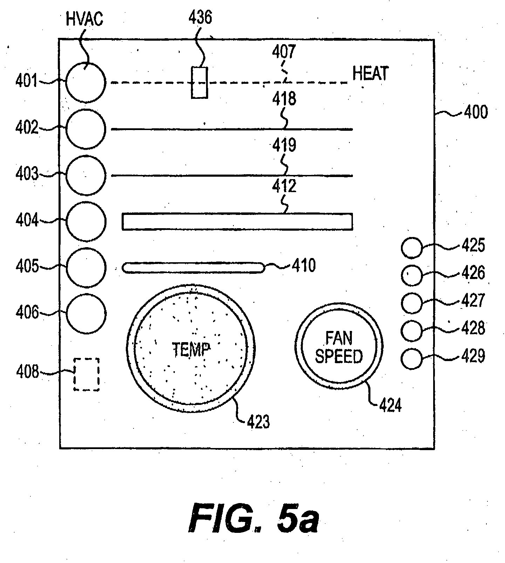

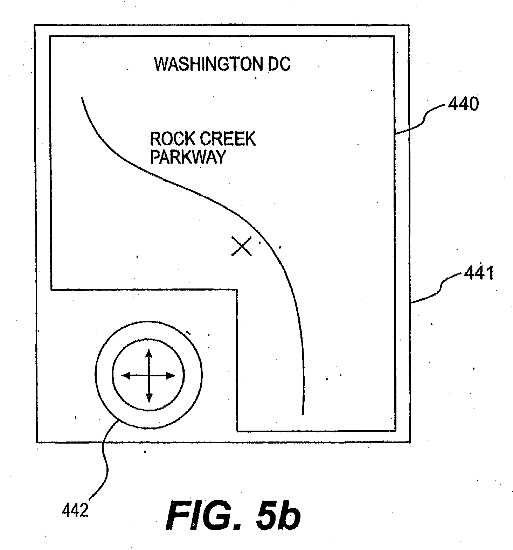

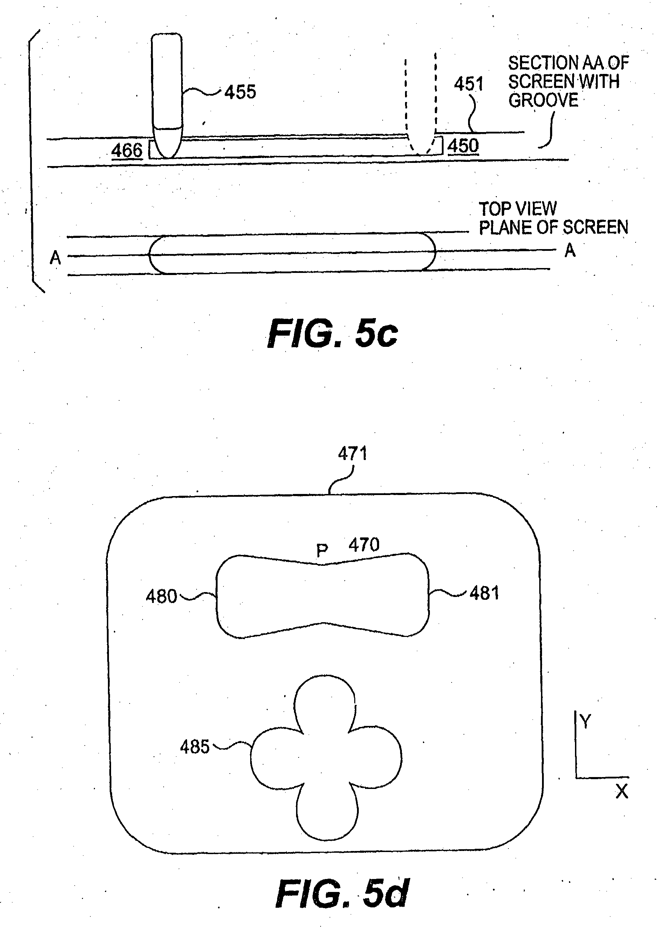

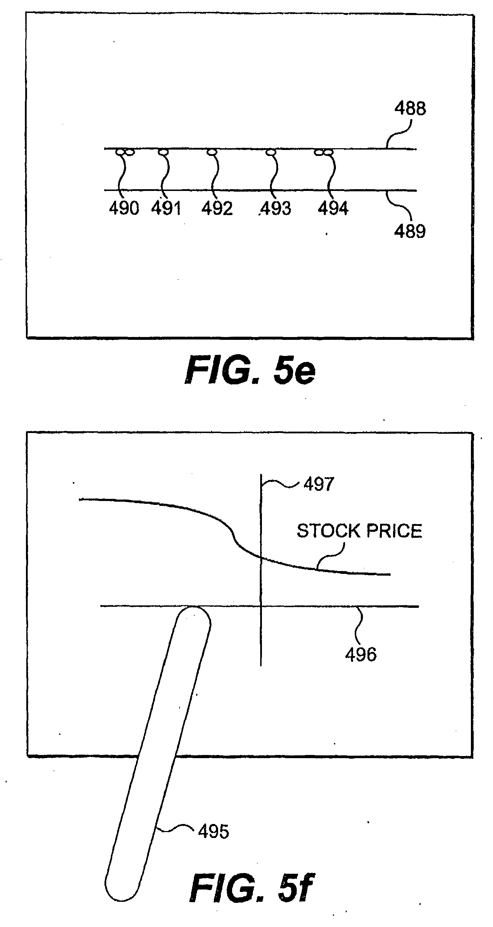

It is noted previously (and discussed further in fig 5) the touch screen can desirably have relief features such as indents or ridges, which may be for example shaped as a circular groove or as shown a linear ridge 324 in screen 302, in order to guide the users finger tip such as 301 to a certain location on the screen where for example the starting point of various command movements might be made. The indent or ridge can be shallow such that it can be felt, but desirably is not deep enough to cause excessive refractive gradients which would disturb an image say of a map or video display that might take up the whole screen surface In a navigational mode for example. Ridges and depressions in smooth surfaces of even 0.003 inches (.08mm) for example can be sensed (thickness of a human hair), while even 0.020 inches (0.5mm) deep or high can be used with little optical effect in many cases especially where slopes are small.

The relief feature may alternatively be an area of different texture, for example a region rougher than the surrounding screen surface. This can be quite easily felt in many cases (though not with gloves on - a drawback in some cases). Where the screen is divergent via scattering micro spheres (e.g. 3M Vacuity) on the rear surface thereof toward the projector, a variance in texture on the front surface does not cause undue change in the projected image viewed.

The image of finger tip 301 can be further, or alternatively, distinguished by other methods. For example the camera 305 may be a color TV camera, and if the light projected by projector is white in nature, the color of the imaged light from the finger tip will be flesh colored, and only flesh colored images can be looked for by image analysis software in computer 307. Since each driver's flesh may be different in color, one can teach the camera computer system during a set-up phase, by simply putting ones finger on a square or squares on which white (or another color) is projected. It is thus desired to match the return from one or more projected colours with an indication of the person's finger. This simplistically could also be used to identify a driver for theft prevention purposes. Indeed certain aspects of the finger print can also be seen by the camera too - especially if the finger pressed in against the scattering surface.

If the user wears gloves, the system can be retrained for the glove color, if required. The enlarged finger size can accordingly be accounted for as well as gloved finger contrast. Where near IR sources (e.g. 905 nm) are used, I have found good reflection from almost all gloves tried, black or colored.

Another aspect of teaching is to for the camera computer system to "learn" the approximate size of the users finger contact on the screen in typical use, as determined by the camera system (by thresholding the image for example, and measuring the extent in width and/or height, or area, of the image at that threshold). This provides added value in that it can be used to roughly determine force. For example, the camera computer system can be taught a normal touch and a "push in" state of touch - just two highly differentiated states, which clearly will have a larger finger contact area in the "push in" state. This ability to designate a new state by pushing can be used to act as a selection method of a position reached by touching.

Other Z axis or force related sensing means can alternatively be used to determine the location of finger touch or the movement/ force in Z which can be used with the knob states in addition. Such a suitable means can use the piezoelectric force transducers located for example at the screen corners, such as 340 (those on other corners not shown for clarity). See also for example figures 6 or 9.

To illustrate, consider fig 4b which shows the image obtained by TV Camera 305 of three touch states - light touch 320 indicative of the finger tip approaching the touch condition and just touching the screen, the normal touch state 321 where one wishes to indicate touch at a certain x-y point on the screen (i.e. in the plane of the screen), and the pressing mode state 322 , typically used where one may wish to indicate that a condition at that point is to be selected (note that the light touch state can also be used for other conditions on occasion). There can also be degrees of pressing, such as normal and hard, for example as well. In one example, a complete range of 5 analog pressing values could be obtained.

Another means of distinguishing ones finger is by image sharpness and contrast. Since the surface of the screen 302 is typically scattering, objects that aren't in direct contact with the screen will be seen less clearly from behind - and can become un-discernable if the finger or other object is too far from the screen in the direction away from the camera. Thus a criteria for determining finger presence on the screen is both sharpness and color, as well as degree of light return (brightness) and size (most finger touches being within a size range on the order of 10 millimetres on the screen, but quite variant, also with the force of touch).

To avoid having the camera and computer system exposed to images which don't represent an intended touch type signal, it is possible to sense independently that a touch condition has occurred, for example with piezoelectric transducers located to determine forces of the screen plate such as 340 in figure 4a whose information is processed by computer 307 and then use this signal to cause the camera computer to analyze images on the screen. When a force or other touch condition is detected the system is programmed to look, minimizing the chance of false signals due to unusual lighting conditions. It is noted that in some cases piezoelectric transducers can also be used to excite the screen (and fingers touching same) for data feedback to the driver as well. This is discussed elsewhere in the disclosure in more detail

Another variant discussed in referenced applications, is to see touch by the deflection of the screen or other indicator of finger location. Then using this knowledge, one can localize the search for the finger image. Conversely, one can get a rough finger image, and then localize the region of search thru other means, which could be acoustic, optical or other.

Another point, apparent from fig 4a is that finger 300, with tip 301 in touching screen 302 effectively shadows the view of the finger tip contact with the screen as seen from behind the screen by the camera. This is very useful as it shields the camera (or other electro-optical sensing device, such as used with flying spot scanners for example) from excess light falling on the screen from within the passenger compartment in bright sun conditions for example. As can be appreciated, in a car with a sunroof, or a convertible with the top down, direct sun on the screen is possible. And even in other vehicles, grazing sun through the side windows or down through the windshield can fall directly on the screen.

It is noted that typically such sun conditions completely wash out the image of normal instrument panels (with LCD or LED displays for example) in cars, but in this one it may not due to the intense power of the projector (if such is used- see discussion elsewhere), a major plus.

The image of the region of contact such as 321 may be analyzed by the camera and computer system for any of color, brightness (intensity) and sharpness and shape or area of contact. If desired, and screen design and camera resolution permitting, fine detail in the finger contact can be examined, like a finger print. This can be to identify that the finger is in fact in contact, but also to identify the person.

It is noted that if the screen is positioned to the right of the driver in the center area or center stack, as it would be if located to the right of the steering wheel on the dash in most countries, the finger will generally approach the screen at an angle GAMMA as shown in fig 4b - this effect can make it easier to discern the point of finger contact as a longer extension of the finger edges can be used to perform the calculation of the point of contact from the TV image.

The extension portion of the finger 300 also shadows the screen to a degree, and this shadow edge can also be seen to help identify where the finger is pointing, and where the tip lies. Close to the screen the extension region can be seen in reflection as well using the light source(s) from behind the screen.

Figure 4c illustrates a comparison of conditions when a finger 368 is pressed at its tip in contact with the screen with the condition of a finger 369 whose tip is spaced away from the screen. Finger image 370 (viewed by a camera such as 305 not shown in this figure) is generated when the finger is in direct contact with the outer screen surface 374, while finger image 371 is that seen with a finger 3 mm. approximately away from the screen. In each case the images are thresholded to the same intensity value which produces a larger image width w (and area) of 370 than in the spaced away condition, 371. Note too that the edge contrast as illustrated in the intensity profile 375 of image 370 is much higher than the corresponding profile 376 of image 371. Contrast can also be used, like the size dimension or area of the image at one or more image intensity threshold intensity values, to discriminate the two conditions. In some cases for example, one may wish to ignore finger indications where the finger is not in contact with the screen.

Figure 4d illustrates an angled projection situation where the projector 378 is aimed toward the driver 380 with the projection axis making an angle alpha with respect to the screen and control surface 381. A slider 382 traveling in a direction out of the plane of the paper has a retro reflector 383 which is illuminated by the projector, is seen by camera 385 located close to the projection axis. The projector also illuminates the driver's finger tip 387 as well, allowing its position and other variables to be determined as just discussed.

This arrangement has an advantage that the light from the projector reflected from the surfaces of the screen is directed away from the camera, which then has less optical noise to contend with, since the light 390 scattered from the finger tip back to the camera and the light retro reflected can come back along the camera axis.

The projection object plane (an LCD or LCOS chip for example) is typically canted at an angle proportional to alpha so as to keep the projected image in focus across screen 381 as is known in the art. This results in a variable magnification across the screen which can be compensated for by processing the image data to be projected accordingly in computer 120 controlling the display.

This arrangement has two other advantages as well. First, the projector may be located closer to the screen in the depth direction which may be helpful in certain packaging situations. Second the camera which is located off to the side, may be less affected by sunlight which may enter through the screen.

This arrangement maximizes the light intensity as seen by the driver and makes other artifices such as lenticular screens to spread the light in the horizontal (cross car) direction unnecessary (at least for the driver). However, as noted it may be desirable to spread the light vertically to suit the driver, given the relatively larger angles subtended by his vision in the vertical direction.

Note too that by angling the projector as shown, it becomes relatively easier to position an optional airbag such as 379 (dotted lines) behind the screen, such that it can blow thru the screen in the event of an impact. In this case the screen should have a tear strip or other means to allow it to give way and not hurt the passenger. While illustrated here in the center stack, such airbags are usually positioned in front of the passenger - though a passenger could sit in the middle front seat in this case. Or they are positioned in the steering wheel, where the display can also go with some packaging constraints. If new forms of control are used, other than steering wheels, this arrangement could easily be in front of the driver.

When using rear projection it is desirable for best contrast to shield the unit where possible against off axis direct sunlight entering the display. Such shielding can generally be judiciously achieved by the placement of the device in the instrument panel vis a vis the driver. Alternatively or in addition, techniques such as the micro louvers described in Blanchard, USP 5543870 can be employed.

Finally it is also possible to use back illumination of the user's finger. In this case, also illustrated in figure 4a, the camera 305 sees the dark or "shadow" image of the finger 300 touching the screen 302, when back illuminated by light 311 from the users side (in this case light inside the car. This works well during daylight and in relatively well defined situations, but poorly at night unless auxiliary lighting is provided inside the vehicle (e.g. from IR LED's which can be placed for example in the roof of the vehicle behind the front seats, which are not disturbing as they are invisible). The camera is ideally used to see the finger touch location in x and y screen coordinates when the projector source is sufficiently dimmed to eliminating background noise from the screen. The projector can In some cases be switched off or its displayed image darkened only momentarily, to avoid the impression of it being off, which can disturb the user.

As in fig 3, The camera utilized can be any commercial camera, capable of producing images which can be interrogated as just discussed in order to see the finger(s) of the person touching the screen, or something proportional thereto.
And the same image when analyzed can contain information as to knob slider or other control such as discussed in figure 3 above.

As also noted in fig 3, best results may be obtained in some conditions of operation by using a CMOS or other type camera which can be addressed on a pixel basis, to achieve faster operation. This will be discussed later as well.

While the discussion above has been concerned with finger or other images illuminated with light in the visible or near IR wavelengths, alternatively, self generated radiation of a finger or other portion of a body can be used, detected with IRTV (e.g. pyre-electric) cameras 305 operating in longer wavelength regions. In this case it is desirable to use if possible a "Cold" light source in the projector, such as LEDS or light conducted to the projector by fiber optics from a remote light source.

It is also noted that one can project light into the inner region of the knob, even if the rest of the screen is black, since the knob blocks the projection (if not open in the middle) .. and one can in any case preferentially project more light in inner region of knobs so one can more easily and rapidly discern their position with the camera.

Note that one can also project more Infrared when something happening is detected, such as a finger touch or knob turning. The human doesn't see the increased light intensity, but the sensor does.

### Figure 5

Let us now reconsider the screen of the above examples, which for example could employ a touch screen type just discussed, or other touch screen types known in the art where appropriate

On a touch screen display, it is desirable to have tactile indication of where to touch, ideally so one would not have to take ones eyes off the road or other activity (for example watching for enemy aircraft in a military sense, or watching the stove inthe kitchen in a home sense). This ability can be provided in three ways;
Relief details permanently on the screen surface which may be interchanged when the screen itself ( or an overlay thereon) is changed;
A movable and/or removable relief finger guide, and
Programmable acoustic wave based force feedback sensations.

The use of such relief details was mentioned above relative to the above figures and is further elaborated on here. For example consider in fig 5a , relief details on screen 400 comprised for example of 6 indents (circular depressions) 401 to 406, and a further detail comprised of a thin horizontal ridge 407 sticking up 0.003 inches (0.08mm) for example from the surface of screen 400.
Alternatively the ridge could be a groove, and the indents, bumps. In addition the screen could be flat, raised or indented portions provided on an overlay member placed over the screen, either wholly covering it, or only in part- for example on the drivers side. Typically the surface most outward toward the driver is made diffusive to scatter light to the driver and other passengers from this outer surface, but it is not necessary to do so.

The indents can all be alike as shown, or if it is desired to differentiate them as it could be if they were to indicate numbers of a phone dial for example, the indents can be made of different shapes or sizes, or curvatures, depths, textures or other characteristics that impart a different "feel". For illustration a further indent 408 has been shown to be square in shape to enable it to be so distinguished, while indent 401 is shown to be shallower for an indication.

In the automobile application, the screen/control surface 400 may optionally be sloped at an angle with respect to the vertical, to increase surface area (for a given height above the floor in the passenger compartment) and to better provide a resting location for the hand or finger of the driver or passenger in the operation of the device. In some other applications, the screen/control surface can even be horizontal.

The relief details are aides to facilitate the driver finding the correct location on the screen for input action and/ or as locations to receive tactile data feedback as to certain variables via force sensations. As noted previously, the use of transparent local protrusions or indentations such as 401 make finding their location on the screen possible by feel, while still allowing image projection on the screen at their location. Generally, it is preferable that the protrusions or indentations be small in height or depth, on the order of 0.020 inches (0.5mm) or less for example (with correspondingly small slopes if a smooth indentation), such that minimum discontinuity to the eye occurs when images are on the screen at their location. If it is not needed to display images with good visual quality at these locations, then the grooves or ridges can be anything desired.

In Figure 5a, two optional knobs are also shown, 423 and 424. In the configuration shown, these represent temperature and fan speed respectively. When reconfigured, one might alternately use the TEMP knob for distribution of air, and alternatively select the temperature for example with a sliding finger gesture along ridge 407. There are many possibilities, most all programmable.

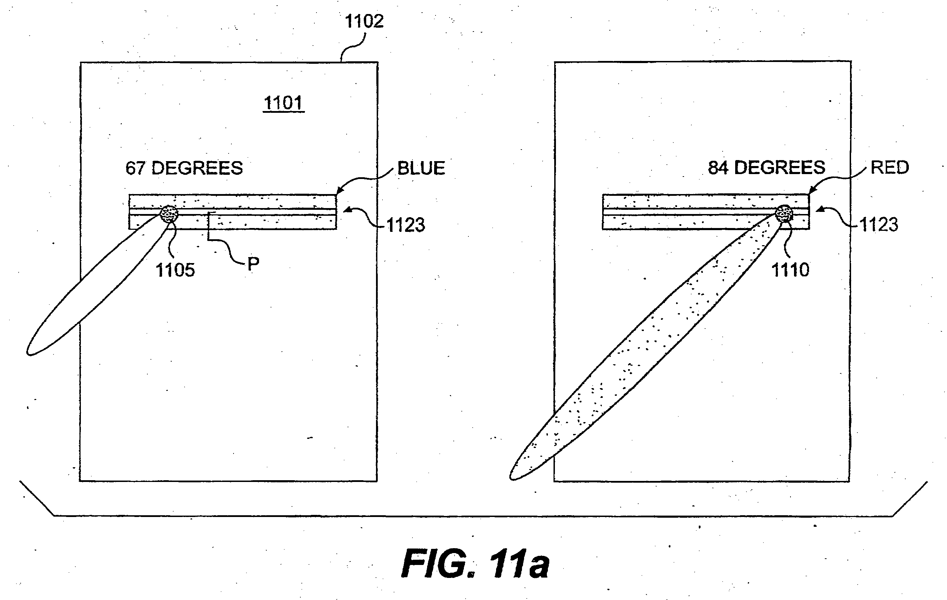

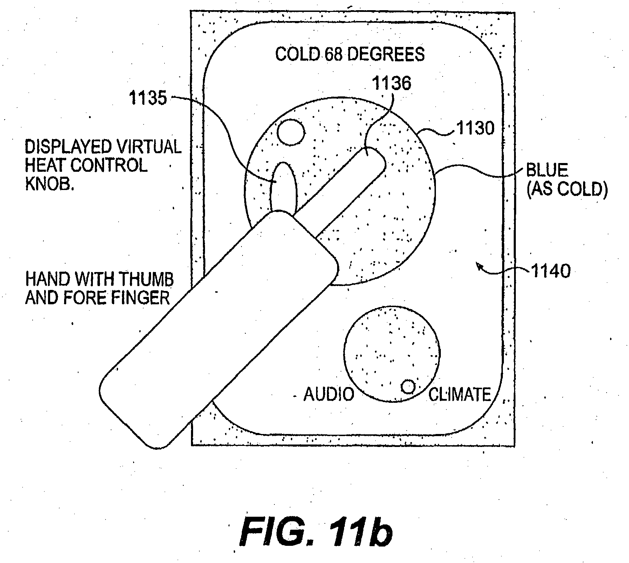

A heat bar, as shown in figure 11, or other graphic can be projected along a ridge "line of action" such as 407. In this case the user just moves his finger along the ridge (or alternatively a groove), and his finger position is detected as disclosed. The projector program in the computer (not shown) is adjusted to move the projected virtual slider 436 along the bar as he does so, while providing an appropriate heat control signal to the vehicle. Added information, such as the actual degrees setting arrived at can be shown as well.

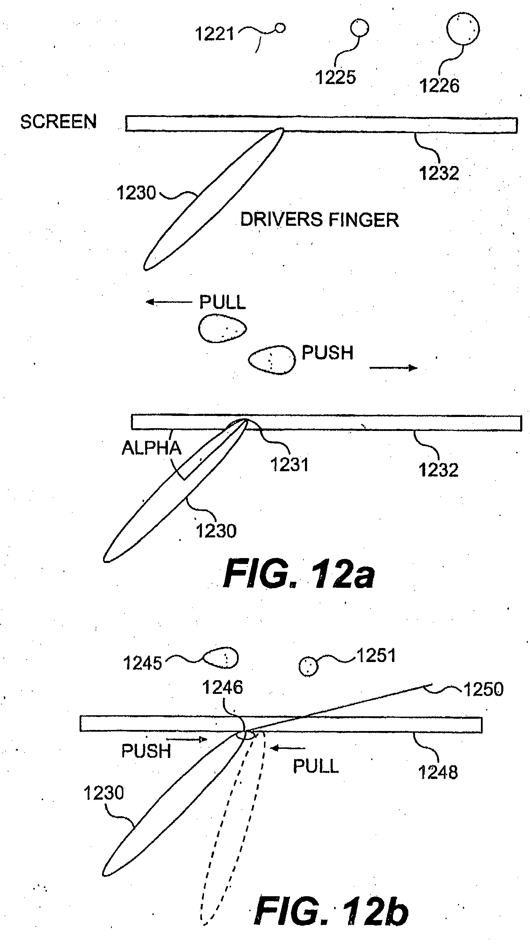

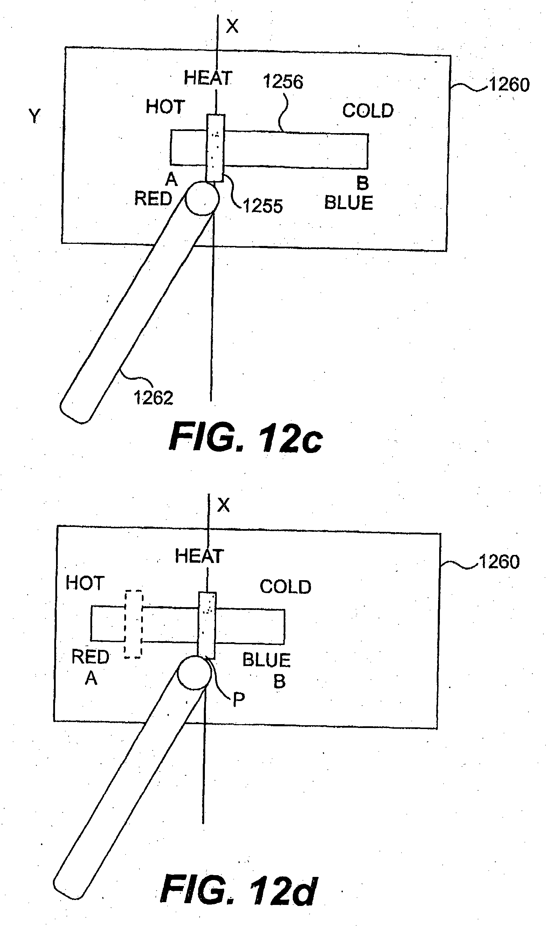

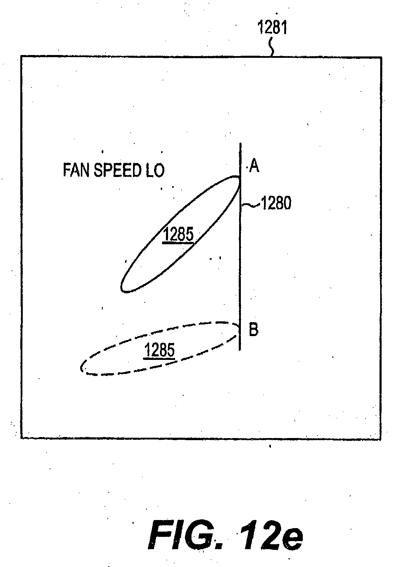

The line of action, if next to the selector indent in this case, can be reached with an almost continuous motion of the finger after the selection is made. Alternatively, such heat bar gestures can also be done free form without the ridge or groove for guidance, as is shown in figure 12.

Let us consider another example, with the same basic screen. The screen of fig 5a can also use Indents 401-406 for locations of projected station call letters projected in the indents to correspond to radio station presets. Optional Knob 423 can also be used to tune the radio to a station, while knob 424 could change the volume. Finger touch along Ridges 407, 418 and 419 could control fader, balance and tone, as another example

In this case, and in this mode, the indentations 401-404 are used for function selection. Thus if the driver changes the function of the screen from indents representing radio stations (such as 5b) or phone dial numbers to driver input functions, and his finger went over to touch the indentation in the approximate zone near indent 402 (which he had learned where it was related to edge 415 and 416 (at right angles) of screen 411, he would know by experience he was touching heater speed, controlled along line of action 418, for example. If he moved his finger vertically upward to the next indentation further up, 401, he would know that was wiper speed controlled line of action 407, and so forth. He would not each time have to look at the screen- even though he could do this as lettering would be projected on or near those tactile features to assist him. The lettering could also be exceptionally big, if he had difficult with near vision, often the case with older drivers who are far sighted.

Alternatively, two (or more) sets of indents could be provided for example, one set along the left side of the screen for selection of features, and the other such as 425-429 on the right side for example, for radio presets. It should be noted that voice signals or knob selectors can also or alternatively be used for function selection.

It should also be noted that of the indents 401-406, it may be desirable that under some computer display and control program regimes that only one of the indent "buttons" might be illuminated. In other words the driver should only hit that one, if he wants to. The ability to selectively illuminate with information particular tactile features on the display is very useful in
helping the driver cope with the amount of information it is possible to display and act on.

Similarly, if the driver's finger found ridge 407, (which might be one of any number of ridges, or grooves, such as groove 410) he could know from the displayed information "Heat" that the ridge 407 was for example heat temperature, and he would slide his finger along the ridge in the x direction to the right accordingly to indicate how much heat was desired, for example. If he wanted wiper delay, he could slide along another ridge (not shown) if this was projected by the computer controlled display as being for wipers. In either case, all functions, once learned, could be found by feel. Ideally this would be possible by a very quick observation if one was driving a rental car for example.

Material change rather than physical relief can also be used to delineate a region of interest to the users touch. For example, consider strip 412 in screen 400.
This strip (or spot, or other shape) may be of softer or more elastic material, inserted into a hard screen material, and ideally having reasonably similar indices of refraction, so as to not disturb the projected images. One example of quite different touch materials would be a strip of latex inserted into a Lucite screen.
This can clearly be felt, both in texture and in hardness, yet images can be projected through it.

Alternatively or in addition, strip 412 may be for example may be a part of the screen 400, made thinner (by molding or machining etc) than the screen around it, such that when pressed it deflects locally, providing another feeling which can be transmitted to the driver, indicative that hisfinger is located on strip 412. In addition, it is contemplated that different signatures of vibration under excitation by the piezoelectric or other actuators will be noticeable also at the strip 412 in comparison to the surrounding screen.

Fig 5b illustrates an arbitrary image such as a backing up image from a rear mounted video camera or in this case a map 440 projected on screen member 400 of figure 5a however, at another point In time. Image 440, in this case a map of Rock Creek Park in Washington, D.C. is projected as large as possible, and thus overlaps the indents, with the latter providing (if of relatively small slope or depth) minimal alteration of the image as projected. In addition the image is caused to "wrap around" the annular ring knob 442 used in this instance for map control which is fixed on the screen. Such images can thus be temporarily displayed to the driver in the largest possible manner, without impacting the control features of the invention. This is a huge advantage where space is limited, as it is in automobiles and military vehicles as two important examples.

As illustrated in fig 5 above the provision of tactile cues on a display screen used for automotive control activities allows the user to "feel" where he should touch the screen, as he searches tactile-ly by scanning his finger over at least some of the screen the surface. When he touches it, he can signify that he has reached the point or value desired by leaving his finger there for a dwell period recognizable by the computer. Or he can use other means, one means being to push in on the screen, which can be sensed, for example with the piezo electric force transducers described elsewhere in the disclosure, or by electro-optical analysis of his finger indication.

The driver may also touch the screen and move his finger along the screen, thus also indicating that he has selected this function, and then let his finger dwell or push In. For example sliding his finger along ridge 407 of Figure 5b as the heat bar is displayed, to indicate different desired heat settings.

Alternatively, he can dwell and then move. In this case, as he first touches the point this one of several possibilities can be that the display presented on the screen, provides an indication of a state or setting presently active, with that setting represented at the point touched (e.g. a heater blower on speed #2). Then as he slides his finger away from this point in one direction or another, the display can change accordingly to show the new setting (e.g. he moved his finger to the right to higher values, such as speed #4).

While smaller ridges have been emphasized so as to not disturb the displayed images, allowing the display to be used for general image presentation, larger ridges or grooves may be used for the convenience of the user. Particularly of interest for driving are large ridges acting as a sort of shelf in the horizontal direction, say for example 0.2 inches high, which can serve as finger resting places as well as provide lines of action for inputting data commands. Such shelves will distort images projected thereon, but in some cases this can be mitigated by either projecting black lines where the ridges are, or having the shelf be itself opaque, or be slid-able to different locations on the screen or removable out of the way when desired (see also fig 6).

The touch screen and related aspects of the invention open up new vistas for adding useful functions for improved control or enjoyment. And the completely programmable nature of the device, provides a future ability to insert new devices

However, it is often difficult for persons to learn how to use the functionality deliverable by the invention. This is particularly true if the person has just gotten into a rental car, say. Illustrated a useful example, wherein the instructions for operation of a device (e.g. the heat control knob and associated computer display screen or screens) is displayed right along with the device on the tactile display or touch screen of the invention.

For example, consider that in employing the apparatus in fig 2 for example, brief written or graphic instructions for use can be down loaded from computer to the image projector or other display mechanism and displayed right next the knob or slider orwhatever is desired to be used for control of a function. This makes the understanding much easier, than for example the simple storing of a manual in the computer for later presentation. This is particularly possible when the display is large, and the instructions, and the controls easy to see.

For example, as the person touches the knob, the touch can be sensed, and the instructions projected if desired, assuming an instruction mode is activated in the control computer. The instructions and (or other control device) are preferably large enough so that no difficulty is encountered seeing both together in one view.

This aspect of the invention is also very helpful with often complex functions. For example, when the knob 423 is switched to Temp as in Figure 5a. A thermal bar graph display for example is activated which then itself is energized and used to set the temperature. The instructions then for this function may also be displayed to allow the user to at all times be informed as to what is desired.

It should be noted that because the display and tactile physical selection or adjustment means providing control functions and feedback are both programmable, one can have programs which vary by driver. Indeed, one can even take your program with you, for example if renting a car having a similar display and a data input device for your to enter your program in (e.g. via a CD or DVD Rom for example using a version of the CD player of the car). Or your program can be downloaded from remote sources such as your home computer or the internet (where a selection of programs might be found, say on a DaimlerChrysler web site)

The Sequence of actions undertaken then using the example in one preferred version and aspect is:
glance;
touch;
move;
confirm ( tactile-ly and / or visually - much like today's Instrument Panels-
but generally with even more tactile feel relating to the position, and larger lettering which can be better seen at a glance).

Alternatively, one can do it entirely by feel, using the techniques described herein where the programmable acoustic source is used to input to the user the data needed (even to include the initial starting point of the knob position such as a short pulse burst, with a long delay until the next one to indicate a first position, or the end point, which might be three short pulses with a long delay , to indicate position 3 for example. Other pulse frequencies or codes could signify different programmed knob functions if desired, like wipers or heat, or whatever. Or voice can be used as discussed, or combinations thereof.

Also gestures can be used, such as hand or finger position or movement, as disclosed in my co-pending applications for example. The gestures can be on the screen as touch, or detected in front of the screen, or in the passenger compartment of the vehicle.

It is also noted that electro-optical sensing of commands provided by a finger touch or features of physical tactile devices such as knobs as described can be usefully accomplished in many cases by change detection, accomplished for example by subtracting images in a quiet previous state (i.e. static) from instant images. Both finger touch and knob turning represent image change which can be identified. And the region, and magnitude, of change pinpointed (the identity and region being linked tin the computer to the data projected and/or the force signals provided).

Its also noted that one can calibrate the camera system each time a measurement is made as well, if the movement is known- e.g. a knob turn to the next position with fixed detents provides a known rotational degrees of movement to one or more markers or other knob position related features. In addition the markers on knobs or screens which are in fixed relationship to each other (and known to the computer) can be used to correct changes in magnification and alignment of the camera system. This is useful too when screens and overlays are interchanged.

An elongate groove such as 410 in the screen (or an overlay thereon) may be illuminated with data in the groove or adjacent to it relative to the value to be selected by running ones finger inthe groove. This may be as simple as an on-off function, or the selection either analog or digitally of an number of magnitudes of a variable, such as temperature, wiper speed, radio volume orfrequency, etc.

This groove example has certain similarities to the multifunction groove
switch of Butler et al referenced above. However it is part of a programmable display, rather than a fixed function display. In addition, the position of the finger in the groove may be sensed without requiring specialized switches, and the groove when not used as a selector, allows a variable display to be made in the same region as the groove. Furthermore, the groove can not only be a straight groove of constant depth as disclosed by Butler et al, but may also have variant depth, and/or variant contour side walls which can indicate positions along its length indicative of a variable of choice. And it can be part of a two dimensional groove arrangement as well. The screen containing the groove is also able to communicate back to the user by the force feedback methodsnoted.

For example as shown in a side view of figure 5c, the groove 450 in screen 451 is contacted by finger tip 455, shown at the left edge 460 of the groove, which could represent an "off" position. For example of a function, when the driver moves his finger to position 456, (shown in dotted lines), this new finger position can be sensed by the machine vision and computer system as an "on condition, for example.

The groove can also be for example a different configuration at different points, which can also lend itself to provision of a plus/minus type of rocker switch, commonly used for "Seek" functions on car radios or CD players. For example, in fig 5d consider front view of a different kind of groove 470 in screen section 471 of this nature, illuminated by projected image from an image projector not shown to illustrate plus and minus positions. The illuminated indication can be desirably in the groove and/or next to the groove (shown). The operator clearly can feel that the region to the left of the narrowest portion 475 at the groove midpoint is a minus quantity, and the region to the right is a plus. Note that this can even vary the rate of change, by having the system speed up movement as the finger is detected closer to the end points of finger travel in the groove, 480 and 481 respectively.

It is noted that groove depth may also or alternatively be encoded to allow a "Feel" of position to be gained, for example the depth of the groove at the end points 480 and 481 can be deeper than in the center (or conversely).

The indication of being in the bottom or top position is detected by the electro optical sensor (e.g. TV Camera) and can be signaled by sound using the computer such as 120 to drive a loudspeaker with a high or low frequency sound for example depending on which side of the groove one is in. Or as taught above a force pulse or vibration can be generated in the screen to allow the persons finger to "feel" the indication, for example two states of pulse frequency corresponding to either a plus or minus seek state.

In a similar vein, a cross shaped groove such as 485 in screen 471 can be employed to allow a driver to select rear view mirror or seat position functions for example in two Cartesian axes x, and y, plus and minus from center.

Figure 5e is an alternative elongated relief member example, in this case a pair of ridges 488 and 489 rather than a groove, which illustrates other position coding methods. Along the edge are bumps such as 490-494 which can be felt to indicate the position of ones finger along the relief member. In this case the
bumps can be coded if desired, as shown the middle bump 492 has one bump, while bumps 490 and 494 at the plus and minus extremes have two close spaced bumps each.

As noted previously, a desirable aspect of such ridges, grooves and the like, is that in linear form they can provide a "line of action", so to speak, which the driver can trace his finger along, in the example from cold to hot, as one goes left to right. The ridge or groove can be under or on top, or surrounded by the display as desired.

In fig 5f, a more sophisticated situation is illustrated wherein a plot of stock prices for the day has been displayed (in this case in the same region as the previous heat control, as a stock price selection has been made), and the driver with a quick glance can tactilely slide his finger 495 along a horizontal tactile ridge or groove 496 to the point of the days trading (say 4pm near the right of the chart) that he wants more information on. Such lines of action" can be vertical as well as horizontal, and more than one can be on a screen (e.g. 497 in the vertical direction). And as disclosed above, the line can be on a screen overlay which may be interchangeable, to accommodate different purposes. Today, such data is generally prohibited by law from being presented to the driver. It may be possible to do this in a manner which can be safely accomplished.

While illustrated relative to stock prices, the graphical information however displayed could be fuel economy for the trip, or tire pressure or other things relevant to the vehicle operation too.

It is once again noted, that the switch or seek functions of figure 5 preferably can be sensed with the same machine vision system used to see knobs and other functions on the screen, or the finger position at other points on the screen, either free form on flat surfaces, or at positions with tactile relief features. And the finger
can be on an overlay over the screen, which overlay can be more easily changed.

### Figure 6

Figure 6 illustrates force sensing or contact closure means to determine that a touch has occurred, and associated vision processing steps. In the case, for example, where machine vision is used for direct sensing of touch as disclosed in several examples herein, it may be desirable to combine a force sensor or other sensor with the machine vision based touch sensing
in order to tell that a touch has occurred. This acts to guard against extraneous indications of touch, which could in some cases occur in unusual lighting conditions or finger or hand movements in front of the screen.

For example consider figure 6 illustrating a curved screen control surface 501 having for example accelerometer 502 located thereon which can be used in conjunction with suitable signal conditioning 503 known in the art, with signals processed by computer 505 to sense that the finger 510 has hit the screen (with a force significant enough to register a momentary acceleration signal). This signal can be used by the computer 505 to tell the camera (not shown for clarity in this figure) to read. If more sophisticated processing is used, from multiple accelerometers, one can even predict the location of touch from their data. Or one can use both the machine vision and acceleration data, to predict touch location.

Acceleration may however, not provide a satisfactory indication of light touches which produce little shock to the screen member. In this case other alternative sensors can be used to indicate presence or location of touch, for example resistive screen elements (akin to a low cost matrix touch screen), or rigid body motion detection of screen/control surface displacement upon touch via contact closures. Alternatively, force or strain sensors responsive to pressure of touch upon the screen can be employed, such as 340 in figure 4A, or 910 and 911 in figure 9.

Let us consider a simple example illustrating another approach, that of a contact closure to register touch on display screen 501, which is pined by pin 520 on the top to instrument panel 530. Under quasi static urging of the vehicle driver's finger 510 the contact 535 on the screen/control surface is forced to move, against spring 540 toward contact 545 on the instrument panel. When contact is made, a circuit is completed, providing a contact closure signal 546 to computer 505 which then reads the camera output to determine touch location. This can be either a finger touch such as that of 510, or a grasping of the knob 555 by the driver, who pushes in at the same time to activate the knob - in this case because the computer knows that the knob or a finger is to be looked for, and when seeing, by analysis of the camera image (such as 210 in figure 3 for example), the movement of the knob then knows this is the variable to be expected.

If the spring is sufficiently stiff, the system can be used a bit differently to sense purposeful push in of the knob, for example to select data displayed. In this case the fact the knob was moved would first be registered, and then when the push was made the instant position of the knob would be used to select the data.

The contact 545 and spring 540 combination can be replaced by a piezo electric force sensor with suitable signal conditioning which is issued to sense an increase in force above a preset or other threshold as an alternative to contact closure. This is more complex, but has the advantage of less movement of the screen being required. (e.g., 0.02mm vs. 0.1 mm), making it less noticeable to the user. In addition the amount of push inward within some limited degree of accuracy (e.g. one part in 5) can be sensed by the piezoelectric sensor and the magnitude of push be used for a control function. Or one can use the push that comes with touching the knob, to identify that the vision system should now look at the knob region and anticipate some further action. It should be also noted that a certain force signature can also be sensed, to indicate for example that a knob push function has been initiated, rather than a finger touch. This signature analysis can also help discriminate against errant touches as well (e.g. by a fist). Where desired pins or other supports 520 can be replaced by further piezoelectric sensors whose outputs can be combined in computer 505 with that of the other sensor to give a better signature analysis and in some cases even an idea where the touch has occurred

It should be noted that when the knobs such as 555 and virtual push icon locations such as those of radio presets 560 are located near the trigger switch contact closure 545, the signal is easier to detect than when the finger touches a point near the fixed pin supports.

If desired, a second point may be pined at the top as well, located out of the plane of the paper. This makes a three point mount including the contact point.

In this mode and others described herein, when a force or current or other touch condition is detected, the system is programmed to look, minimizing the chance of false signals due to unusual lighting conditions. It is also noted that one or more modulated break beam type LED and detector pairs external to the screen can be alternatively be used to detect the touch presence, as can cameras external to the screen In the passenger compartment

### Figure 7

Figure 7a illustrates piezo electric or other mechanical wave generation means such as a vibrator of the type used in pagers and able to pulse with varying pulse widths capable of providing a programmable tactile definition of a control state or response to operator inputs, or changes in control states. Typically such waves are in the acoustic frequency range operating in the range of 50 hz or more and are generated in the screen material or on the surface of same so they can be felt by the user touching the screen, an overlay in contact with the screen, or operating controls attached to the screen such as a knob. An optional sound based response can also or alternatively be provided, such as a loudspeaker generated "Click" sound.

The signal provided can be a function of position or change in position of a tactile adjustment or selection detail, e.g. via a knob or other such device. Or the force response can be in regard to location of a finger touch in response to virtual or other data on the screen. And the it may also provide a force type input to the operator of current or future states of various systems or settings, or to indicate that an event has occurred, including random events such as an alarm.

In the basic arrangement, as the driver's finger 610 touches the screen 613, the touch is sensed by suitable means, (generally by not necessarily optically based, such as camera and computer means as disclosed herein) at the location x,y in question, and an acoustic wave 615 is accordingly generated, for example by vibrator 616, or alternatively (or in addition) by transducer 620 exciting the screen material 625. The acoustic wave may be alternatively generated by piezo-electric transducers at the corners such as 340 etc. in figure 4a. The waves are generated as a result of comparing in computer 630 the touch location x-y on the screen (for example determined with camera 627)with the screen projection data file 628 used by the computer to drive the display projector (not shown) to determine what information the users touch has registered, if anything.

Information which should be communicated by a feeling sensation to the users finger 610, is then determined by software in the computer, and a suitable acoustic wave is generated and subsequently felt by finger 610 which then may or may not engender another response by the user, such as moving his finger to a new location such as P' on the screen/control surface.

As shown in side view of fig 7b it should be noted that the acoustic wave can be generated in order to excite a detail connected to the screen, such as a knob, 631, secured for example by pin 634 to the screen/control surface 613, and the force felt by ones fingers, such as thumb 633 and forefinger 632, through that detail (e.g. while turning it), as opposed to a finger touch.

In another mode, the degree of touch can be used to control the amplitude or the frequency or another characteristic of the acoustic excitation to signal to the user something for example related to the force of touch. In other words as one presses in more, the degree of pressing is determined using for example the method of figure 4, and the signal fed back can be increased. This would typically be in conjunction with a suitable change in the projected image concerning this input as well.

Note that the signals driving the transducers exciting the screen (or tactile devices thereon such as knobs) can be alternated In nature to create different modes of excitation discernable by the user. For example as one grabs a selector knob and begins to turn it, the excitation can indicate what position of the selector was on. For example three pulse bursts 0.1 sec. each, could indicate the climate control setting. Two bursts alternatively, might signify the audio system.

As shown in the front view, a bar 640 is projected on the screen 613. The person moves his finger 610 along the bar, in this case from top to bottom (LO to HI), for example to increase the speed of a heater fan. As the movement takes place the piezo-electrically driven excitation pulse rate changes from a low of 100hz, to a high of 300hz. Thus by feeling the pulse frequency, and when, if desired, possibly glancing at the display, the driver can determine the approximate fan speed (words for which such as Low or Hi can also be displayed).

As noted the force generating transducer, in one example, can be located at one or more corners of the screen in order to excite the screen as a plate (and so excite any finger in contact with it or a knob, for example, secured to it). Or the transducer, such as 620 can generate shear or bulk waves in the screen in order to effect the function.

The force feedback can be prioritized. For example, in one case it might be that the user didn't like the force feedback, and it could be turned off entirely. In this case the user could augment the visual presentation of data, using the conventional control details, together with relief based tactile cues, and if desired, voice to effect control functions.

Force feedback may be used as a primary feedback mechanism, for those so inclined. It is contemplated that for such persons, the adaptive feedback of much of the vehicular operational data could be programmed into the system and learned by the operator. Or the operator could chose his desired settings for each situation, and teach the system those. For example, for every touch of a knob or the screen some kind of desired and taught programmed force feedback
would signal the user that the certain knob or point had been touched, and the state thereof. The user could activate the function as desired- for example indicative of his finger in the middle of the screen. He can then teach the system *in* this case (via keyboard entry using an optional plug-in keyboard, or otherwise) that 100hz vibration of the screen is desired for this condition, *in* general. Or it might be that he would program this only when heat mode has been selected.
There are many possible permutations.

Note that the benefits of tactile relief guides for finger movement and the programmable force feedback just described, can in a sense be combined, which allows one to achieve a tactile guide *even* on a flat screen with no relief. Using programmable force generation, you can be guided to keep your finger in bounds within vertical limits in moving across the screen on a virtual displayed horizontal bar for example. In this case, in one mode, the computer is programmed such that when it senses your finger in the correct location vertically vibration amplitude is programmed to be maximized. That is, when you feel the screen vibrating maximally, you know you are on the projected bar (such as depicted in figure 11 a). As you stray off it up or down however, the vibration amplitude is programmed to be rapidly reduced. And in one example, as you move across, the frequency (as opposed to amplitude) of vibration is programmed to change, for example increasing the temperature from low to high heat condition as you go from right to left. By providing both frequency and amplitude cues, one can navigate the control surface with minimum visual attention.

### Figure 8

Figure 8 illustrates examples including interchangeable screens and overlays containing control surfaces, either full screen size so to speak, or partial. It is once again noted, that the same machine vision or other electro-optical sensing system may be used to determine position or movements of multiple knobs and othertactile adjustment and selection details on the screen, or the drivers finger position at points on screens with flat surfaces, including those with tactile relief features.

The screen/control surface alternatively can be a plain flat (or even curved) screen, covered by an overlay member containing the tactile details and features desired. Such an overlay is typically transparent and can be more easily changed than the screen itself in many instances. When the overlay is used, its outer surface (facing the driver) is preferably diffuse, with little or no diffusive properties incorporated Into the screen member in the region of the overlay.

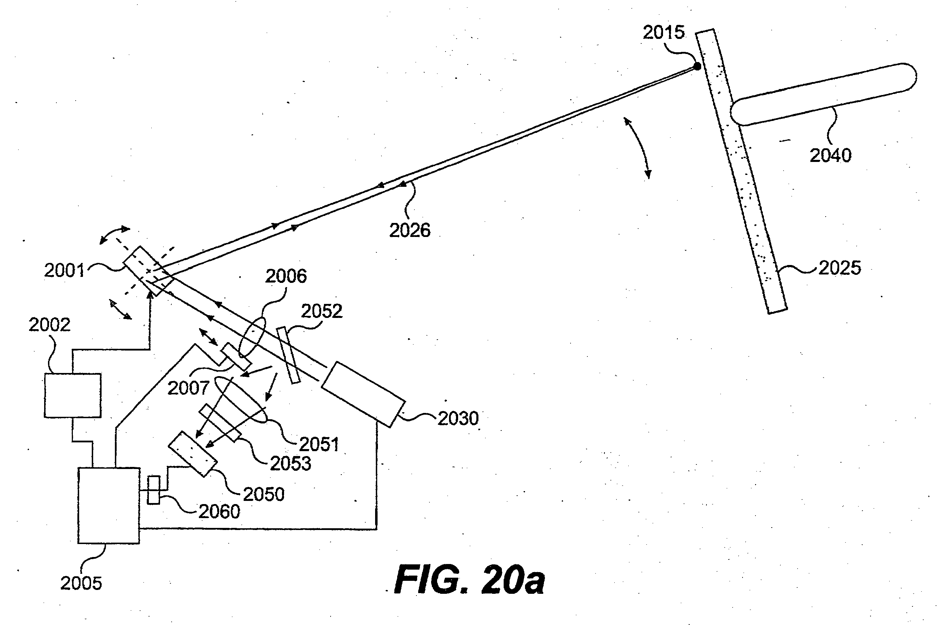

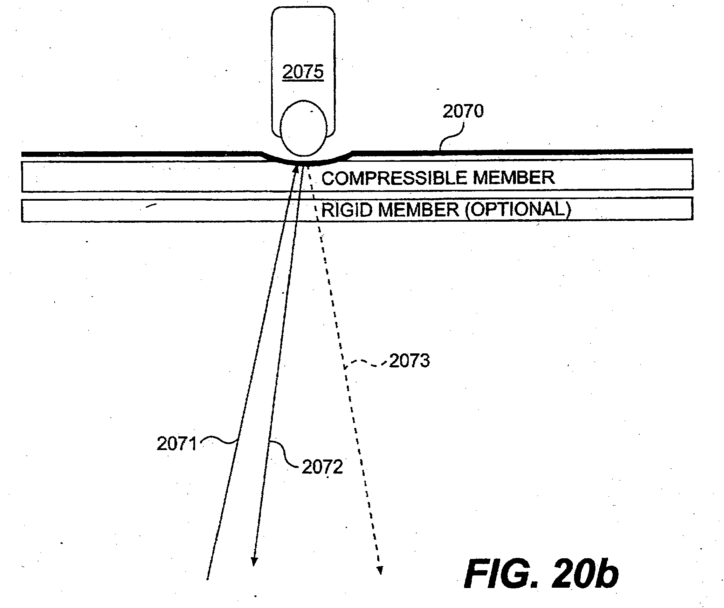

In one example the complete screen surface such as area 155 in figure 20 can be interchanged to suit. In another example, perhaps only the region of *the* knobs would be changed. Or for example, a particular side region of the display could be overlaid with a replaceable overlay. In this case one might put the overlay in a region of the screen which had no relief detail of its own, putting any such detail or knobs on the overlay for example. And you can if desired see knob position thru the screen and to the overlay location.

Other ideas for interchangeable screens and overlays will become apparent in the following discussion. For example, one can have a rear projection based touch screen display and control surface, equipped with interchangeable screens or cover plates overlaying the screen of the type just described which have specialized physical devices for interaction with the sensing arrangement used. In this manner one can actually add, in an interchangeable manner, new screens or overlays thereon to your instrument panel which can be used for different purposes. This can enable one to do tasks by feel not otherwise possible, or to tailor the instrumentation to suit individual drivers, or to provide different functions to suit different travel regimes or business purposes. The overlays can have printing on them, data projected on them, of variant material and so forth.

Alternatively, one can optionally provide screens and control surfaces for completely different purposes all together, which may even be unrelated to the vehicle and its transportation function. For example, in a military context, the screen and its tactile details may be easily changed, (and if desired, all software relating the projection and sensing associated therewith) in order to provide a fire control screen for an anti-aircraft gun mounted to a Humvee vehicle. When that function is not needed, a vehicle control screen may be put back in place of the gun control screen. Some basic critical vehicle functions could be separately controllable

In the case of a rear projection system, the screen can be easily replaced or interchanged with out damage to the optical system, especially if a protective window is provided to seal the optical system when the screen is removed. This glass window, which adds an additional optical element to the system, may be anti-reflection coated to minimize unwanted reflections.

Consider the case of a tactile display/control surface of the type disclosed in figs 2-5 above using optically sensed selection and control details indicative of the position of various control items used. In this instance the control items are able to be interchanged. A group of levers could be on one screen, knobs on another, sliders on a third, and so forth. Or one screen could have markings on its face for email and stocks, with sliders and knobs to suit, etc. Alternatively such markings can be projected on the screen. Or an opaque area of the screen might be desired for example, where permanent writing or pictographs or diagrams could be employed.

The tactile control of the computer system used can, in this manner, be customized not only by the user in general, but for specific purposes - what I call a "Mission specific" tactile and visual input and output. This makes it still safer by providing just the right tactile controls for the application at hand. Such an application could be a simplified screen and control surface for a non-technical user, who borrows the car. Or a screen related to a specific project, for use on a long trip. Generally it is not just the screen that is interchanged, but the software for generating and reading the display and its controls as well. The software may be permanently stored, or inputted by CD ROM or downloaded from external sources, to name a few possibilities. A mission specific screen or portion thereof is particularly interesting in military vehicles, where one might indeed set-up a particular Humvee or other tactical vehicle for a specific mission, with control layout and software to match. A knob on the screen of the control in this case might be specific to positions representing other team members vehicles, or air support, or whatever.

It is possible to have screens and control surfaces, where only a portion of the screen or overlay thereon is changed. To illustrate the case of an overlay, consider fig. 8a which shows an optional removable (and interchangeable) tactile screen overlay member 804 (dotted lines), in this case a piece of plastic shaped like a 3x5 inch card, and containing a knob 805 (also dotted lines) as described above whose position can be determined (optically via camera such as 801, as disclosed above , or otherwise). This overlay is placed over a transparent screen base member 800. In this case, the region of 800 on which card overlays are to be provided is preferably not diffuse, such that the card itself can contain the scattering properties to scatter light such as 808 in order to diffuse the information projected by projector 810 to the driver. Alternatively, the screen base member 800 can be diffuse, and the overlay transparent.

This card member can be inserted to provide different tactile relief areas or to change the function of the tactile portions, or for example to include, as illustrated in this case, an additional knob as a tactile physical selection or adjustment means. In one example, the card member can be placed in slot between guides 816 and 817 (which could be dovetailed to assist). Data concerning the function of the knob in this particular case can be provided to computer 820 by any means desired, including downloads from the internet, magnetic or optically encoded data on the member 804 (which can in some
cases be read by the camera 801 from behind, thru screen 800) or whatever. Note that the same camera 801 can be used to see other control functions at different screen locations as disclosed above, assuming sufficient resolution.

The card member 804 as well can have printing on it, and may be transparent in areas desired to allow data from the display behind it to indicate data relating to the knob 805 position or other variables. The use of data permanently printed on the card and visible to the driver might befit a mission specific or one time use card, for a particular project, or a particular drive to work. Note that the card could also correspond to just one function, like an internet music source selection card, that you could use just for this purpose, removing and storing it when you wanted to put another card in, to free up the display area for other information, or other one time use cards. Such cards have a very interesting use as single use, or mission specific controls for certain purposes, and provide additional freedom in choice of tactile physical selection and adjustment means.

It should be noted that an acoustic wave force source such as 835 providing programmable feel, can couple to this insert-able card member.
And the screen can be diffuse, with the card transparent. Or in some cases the overlay card can have a diffuse surface, with the screen transparent in the region of the card. It is noted that data on the back of the card can be read by the camera used to see the knob or finger data, in order to identify the card, or otherwise input data to the system. In this case the degree of diffusion of the screen behind the card should be sufficiently small to allow accurate reading of the data through the screen.

This overlay card can employ ridges, as just discussed for example In fig 5, or can actually include various real knobs and switches.

The interchanged portion, whether screen or overlay, can include marks such as 840 and 841 on screen 800 which can be seen by the camera 801 and identified in the camera field In order to align via alignment algorithms known in the art the location of the screen or overlay in the computer, to allow the displayed data to be corrected for slight errors in miss-positioning While it is desirable to have relatively precise location devices such as dovetails or dowel pins in order to minimize any alignment correction required, computer alignment correction can allow even Velcro to be used to attach a temporary overlay for example.

Figure 8b illustrates another example in which the whole screen and control surface is interchanged, for example to provide an alternative to that of 155 shown in fig 2d. In this case the interchanged control display 850 has different tactile touch points such as knob 851, groove 855, and ridges 860. By using virtual controls on this screen completely different arrangements of tactile relief touch locationscan be provided. Forexample, onescreen could be interchanged which had controls specifically for phone connections, in which a
numeric key pad of indent buttons was provided, as well as let us say 3 rows of 5
positions containing ridges next to which persons names could be displayed, directory fashion. These could be felt by feel after a glance for example.
Alternatively when not needed for phone communication, the screen could serve to display video images, and the control ridges and grooves serve purposes related to vehicle systems.

The software can instruct the the driver rapidly what functions may be provided, and the driver learns quickly by feel and sight where the points of interest are for interaction with the control system of the vehicle.

It is noted that finger 848 touching the overlay can also be sensed by the camera ofthe invention looking through the screen and the overlay. This can generally be accomplished if either the overlay or the screen is transparent inthe region touched (with the other being diffuse).

### Figure 9

The figures above have all illustrated projection display based examples of the invention, which are generally preferred.because ofthe ease of sensing physical control details, and other advantages pointed out herein. However, in
figure 9 a conventional LCD flat panel display based version is illustrated containing some of the touch screen aspects ofthe invention. Inthiscase LCD display isequipped with an overlay containing tactile reliefdetailsofthe invention and, utilizing conventional touch screen technology (which alternatively or optionally can be employed in the other examples as well, butisnot commonly available for curved surfaces). The relief details may alternatively be provided onthe screen ofthe LCD display itself.

Consider In figure 9, an overlay member 901 having ridge or other small protrusion 902 on its surface, is supported by 4 piezo- electric based force transducers at the corners such as 910 and 911, over LCD flat panel display 920 with screen outer member 921. The transducers allow the xy location of point of touch to be determined, by comparison of force signals using computer 915 (see for example, DeCosta et al USP 4,355,202 for an example of such an arrangement or Flowers et al., USP 4,918,262, for an example employing a somewhat analogous wheatstone bridge based strain sensing arrangement).

The use of transducers 910 and 911 (with similar transducers at the other corners) allows a degree of touch proportional to the force of touch to be determined by summing the transducer signals in computer 915 (equipped with suitable signal conditioning and data acquisition devices not shown), allowing a selection of a given state to be made by pressing in at varying degrees of effort on member 901, for example with finger 905. (called elsewhere herein a "Z Axis" input). This is particularly easy to achieve, and can be added to the basic rear projection systems above, also allowing easily interchanged screens. Such systems easily can sense a dynamic change, which occurs by pushing at what ever point one is at on the screen, either the push in of a knob, or the push of the screen with ones finger.

In addition one can sense not just a switching function (pushed/selected or not) but also sense the amount of push exerted by the driver or other user of the device. One such technique is to measure z force into the plane of the screen at the touched or gripped point, which then can be used give the desired input - what ever It was. One example would be if the particular input corresponded to a heat knob, whose push Into the screen was interpreted to the blower speed desired.

In another example, a TV camera external to the display may be used to identify that the driver has touched a particular screen location (e.g. where an indent exists, and/or projected data exists), and it is desired not just to sense this state, but further and optionally to sense the push into the screen at that point.

In an optional case, the transducers just mentioned are also able to be excited (much as piezo electric sonar transducers can both send and receive) in which case they can be used to generate a programmable force signal to the users finger as well, in the manner of fig 7.

The ridge 902 (also noted in fig 5 and elsewhere), provides a tactile relation between the users finger and the overlay 901 and flat panel display 920 (which typically incorporates liquid crystal material, a pair of polarizers, suitable drive circuitry and an light source, all not shown for clarity for one such device). This allows the finger to easily find a set point or line of action on the screen without looking. Typically the slope or height of the relief detail used such as a ridge or an indentation is small, so as not to unduly disturb the light field of the screen. However, larger relief details can be used if desired.

Other relief configurations can be implemented too as has been illustrated in fig 5 using grooves/indents or ridges/bumps of various widths depths or spacings to convey information to the driver using them, either constantly or reconfigurably under program control (as to their meaning).

Alternatively the location of touch of a finger such as 905 shown resting against ridge 902, can be determined by any other suitable touch screen device member such as a SAW type touch screen , for example a Mass Multimedia/Elo brand, model M14-SAW. In this case the touch screen would typically be incorporated into member 901. Note the overlay as noted can be interchangeable with other overlays. In addition the fitment of a touch screen of other conventional technology is also possible, for example of the resistance or capacitive type.

A difficulty with conventional touch screens is because one typically in the car instrument panel case at least would rest ones finger on the tactile ridge, indentation or other relief item. This would cause a permanent signal and to alleviate this problem, one can, using computer 915, take successive readings and look for changes in location (or even magnitude if such data is obtainable) of the finger touch, and when change occurs, then begin tracking the finger to its final position -which final position then constitutes the location desired.
Alternatively, in some cases the path or other characteristic of the movement
may be used to determine the data needed. This same approach can be used in the other examples too.

### Figure 10

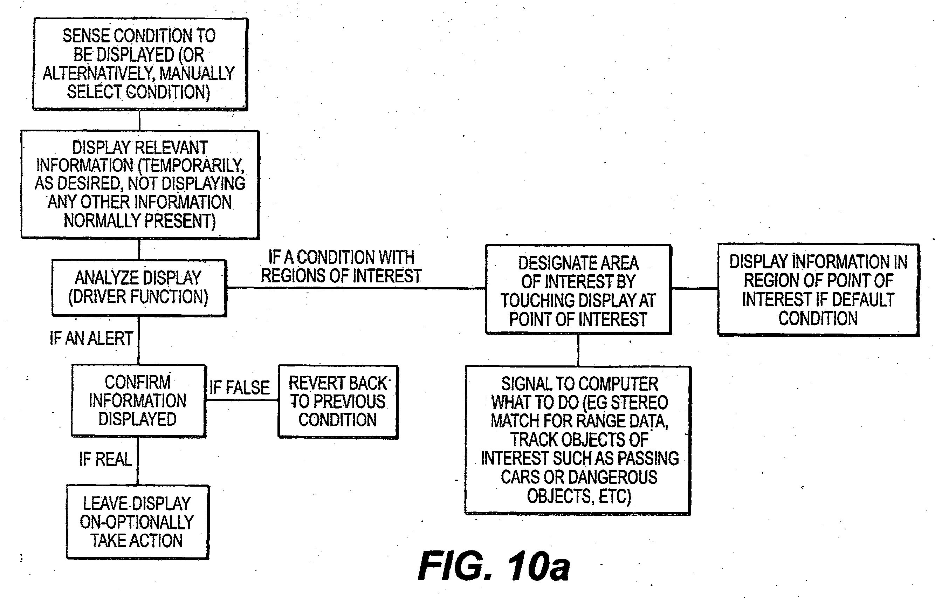

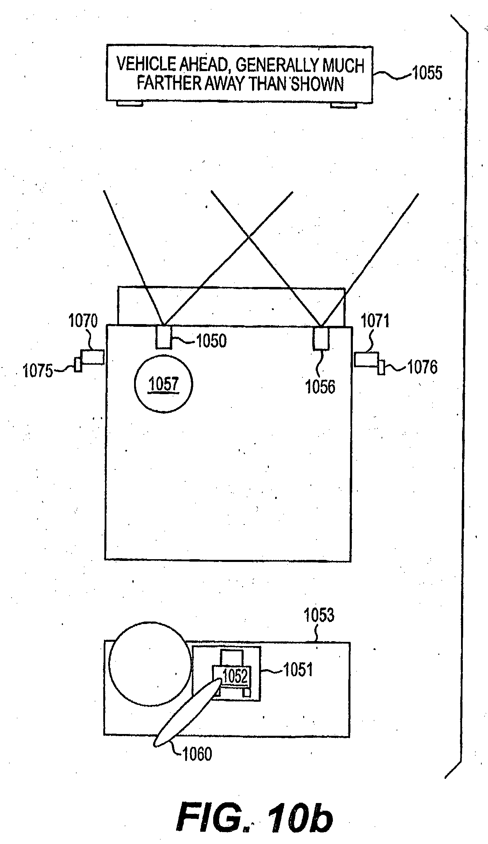

Figure 10 illustrates several examples improving safety of vehicle operation using real time data made possible by the big screen area which the invention enables- both to make it easier to see data, and to interact with it.

The invention comprehends that preferred vehicular examples will utilize a big screen and control surface. The available display area can be, and likely will be, much larger than conventional devices today which have at most a 7 or 8 inch diagonal. This is not because larger displays aren't available, but rather that the instrument panel real estate to accommodate larger displays today doesn't exist when conventional controls are employed. Put another way, it is not just that the screen is bigger to facilitate many aspects of the invention, the screen can be bigger because of the invention. Thus large displays are made practical both because the real estate can be made available, and because the invention makes large sizes practical from a cost viewpoint.

In any given instrument panel space, there is for example approximately twice
the screen size made possible because the controls can be on the screen, rather than adjacent thereto. This is for the same type of control, such as a switch or
knob. In addition, considerably more space is freed up as many functions can be virtual (using touch properties which can if desired exist everywhere on the control and screen surface) and not require space to be shared at all with the display. Indeed, the invention comprehends displays of 4-10 times the area of present day Instrument Panel displays, such as for navigation systems for example, having 5 or 7 inch diagonal rectangular screens. In addition the screen (which is shared with the controls, and is thus a control surface itself) can go right to edge of the available instrument panel area due to rear projection and fact that controls are on screen and don't use surrounding area.

In addition, the screen/control surface can be irregularly shaped (odd shaped), to fit around the drivers right knee for example, or to match a curve, undulation, protrusion, or other feature of the instrument panel. And it can be curved or even indented in portions if needed largely due to the rear projection aspect. Again, maximum utilization results. Room on the periphery may be for essential control functions, or can be made decorative or personalized using the ability of the projection device to display images which arbitrarily may be entered by the user (if so equipped).

In addition, lettering can be placed in the normally unused portion in middle of knobs since the lettering can stay fixed in the horizontal plane, even as the knob is rotated. And if not on the knob, the lettering can be ideally spaced around the knob. And important for space efficiency, the virtual physical touch characteristics allow a tactile screen which can also display images where the tactile indications are.

Much the same arguments apply to the controls, which can be bigger because they can in many cases be virtual, and take up no permanent room at all. In other cases they can be physically located on the screen, share space with lettering etc. And since data can be projected into the middle of knobs, the knob can be bigger on the outside, since large lettering may not be needed around the periphery.

Lettering is recommended in human driving ergonomic studies to be at least ¼ Inch (6mm)high if located in the center console area, but larger letters are desirable if people driving do not have corrected near vision, as is the case of many older drivers who use reading glasses. While the invention can easily achieve this, in a Transport Canada study undertaken in 2002, none of the high line vehicles tested came close to passing this criteria on their navigation display. This is not easy to achieve or any significant amount of lettering if a display is small. For example, a 5 inch (125mm) diagonal LCD display of the brand new 2003 Lincoln Navigator, is only 3 X 4inch (25x100mm) approx.

The lettering of the invention can be bigger as one might expect, because the screen is bigger. But that isn't all. The lettering can be made larger because the controls, being reconfigurable, allow the lettering for any given control function of the moment, to be maximized in size, and placed optimally, in location, and orientation for driver comprehension, even in different driving situations (discussed further below). The display again because it is reconfigurable, can allow for limited periods, the largest possible expanse of visual display space, as normal control functions such as speed or fuel or other relatively constant items can be replaced by urgent visually comprehended data. This can be either written (such as a critical road sign or incoming message), or visual such as a TV image of a dangerous situation (e.g. someone passing on the right in ones blind spot.).

The invention is thought to provide, by a substantial margin, the largest size display economically possible in the instrument panel of a typical vehicle used by the motoring public. This large size of the display (and the controls) in turn makes possible some further aspects which I believe could not otherwise be safely undertaken. Some of these are for example:
Bigger and easier to see printing and pictographs;
The ability to display two (or more) sets of data together (each one being readable);
The ability to provide video images in which the relevant detail can be easily and quickly discerned. On example is in video signage from road transmitters or on board TV cameras

These features in turn allow one to provide at low cost, usable and easily viewable videos or video stills to the vehicle from roadside TV camera sources, TV sources within other vehicles, or other sources of all kinds which can be stored or live. And this data because of its large size, can be reasonably and safely evaluated by the driver.

The ability of the invention to enable a much larger display and associated control surface enables many safety related possibilities, making the invention the logical stepping stone to the intelligent vehicles of tomorrow. For example, at the present time there is a great deal of work going on world wide relative to adaptive control of intelligent vehicles, in order to reduce traffic deaths and injuries. The human factors issue is as difficult as the automatic control. The invention is felt to provide a needed link, by making the large display and control surface possible, and in turn providing the means by which the operator of the vehicle can perform two main functions not now available in an easy visual way. (nor really even discussed in the various technical papers I have found). These are, for example:
1. To confirm data delivered by another source for action (or in action-i.e. a false alarm);
2. To designate, on the data presented, an appropriate region for action.

The big screen, which is also a touch screen, provides a mechanism by which one can safely and correctly designate displayed data items for further study or action. This includes, for example; intersections, other vehicles or objects, lane markers, occupants and all kinds of objects within and without the vehicle as well as information from computer memory based sources or download. It also provides a method to confirm the operation of onboard or external sensors in intelligent vehicle systems, or of the mechanical and electrical system of the vehicle.

Figure 10a is a block diagram of visual based control by the driver in the case of both alert type information and information to be designated, displayed on the screen of the invention, for example the large screen of figure 2d. This information can be the result of sensory data indicating a certain condition to be presented for action , or can be at the drivers choice

For example, coming into any special place where added care is needed, sensors could trigger such a display. Clearly, sensors onboard, such as malfunctions of the cars systems, or laser radar indications of road hazards or the like could provide such a trigger. Or stress indicators could also provide triggers, such as driver heart rate, or sensed words.

The invention with its big display can also provide a variety of information not other wise possible. One example is to feed raw video data to the screen, particularly video stills which would not be too distracting if rapid motion occurred. These can be from a variety of sources such as road signs (where the image can be magnified, to allow one to see farther ahead- a good use in general of a specialized TV camera. Machine vision can also be used to read the sign and enunciate it vocally, or translate it if in a foreign language.

The display can also provide video feeds from cameras at intersections, in parking garages and in other vehicles. All with the purpose of giving the driver visual information of interest, but without requiring sophisticated automated systems or special networks. Most of this data can be transmitted using simple wireless means, for at least 100feet (such as the X-10 device sold for $79 over the internet today) and likely several times this.

I believe the invention has considerable utility with respect to intelligent systems and may make it unnecessary to perfect some fully automatic systems to realize intelligent system benefits. In addition, the invention may be legally desirable for manufacturers to keep the human in the loop, again speeding introduction of life saving technologies.

For example Nissan motor company has filed US applications 09/963490 Road lane marker recognition by Furusho et al, and 09/ 951499 Lane recognition apparatus for vehicle ,Shirato et al, both of which utilize TV camera and machine vision technology to help guide a car such that it stays within lanes. The instant invention can aid such activity by allowing the driver to see clearly the image(s) being processed, and accept them by designating them as valid to execute for a control he wishes to automatically pursue. Or he can just have the machine vision system "beep" when he strays, and he can instantly consult the screen or his own direct view to see what the situation is.

The beauty of this is that it allows one to get systems on the road, without having the total of all known conditions sorted out. And , assuming sufficient video storage capacity in the computer used for image analysis, you could record images as well in certain vehicles, developing an enormous data bank, also in conjunction with the drivers own view of the situation. This applies not just to lane markers, but the tracking of tree lines, ditches, shoulders and other roadside hazards that one does not want to veer into.

It is noted that one other function of the invention, as noted above, is to confirm an alert, for example the beep just mentioned indicating the automatic system has seen a dangerous condition. If one saw the image and it looked correct, then the automatic system could be making mistakes and you could turn it off. On the other hand, you could confirm that it was correct, and if you wanted, even set it to a higher state of control. Only with manual backup of this sort, can perhaps such systems be made reliable.

A big problem with automated systems is false alarms- this is mentioned often in various world conferences. The human will not use a system which false alarms more than a tiny fraction of the time. But unless the automated system is totally perfect (unlikely, in any first system), how then can it be eased into the motoring populace - which could save lives, time, and money? Such systems can be for automated cruise control, lane change, and the like.

Another issue re intelligent vehicles is range detection, and more generally, 3D vision. This can be accomplished with stereo camera pairs but this is difficult to automate in the field due to the widely variant backgrounds and lighting and its effect on the image pair matching problem The invention solves this problem to a point, by allowing the driver to designate what he wants to track or see- greatly simplifying the match, as the computer need only concentrate in a given zone of the image, which has generally already been shown to have features which the driver could identify at least.

For example, fig 10b illustrates two cameras in the interior of the car in the upper part of the windshield pointing ahead. Camera 1050 is located in this example approximately above the driver so as to approximate his line of sight, and is the master camera whose transmitted TV image 1052 (of a car ahead in this case 1055) appears on the screen/control surface 1051 located on instrument panel 1053. The second camera of the stereo pair, 1056, is located on the right side of the windshield and is used to provide 3D information concerning what ever portion of the image 1052 is designated by the driver by touching screen of the invention 1051 with his finger 1060.

Alternatively in another instance the image on screen 1051 may be of a road sign, and the driver may designate it with his finger, in which case the sign is read at higher magnification for example, and, if desired, translated into English or another language more familiar to the driver using optical character recognition and translation software in computer 1065 connected to cameras 1050 and 1056. Such translated data can be displayed in big letters or read verbally aloud by a text to speech program in the computer such as provided by IBM Via Voice.. It should be noted that if there are not enough pixels in the camera image 1052 to allow higher magnification reading of the sign from afar, that such magnification can be done optically, for example using a separate camera and lens system. The image can also or alternatively be displayed directly on the RTD screen as is.

In another case a video camera can look sideways and acquire data from house numbers and store fronts along the route. The machine vision system can then identify them , and if a particular store name or house number has been inputted, it can say that the place in question was just about to be passed (or just was passed). The image can be displayed on the screen for confirmation, if desired.

Another example of video driving aids is the cameras 1070 and 1071 in rear view mirror housings 1075 and 1076, respectively. These serve to augment the normal rear view mirrors by providing a constant machine vision monitoring of blind spots and merging lane traffic along the sides of the vehicle. Other cameras may point ahead as well. However realizing that such systems are years into the future regarding their perfection in an automatic mode, the invention here seeks to use the machine vision capability primarily just to provide an alert, displaying the image where trouble is detected on the screen/control surface 1051 for example, where the driver can by touching the image (or a portion thereof) with his finger, or other means, designate to the computer system of the invention that he wishes to track this image and report possible dangerous conditions- realizing that the final judgement is left to the driver. It should be noted that the human driver confirming data visually presented and designating certain data of interest, also may judge the image quality being returned by the cameras and to decide whether he believes the data he receives will be satisfactory for the purposes at hand.

There are many other such examples of dynamic video aids to safe driving possible with the invention, with its big display screen and control surface. For example:
- TV cameras in large trucks can show the road ahead, and this TV data be transmitted to cars behind whose vision is otherwise blocked;
- At intersections such video data can also be transmitted from fixed cameras on stop lights or poles, which can notify oncoming drivers of stoplight condition or traffic in the intersection for example;
- The screen can provide video data as to what is happening in ones pickup truck bed;
- At sharp curves, video cameras can transmit to vehicles about to enter the curve the road conditions they will encounter;
- Video data can be provided in or around a towed trailer. And the behaviour of towed items can be viewed as well if cameras are located to view same. This can also allow better backing up, if a camera is on the back of the trailer to view the road behind;
- At night, data can be provided from active infra red cameras (for example using the same cameras as just mentioned but with an auxiliary near IR source;
- Camera data can be transmitted to the vehicle from inside parking garages, to show where spots exist.

The big screen of the invention allows you to look at something, when alerted (or otherwise) and confirm if something seen is legitimate by looking at screen and "seeing with your own eyes". Other examples where one would wish to confirm or reject an alert using TV data transmitted to the screen from inside or outside the vehicle, or view information are:
- Baby in rear facing child seat crying;
- Children in minivan third seat fighting, one screaming;
- Display triggered by data from outside;
- Video feed of a crossing;
- Video feed from a vehicle ahead;
- Camera data from a camera viewing roadside markers, house numbers or the like;
- Stop light or other;
- Video feed from sensor outside car- lane etc.;
- Kids running in front of cars;
- Lanes passing etc.;
- Sensor signals such as suspect range data, radar etc.;
- Sensory alert from car sensor- image or info stored, note image could be a cartoon or other representation, rather than actual video;
- Time of stress.- special screens activated.
   ∘ Rain snow darkness fog
   o Traction charts and info
   o Night or fog sensor and video
   o Range data plus image
   o Persons in vehicle - kids baby
   ∘ Medical emergency
   ∘ Vehicle malfunction emergency

Finally the big screen is useful as well to display images taken with powerful near IR laser or LED sources and appropriately band pass filtered cameras (to augment headlights for example). And it may be used to display synthetic imagery generated by sensors such as range gated infra-red, or millimetre wave radar, allowing one to see through fog for example. Longer wave IR obtained with pyroelectric TV cameras can also be displayed, as an alternative to a heads up display such as used by Cadillac today.

Furthermore, the large display largely in the drivers line of sight without appreciable head movement, also provides a method to validate and confirm data from intelligent subsystems inside and outside the vehicle, and further allows the driver to assist such systems by designating areas of interest for tracking , stereo matching range detection and other purposes.

It should be noted that the ability of the invention as disclosed particularly In figure 10 to provide a means by which the driver can designate regions of interest greatly eases the stereo pair image matching problem, where features in one image are determined to be the same feature as Identified in the other image of a stereo pair, in order to determine range by the offset in the image location.

The use of stereo cameras in vehicles is for example described in recently issued US Patent #6396397 by Bos, et al. assigned to Donnelly Corporation. Such a device is limited in scope by the need to automatically match - difficult to do reliably if done in a totally passive manner without active projection light source aids. While car taillights or headlights having known spacings, colors, or other characteristics can aid in the matching, this is generally effective only at night and only when no confusion exists, as on a country road.

The invention allows the field of view of the cameras to be vastly limited to the region around the object designated, and further allows the image edge and other features of that object to be locked onto as the features to be matched. Since the camera views are relatively parailel I(i.e. the baseline between the cameras is relatively small relative to the distance to the object) the views have similar image characteristics (under normal daylight lighting conditions) though of course the images of the object obtained by the two camera are offset due to the baseline.

It is further noted that computer 120 or other computers of the invention used to determine data from cameras used to determine information from the screen, from inside the vehicle or outside the vehicle (e.g. fig 10b), can have incorporated a memory such as solid-state RAM Memory or disc, which can record images obtained. These images could be recorded with a rolling 30 sec window, resulting in 900images if obtained at 30hz , and could allow one to diagnose after a crash what happened, at least from the video data. Brake and other data might be stored as well. The computer and memory could be protected like a flight data recorder for this purpose. Clearly more images might be stored if desired, for example if higher data rate cameras were used.

### FIGURE 11

Figure 11 Illustrates virtual displays of controls with arbitrary start points on a touch screen of the invention or other touch screen capable of the required response to human inputs needed. The computer may instruct the display projector to cause the origin of reference of a displayed object to "jump" to the point touched which first point becomes a reference for further action.

For example in fig 11a. consider the projection of a thermal bar 1101 on screen 1102. When the person touches the bar at any point on the bar, the indicator point 1105 along the bar corresponding to the instant temperature is caused to be projected at the point of touch. As shown the starting point is at 67 degrees, the current cabin temperature. If the person had first touched the screen at point 'P', that point would have represented 67 degrees and the bar calibration would have been re-sized accordingly. As the person moves his finger from side to side from the first touched point, the indicator 1105, moves accordingly to indicate the new setting desired - for example to point 1110 (84 degrees) with a rightward finger movement in the hotter direction. A groove such as 1123 on which the bar is typically centered can provide a convenient line of action for the driver's finger to move along as well.

In other words the display is commanded to commence from its present state, at the point you touch. Whatever point you first touch (in a manner indicative of a selection, such as a time dwell of your finger at the point, or a push in of the screen, if Z axis sensing is provided), becomes the origin for subsequent movement of the displayed bar, knob or the like. This point can be one with an indent or other relief feature which your finger finds by feel, or it can be on a plane surface of the screen, where you push anywhere, having first commanded that "heat" is variable at issue. One way to command the variable is to touch with the finger a big displayed heat icon on the screen. Or to say the word "heat" to a voice recognition system, or other methods described herein.

When used in a car, a driver can just glance over at the screen, touch the screen at a first point desired, which then signals the computer to provide a display on the screen, of a rotary knob, slider or whatever. The display is preferably oriented so that the starting point or frame of reference of its movement is established at the point of finger touch. Alternatively, one can touch the screen at a first point, and then indicate by pushing in on the display or other means that the last point the finger reached before pushing in is to be considered the first point of reference in this context.

Such a display is preferably big so that one can easily see the initial position of the virtual knob or slider displayed. It can be big, as it is virtual, and when not used, occupies no space on the screen.

In the case of a knob, you then can turn it with ones fingers using a touch screen which has a twist motion response. (by monitoring the position of two fingers in a pinching gesture (or alternatively three fingers together, both have been demonstrated) at sequential locations In a rotary manner As illustrated in figure 11b, as knob 1130 is twisted in this virtual manner using thumb 1135 and forefinger 1136, a movement of the knob dial with twist may be displayed on screen 1140, along with possibly other changes on the screen such as colors to indicate new heat conditions. Numeric temperature data can also, or alternatively, be displayed as well.

A screen there fore could then provide the ability to at various times display and actuate touch like dials, knobs ,etc on the screen, and still have them be conveniently the size of a human hand and fingers and larger. One can display data to a driver just tries to hit anywhere in the area and receives an indication back like clicks from acoustic pulse or other indicator to his finger.

This virtual approach can be followed not only by conventional knobs and the like, but also by more complex items, such as displayed seat icons shaped like seat portions (such as typically found in physical form in Oldsmobile Aurora and Mercedes vehicles). These icons can be pushed in any number of different directions, not just x and y related.

Position and orientation of the image can thus be in proportion to the absolute value of a control variable known -which modifies what the image looks like as it jumps to a logical position at the point of touch. By having a display and associated control function which moves around the point of an arbitrary touch; this example requires much less visual concentration than conventional touch screens requiring the touch to track a predetermined fixed display.

### Figure 12

Figure 12 illustrates the use oftouch vector inputs on a touch screen of the invention, usable with either rear projection or other displays such asflat panel displays. As shown in fig 12a it is also possible in a similar manner to that described infig 4 and 5 above to determine a vector of touch from the shape of the imageof the finger incontactwith the surface ofthe screen. Consider for example that image 1225 of the finger contact region onthe screen 1232, is made by the driverofthe vehicle touching the screen in his normal way.
However, the image 1226 isthat obtained when he"pushes" the screen at the point oftouch in the direction away from the driver (to the right, in North America). Image 1227 on the other hand isthat when he "pulls" his point of
touch toward himself. This pull inthis case, may mean less than the usual force, noteasyto register, and in some cases difficult to tell from the "normal" touching case.

Such "push and pull" is however, aided by having a relief detail on the screen (or overlay) such as a groove or ridge. Consider finger 1230 exerting push or pull sideways (right-left) force on groove type indentation 1231 inscreen 1232.
Because ofthe approach angle alpha to the screen, and the groove shape, the fingerwill not appear the same in its TV camera image for each condition - normal, push and pull. These characteristics can again be taught to the camera- computersystem.Typicallythefingerzone becomes oblique and weighted in the direction oftouchonewishesto indicate.

As another more pronounced example, shown in figure 12b consider image 1245 of finger tip 1246pushing onthe protruding relief ridge 1250, (as well as the screen 1248) versus image 1251 representing pulling from the other side of the ridge. The two image conditions are much different and easy to learn and detect, due to the presence of the finger on one side or another, and the blocking of the finger by the ridge which takes place.

A finger vector of touch can be used for control purposes. And the screen display may move around a substantially fixed initial touch point controlled by a user's vector of touch (rather than move to different points on a fixed display to correspond to where the touched point is moved by the person touching). This aspect is radically different than any known touch screen operation I am aware of, and is achieved herein by having a display responsive to the vector of touch, which allows an urging of the touched point in a chosen direction to command the display on the screen.

For example consider fig 12c where a screen 1260 is touched at point "P" by finger 1262. The display is controlled to put a virtually displayed slider 1255 right on the finger point P indicative of its position along a sliding control path (bar 1256). At a future time, the display looks like that of fig 12d after pushing with ones finger a given amount of time, which is related to a positive (push) or negative (pull) increment in variable value, in this case "HEAT". Note that the finger is in the same x -y location on the screen, but the display has in this case been programmed to move, and is now indicative of an increase in the position along the path, and a corresponding change in a variable, in this case heat. The previous position of the heater control slider is shown in dotted lines.

It should be noted that by pushing harder in one vector direction or another (and causing a corresponding change in the finger signature detected), the display (and its corresponding function controlled) can be caused to move more rapidly to a desired new state. Thus both direction and rate are controllable in this manner.

Note that the piezoelectric transducer based force or strain sensing system of fig 7 or 9, by comparison of the transducer signals, can alternatively or in addition be used to determine the push or pull on the screen in a particular sideways direction, since the sidewalls of the ridge or groove allow a force to be exerted in that direction. This would for example be useful in determining the touch vector of finger 905 on ridge 902 in figure 9.

Note that because of the angulation of the driver's finger to the screen, the most sideways push or pull generally exists on the screen when the ridge or groove is in the vertical direction. Horizontal relief details can be used, but are much easier to push down than up

It should be noted that the vector touch can provide data in more than one plane. For example, consider figure 12e which shows a ridge 1280 on a screen 1281 in top view. For a finger 1285 in position "A" the function when the finger urges the ridge (right or left as described above) could be heater fan speed. Whereas, at position "B" the function could be for example heater temperature. The feel of position A and B (and any other positions along the ridge) can be delineated by variations in shape, or other means as discussed herein. Alternatively or in addition, programmable wave generators can be used for this purpose. A completely different screen/control surface can be overlaid In the region such as 195 on the screen as noted previously in figure 2f.

In both fig 11 and 12 it may be desirable to have an indent or some other relief feature in the screen for ones finger to locate in. This can be handy when driving if it is desirable that the display of data and other information be in the same place on the screen where the relief feature Is. It should be noted that the line of action provided by a ridge or groove allows easy operation by touch with virtually projected data in bar or column form. In addition, if the control function (e.g. heat) can be selected by just touching that bar, there is no separate motion needed. On the other hand, if there is a selection button or knob, that can be used to select, in which case the bar does not have to be present until selected.

### Figure 13

There are several types of displays which can be used with various aspects of the invention, including flat panel displays such as LCD, Plasma, etc. However, it is felt that rear projection types make the simplest way to provide both the tactile benefits and visual advantages in a cost effective manner. They allow the biggest size, in curved or irregular shapes to suit best the instrument panel space available and the aesthetics desire, and providing an elegant and stylistic solution, without a lot of special tooling costs.

An example of present art in rear projection (albeit, using three CRT's rather than LCD or DMD chip based projection) is USP 6185038 by Yamaguchi et al, entitled "Rear projection screen with light diffusing sheet and projector using same", assigned to Matsushita corp.

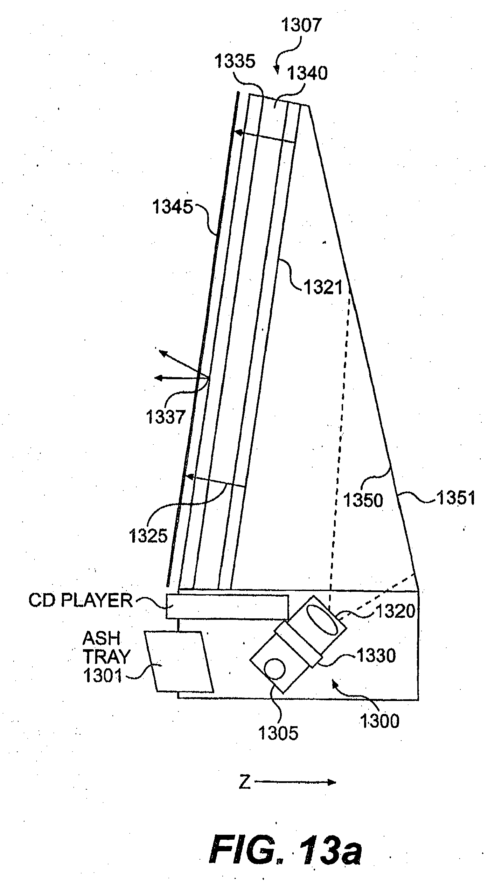

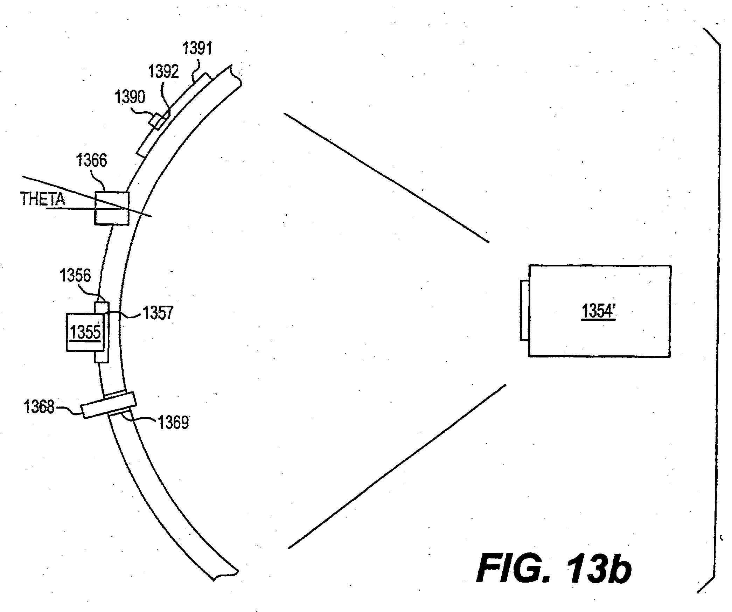

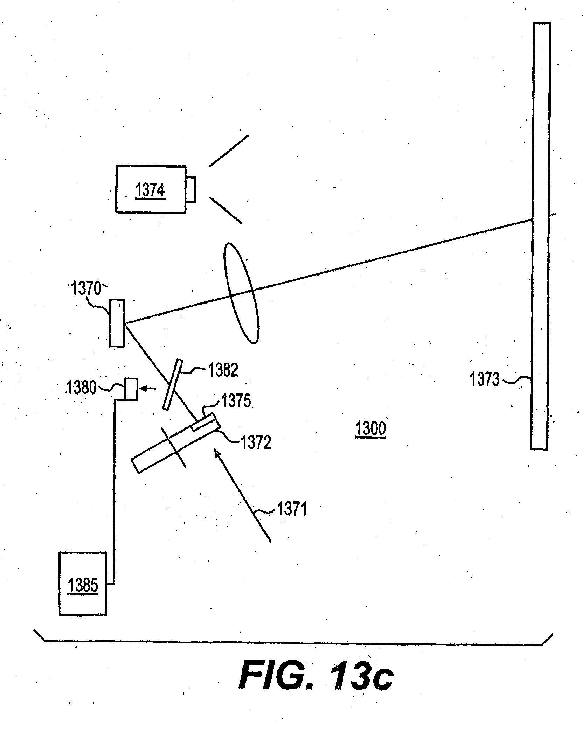

A typical rear projection display layout of the invention is shown in more detail in figure 13. In this one example (of many potential layouts) the projector unit 1300 is just behind the ashtray 1301 with its bulb 1305 accessible easily by removing the ashtray. The screen assembly 1307 generally comprises 1-3 components. The first of these, closest to the projection lens 1320, is an optional collimating lens 1321 in the form of a flat fresnel lens 1324 that collects the expanding projection light from the projection lens and provides a uniform brightness of modulated collimated light 1325 (modulated by the liquid crystal or DMD module1330) across the area of the screen. An outer element 1335 of the screen assembly is formed by a rear projection screen which may be formed of any suitable type of rear projection screen material. For example, the screen may be formed of a sheet of glass or transparent acrylic having embedded therein or coated on a surface thereof a plurality of diffusing particles, such as glass beads or micro-spheres, as is well known in the art. The function of the screen is to effectively diffuse the incoming image so as to enable viewing of the image from different viewing angles. Alternatively the screen surface can be roughened in order to scatter light (e.g. like a ground glass) such as region 1337.

A third element of the screen which may be on the outside, or inside as shown 1340 , is a lenticular lens array or a holographic grating capable of preferentially directing light in a certain direction, typically horizontally. This is optional in the automobile case, and desirable is a holographic grating 1345 with the property of directing light preferentially to the driver and passenger locations, both horizontally and to a lesser degree vertically. Such a device could ideally account for the limited range of horizontal positions the driver can be in given typical seat locations and the change in angles of view from the top of the center stack to the bottom of the screen This is quite different from the home theatre application where lenticular screen type gratings are typically used, where the position of the users eyes can be anywhere In a large horizontal region. The grating could alternatively also be constructed to have a zero order diffraction component to send light between the seats to back seat passengers.

The projected image is typically directed at the screen 1335 (shown flat, but which could be curved) by one or more mirrors, such as 1350. In most vehicles, the largest screen in the center stack location would be 16 inches high and 9 to 10 inches wide - almost the same aspect ratio of HDTV sets, but with the long axis in the vertical direction.

The whole assembly 1351 is desirably provided as a single unit or module, to be inserted Into the instrument panel of the vehicle on the instrument panel or final assembly line. When installed he distance from the drivers eyes to the center of the screen at the top is about 30 inches (750 mm), which distance however, varies by driver and their seat location. In the example shown, the display is projected directly on the screen with no angular shift to accommodate the driver's position off the center axis of the car. However, I have found that it is desirable in some cases to shift the axis of projection to make it more along the driver's line of sight to the screen and control surface.

In the auto application (and others) it is desirable to have all the components of the RTD packaged into a housing such which can be easily inserted into the vehicle in question. In this case the minimum possible connections would be desirable from the RTD to the vehicle for power and input output cabling. It is envisioned that the computer, projection, sensing (camera or otherwise) would all be contained within the housing in most cases. However, the screen/control surface might be fastened on later, if all that was necessary was to program the system to deal with it (in other wards the projector and sensor would be focused and set up for dealing with a range of different screens and control surfaces that might be installed. This could even occur at a dealership.

Note that one can "tile" the projection if desired, for example using two small projectors one above the other (in this instance), each having a display region 8 inches high, and 9 inch wide say to fill, between them, a center stack screen 16 inches high and 9 inches wide. Each unit is accordingly less deep in the Z direction, but there may result a linear demarcation between the two projection fields which cannot be used (which might be acceptably covered by a chrome trim strip say for stylistic purposes). If this is done, it can be helpful to reserve the top portion say for video and touch screen data, while the bottom is at least largely reserved for knobs and other details. One can even tile the displays to point at different angles, to maximize light sent to the driver for example. One can also "tile" the camera systems or other means used to see the knobs and touch points, having for example one for each projection unit.

While invention has been shown with flat screens, it can be provided on curved screens as well. An example of such rear projection screen for use in vehicles (however without the control features of the invention herein) is depicted in a recent patent application by Hirose, et al of Nissan Motor Co, referenced above. The instant invention is compatible with that arrangement, and can have matching curved shaped tactile devices on its face such as sliders, ridges, grooves and so forth.

Figure 13b illustrates a curved screen version of the invention on which images are projected by projector 1354, in which a knob 1355 is inset into the screen 1356 such that it rotates on a flat surface 1357. Such an inset 1360 can be made with a milling cutter for example, assuming sufficient thickness of the material of screen 1356, and the arrangement can work even if the screen is curved in two planes, as it may be for stylistic reasons. A knob can also be inset at an angle Theta to the surface normal, such as knob 1366. However this makes it more difficult to project data through the middle of the knob from projector 1354 without suffering obscuration of the projected image data.

When using a slider such as1368 (provided in this case through a slot in the screen 1369), it is generally desirable if possible that it move in the plane of least curvature, in this case out of the plane of the paper. However a slider of the invention can track around a curved surface as well, for example slider 1390 sliding in track 1391 and having a marker feature 1392 observed through the screen 1356 by camera system not shown. And too, a tactile ridge or groove can generally follow the curvature of the surface without difficulty in use. The knobs and sliders are detected ideally using the camera system of the invention as previously.

Figure 13c illustrates an alternative projector unit 1300 which can be comprised of a DMD micro-mirror device 1370 having a motor driven rotating color filter wheel 1372 as known in the art, to sequentially filter projected light 1371 using 3 color filters (typically red, green and blue). However, we can also use this filter wheel, with an added IR filter 1375, to once per cycle project invisible wavelengths (typically near IR, such as 0.8micron) on screen 1373 which can be seen by the camera system 1374 of the invention and not the passengers. All sensing if desired could be done during this cycle, which could occur 30 times per second say (for an 1800 rpm filter rotation, one IR filter such as 1375 , per wheel). This allows the projection of any light pattern desired for sensing on to the screen, while still achieving rapid enough measurement.

Alternative to use of the camera 1374 to obtain control or touch data, one can use the DMD chip itself into a scanning system, obviating the need for a separate camera. In this case a separate detector 1380 would view the screen through the DMD field by use of beam splitter 1382. In this case during a measurement cycle, every 1/30 sec say, the DMD is programmed to scan a flying spot (or other zone) of light, raster fashion or other wise, whose return from the screen region is detected by detector 1380 and analyzed by computer 1385 to determine locations of knobs or finger tips or other control items discussed above. Because the knobs sliders and other physical details are in fixed positions (for the screen in question), and the finger touch is generally or exclusively (depending on the particular design) in the regions of the tactile relief details, it is not necessary to raster or other wise sweep the interrogation beam (e.g. a spot) over the whole screen region, but rather only in those areas where data is expected. In addition, once data has been determined to be in the process of inputting, it is generally only necessary in the next few seconds to scan the region from which it is detected, since the driver can generally only use one or two fingers of one hand at once. This same logic for scanning may be applied to the camera based versions above in scanning their image fields.

It should be noted that an LCOS (liquid crystal on Silicon) chip also operates in reflection, and can be used, like the DMD chip above, both for image projection, and for sensing. This may have significant cost benefits.

### Figure 14

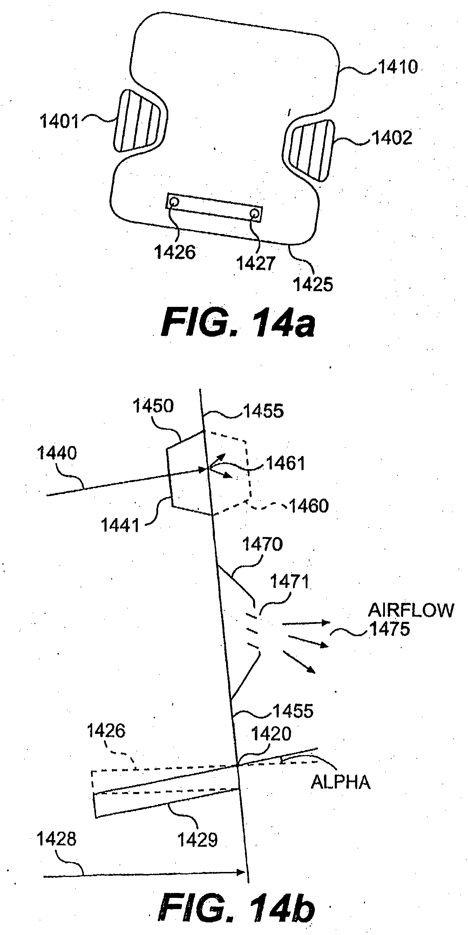

Because the screen can be irregular in shape, it is possible, as shown in figure 14a to have air vents such as 1401 and 1402 at the sides of the screen/control surface 1410, which can fit around the vents, thus conserving space. Alternatively, or in addition, the screen can wrap around vents located at the bottom or top or other locations. This arrangement also allows one to label the vent itself in a programmable way. For example showing high - for high velocity air from the vent, or showing the vent direction. And the temperature from the vent (which might be sensed individually at the vent) could be shown as well. Such capability is not present in current vehicles, and could be a selling feature.

In some cases it may be desirable to have air distribution vents located on the screen itself, which is made possible in the invention as shown in fig 14b. As shown light from the projection source 1440 passes thru the rear surface 1441 of clear plastic vent plenum 1450 and out through the screen 1455. Alternatively the plenum can be in front of the screen as shown in dotted lines 1470. Where vent louvers are desired, Illustrated by a second such plenum 1470 having louvers 1471 (emitting air blast 1475) in the section of the drawing, the projector would generally be programmed to project no light there. Otherwise the projected image passes thru the plenum and is observed by the driver on the other side.

Because of air condensation possibly on the plenum walls it may not in some cases be possible to project high resolution data in this region. Version 1460 can also work with LCD or other flat panel displays, with the plenum attached in front thereof. But these generally do not allow projection thru to a scattering surface which can be on the plenum front Itself, such as surface 1461. Where this is done, the scattering material of the screen in the region of the plenum 1445 is deleted such that light passes through to the front to be scattered by surface 1461.

Figure 14 also illustrates another point namely that one can have a slot or other shaped cut-out 1420 in the screen, in to which is mounted a device such as CD Player 1425, into which a user can insert data storage media for example. The player can be mounted right to the screen as shown if a sufficiently sturdy screen is provided. Fastening means such as bolts 1426 and 1414 may for example be used. In this situation, it may be desirable to mount the device as shown in dotted lines 1426, at an angle alpha to the normal to the screen surface such that its sidewalls are more or less parallel to the diverging projection radiation 1428, in order that obscuration of the projection by the cross section of the player is minimized. Just as in the vent case of figure 14a, one can project data 1430 concerning the media or the player state right next to the player on the screen. Other devices can also be so inserted and displayed as well, such as smart cards, keys, etc.

The invention can be used for other automation or control purposes, such as machine tool control. For example a readable card of the invention such as disclosed in figure 11 can be shipped along with some semi-finished parts to a CNC machine tool station (or other working station) which is to finish the parts. The card is put into the slot of the control and both the program needed for that part, and the specialized operator control touch elements needed for that part are accessed by the machine computer and used to perform the operation.

### Figure 15

As shown in the diagrammatic side view of figure 15a is another example of the invention. A center stack of an instrument panel (not shown) is equipped with a large (for a vehicle e.g. 10x12 inches) rear projection screen panel 1505 preferably made of non shattering light transmissive plastic, having in this example a myriad of small glass beads 1504 on its back surface which serve to widely diffuse the light incident on them, in a manner creating minimum backscatter.

The beads are encased in black plastic, with only the tiny spherical surface near their focus (which due to their index of refraction of approx n= 1.9 is approximately at their surface) protruding from the black matrix holding them. This design increases contrast of the display, and is also useful for keeping light from the drivers side from entering the optical system of the invention, and for shielding the inner workings of the device from view of persons within the vehicle. A typical commercial screen of this type is 3M "Vacuity" XRV type NP, which is 1/8 inch thick approximately, with glass beads 0.002 - .003" in diameter.

Thicker or thinner screens can also be produced, which can be made by laminating the base film containing the beads and blackening material to another material, either flat or curved, and typically of lexan or polycarbonate plastic. For the bead type material to work as designed, the open aperture of the beads should be toward the projector. A version of this having a fresnel lens incorporated is called "Black bead" and is made by Dai Nippon printing co in Denmark.

As disclosed for example in fig 13, alternative screens having less dispersion vertically than horizontally can be used, as well as ones tailored using holographic diffusers or gratings or other optical elements such as lenticular arrays to disperse light preferentially to the range of viewing directions of driver locations.

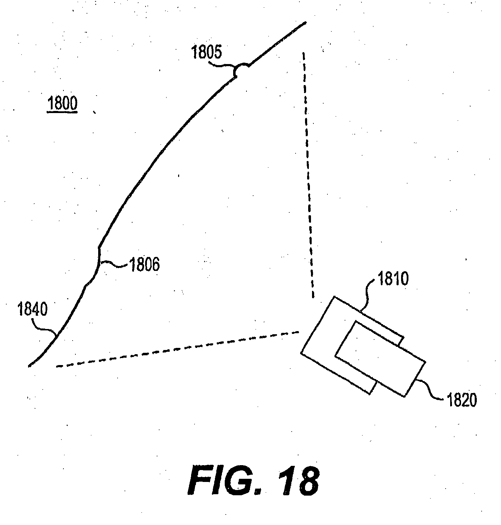

The display screen/control surface extends out of the plane of the drawing. While shown flat in this drawing, the screen/control surface in many motor vehicle cases is curved for stylistic or other reasons. This is particularly true since the display screen/control surface is desirably large and needs to fit in stylistically with other parts of the Instrument panel which are generally curved themselves. The curvature can be either convex, or concave, or compound, and can be of irregular shape, and with portions even staggered in the z axis (see figure 18).

A computer controlled display projector 1510 controlled by computer 1520 illuminates the screen. This projector may be on axis as shown or located at angle to the screen normal in either plane. Video imagery or Computerdata including messages and other communications 1521 down loaded to the computer 1520 from external sources by known means, or from sources 1522 within the vehicle itself, can be thus projected on the screen.

In this example, knob 1515, and ifdesired, further knobs or other control details not shown for clarity, are mounted, for example with pin 1506 directly to the screen 1505 so as to be rotatable thereon to various positions which are sensed (for example by electro-optical means such as camera 1517which looks in a first example, through the screen at points such as target marker 1518 on the backofthe knob 1515 (orinsomeothermannerrelated to knob rotational position) and reported to the computer 1520. Software inthe computer, written in C++ or another suitable language, in turn calculates the knob position, functions or otherdata and executes the control function desired by interfacing with the cars electrical and control system and further causes the display device 1510 to project suitable information concerning same onto the screen. This information istypically data concerning the knob position and the setting of a variable resulting there from. In an elegant and cost effective manner, the same camera 1517 can view and provide data used to determine the state of a hostof differenttactile physical selection oradjustment means such as knobs sliders, dials, or switches on the screen 1505. In addition, their various positions and changes therein can be analyzed nearly simultaneously by the computer 1520 and appropriate control and display responses made.

The image field 1502 of the camera for this I<nob situation is shown for the target marker 1518 ofthe knob 1515 in the initial position 1512, and for the position 1512' after a rotation ofthe knob 180degrees from this position. The camera image field comprehends as taught herein, typically a larger region of the screen than just the knob region.

Alternatively to using target marker 1518 one can provide a datum 1521 on the back side of the screen and rotating with the pin as the knob is rotated. While more complex and having some disadvantages for image data projection, this gives the best contrast, since the beads or other screen diffusing materials don't interfere with the image of the datum. In this case a retro-reflecting datum 1521 such as 3M Scotch light 7615 or a corner cube can be used if desired (which otherwise has difficulty functioning due to bead dispersion). If a retroreflector is used, a light source is required very near the camera axis, which can be an IR LED, or the projector itself, if the camera 1517 is on or near the projector axis.

The knob may be held to the screen (or an overlay thereon) by means other than a pin. For example, it may be held from the outside circumference by a bearing, fastened to the screen by any appropriate means, including adhesive. This leaves the whole Inside surface of the knob face clear for data display if desired.

One useful projector display device 1510 is one of the several on the market by Infocus, HP, and others having MEM's based Digital light processing (DLP) chips by Texas instruments. Another is a system such as employed in the 3M brand 7640i projector, having three LCDs each modulating a given color, R G or B. It should be noted that for the automotive application, high resolution is not required and relatively inexpensive MEMS or LCD "light valve" chips can be used (in comparison to HDTV applications, for example). Even less expensive are the LCOS (liquid crystal on silicon) chips on the horizon, by Intel, Philips, and others, which, like the DLP chips, operate in reflection.

Today projection devices such as these used for presentations In conference rooms are illuminated by white light projector lamps which are very hot, high voltage, and expensive (e.g. $400). It would be desirable to have another source for automotive use. But such conference projectors are meant for big areas (e.g. for presentations) and the vehicle only requires a fraction of the area to be illuminated (e.g. 10x 10 or 100 inches squared, vs. 40x50, or 2000 inches squared - or more- for a projector. If the ratio is 20 times, the light power can also be so reduced. This then allows one to use smaller bulbs, run bulbs in derated manners, or the like in order to achieve minimum cost and /or maximum bulb life- an important issue for automotive use.

More appealing would be solid state sources such as diode lasers or LED's as an illumination source. We have run a test with a LumaLED brand superbright red orange LED, which produced somewhat acceptable results over a smaller area. It was 55 lumens vs. 800 to 1000 of sample small projector such as a 3M model 7640. White as well as monochromatic colored LEDS of 120 lumens are now available as well.

One generally needs to even out the light field of the semiconductor sources to get best results when using the above projected image modulating technologies. This can be aided by putting a suitable holographic diffuser in the path of light from the LED. These can be ordered from Edmund optical co, with various dispersion angles as desired.

Fig 15b illustrates a combined LED source 1525 which can be used in place of conventional source 1511. It has three colored LEDS, Red Green and Blue (labelled R, G, and B, respectively) whose outputs in this example are combined using a high density fiber optic bundle 1530, such that the emanating light field 1531 is substantially the same regardless of which LED is being illuminated. With some alternative time sequential combination approaches, the blue field is projected, then a green field, and finally the red (or in some other order), with each modulated over the field by the LCD, LCOS or DLP device as the case maybe. The eye combines the three fields if all projection is completed within known eye integration intervals on the order of 0.05 sec.

Note that another problem with solid state sources such as diode lasers or LEDs using combinations of colored beams of same to generate a desired color mix, is the variation and/or degradation thereof with respect to time and temperature. In this case one may wish to use a solid state color camera 1517 (rather than the monochrome one otherwise possible to use) to in addition monitor colors of light projected. One can periodically project test patterns adjust accordingly the relative projected intensities of the 3 colored LEDs (RGB).

A fourth LED such as 1526 operating in the near infrared (e.g. at 905nm) can also be used to illuminate the screen and control surface to provide sensing of physical details and fingers irrespective of the projection illumination visible to the eye. In this case sensing can be done with a camera having for example having a filter having a pass band of 30-50nm wide at for example a typical IR LED wavelength of 905nm (thus passing light even with small shifts of wavelength due to LED temperature variation and other factors). Even simpler systems can have only two colored LEDs for simplicity, at a color palette sacrifice in ability to generate a wide range of colors. However, for the instrument panel use a complete color palette is not necessary, though desirable for maximum customer value.

Now illustrated are further physical details and touch features of the invention. The knob datum's used in one illustrative experimental example, shown in figure 15c, were simply aluminium portions of the knob1530 itself, which had been blackened (and thus made non-reflective) in all regions but where target datum's 1533-1535 were wanted. The knob as shown is held from its outside in bearing race 1531 attached to the screen 1529 by adhesive or other means. The knob as shown is hollow, which allows data projected to the screen by projector 1532 to be viewed through the middle of the knob. The rear of the knob facing the camera 1538 is shown having in this example three targets 1533-1535 forming an isosceles triangle whose base line was between the two closely spaced targets (1533 and 1534), and the axis of the knob being defined as a line perpendicular to the base to the third target 1535 at the apex. This arrangement allowed the pointing angle of the knob axis to be determined easily and accurately by processing the image obtained by the Sony CCTV camera used. This image was first acquired, by a Matrox "Genesis" image processing board, and then using the Matrox Mil 4.0 image library, processed first to find the blobs represented by the targets, and then the triangle axis calculation was performed. In another and preferable version, an added step including first subtracting the image obtained from a previous image taken under another condition not representing the instant situation, and then finding the blobs and performing the triangle calculation to determine the axis pointing angle of the knob.

Once the knob axis was found, a lookup table relating to the angle obtained was entered to find a value of the variable desired to be projected. In one case the projector was controlled to project a line on a radio dial, indicative of where the knob, in this case representing the tuning knob, was in terms of frequency. In another case, the same knob was used to control the projector to project a heat bar of different color and length dependent on knob rotational position. In each case output signals were also provided to control the physical radio or motor control of the heat mixing door of the vehicle HVAC system.

In this another example, the projector is the light source for sensing as well. The projector 1532 is fed data by computer 1545 to cause it to display on the screen 1529 whatever image is desired for viewing (which could be a blank image as well). In the back region of knob 1530 an annular ring of light from the projector illuminates the annular ring of the knob where datum's lie. In another case rather than the three dot targets 1533-1535, only one datum might alternatively be employed a radial line shaped one, such as 1541, which rotates like a clock hand with knob rotation. More datum's and other shapes can be used as desired to suit the accuracy requirements needed. The datum's can lie on the back of the knob on the driver side of the screen as shown above , which allows the knob to be transparent in its center, allowing the projected data on the screen behind to be viewed through the knob. Or as shown in this figure in dotted lines the screen can alternatively be cut out to form hole 1540 in the center with the actual diffusing portion of the knob 1542 (also in dotted lines) located within the bore of the knob itself.

The knob targets are typically bright on a black background, but they could be reversed. In this way (dark on bright background) they would not be confused by stray light brightness zones caused by large sunlight loads. Camera 1538 images in this case, the reflection back from the datum 1540 to obtain an image of the datum which is analyzed by computer 1545 to determine the circumferential location of datum and thence the knob, and thus the selection or value desired by the user. This datum may be in reference to optional targets on the corners of the screen such as 1548 and 1549 or elsewhere used to register location, independent of camera position and vibration if present.

It should be noted that since measurement can be made very quickly using suitable cameras, that the projector need only be on for a short time, e.g. 10 msec to allow the measurement to be effected. The projector could for example allow only IR light to be used for this purpose, if it was desired to have the actual screen blank (with no projection light visible to the driver).

it should be noted too that the reflectors on the knobs/sliders switches if used can be retro reflecting corner cubes, or scotch light material or alternatively diffuse reflective material, to suit the characteristics of lighting used to illuminate them. Retro reflectors work best when there is no diffuser material between them and the camera and light source, as In the case of the cut out hole 1540 and radial line marker reflector 1541.

Figure 15d illustrates another sensing approach for switches, this time of the pressing in of a button 1551 into screen 1552. As shown when the button is pressed in, reflecting member 1555 is pushed to a new position (dotted lines) and in so doing directs more light from projector 1560 to camera 1561. The image when thresholded to an intensity between the two values, allows a determination of ON (above threshold) or OFF (below threshold)

Figure 15e illustrates an alternate method of determining button push which can optionally also be proportional to actual z position into the plane of the screen (in other words allowing a range of positions to be sensed, not just on-off). For illustration purposes a row of switches 1565 is arrayed along a horizontal line into the plane of the paper. And a second row 1566 is also provided located below the first. A portion of the screen 1567 containing the second row, for example can even be spaced as well in the z direction from the other portions, as long as sufficient depth of focus exists for either projection or detection functions. Camera 1570 controlled by and interfaced to computer 1571 is used to view the switches. A projector or other illumination means 1572 is used to provide data on or adjacent each switch as to its function, with said projector controlled as well by computer 1571.

The angle Theta between the direction of inward movement of switches in row 1565, and the optical axis of camera 1570 allows one to measure of position of the switch in the z direction into the screen by triangulation. For example when switch 1565 is in its outward position, the image 1574 of reflecting datum 1575 on camera array 1576 is as shown. When pushed in a distance "D" to the location shown in dotted lines, the image position is at 1577, due to the included angle Theta. The distance d, in the image, gives a measure of D by known triangulation principles.

One can optionally use a second camera such as 1578 shown in dotted lines. This allows one to see data from knobs and other details from more than one vantage point, and in some cases with higher resolution when both cameras data is combined.

It should be noted that the position of a knob pin shown in fig 15a can also be monitored in z if it is pushed in and spring loaded to return back to the original position, much like the buttons of fig 15e. This can bedonefor example in order for the personturning the knobto registerthat he has reached a desi red location, or to query the computer forwhatthe present location is for example.

A knob having three targets like figure 15c can also register an inward push. For example considerfig 15finwhich such a 3targetset 1580 is on the side of the screen facing the projector, and rotated via pin 1581 by turning knob 1582.
When the knob set is pushed in, the target set 1580 moves to position shown in dotted lines. While the image on the array is more complex than that of fig 15c, it can be solved to decouple rotational position from z axis position in the di rection toward the projector. As before the camera is located atan angle theta to the screen normalto allow resolution of z by triangulation

Taking this one step further, one can construct an electro-optically sensed multi- axis knob capable of moving updown or sideways as well as rotating. Because the position ofthe target image in the xy field of camera (not shown for clarity) is changed as you push side to side or up and down, butgoes to points not allowed for normal knob rotational movement, one can *solve* for the change in position of the target set due to rotation as opposed to displacement in the x ory direction ofthe screen.

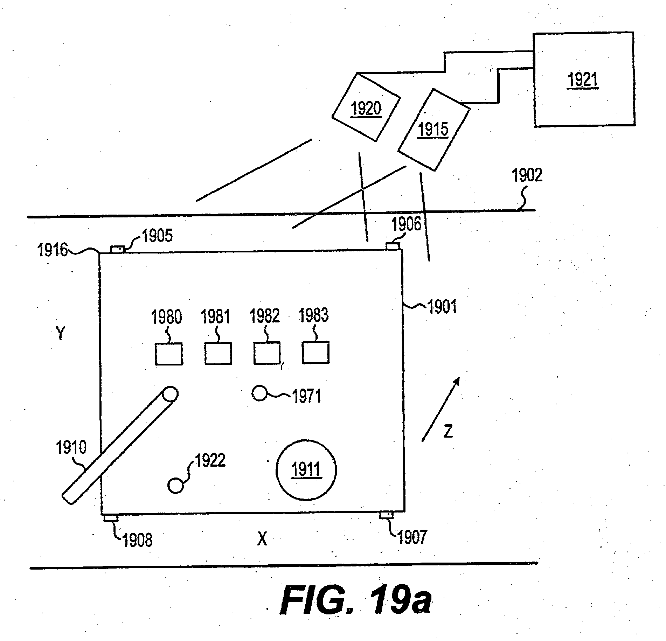

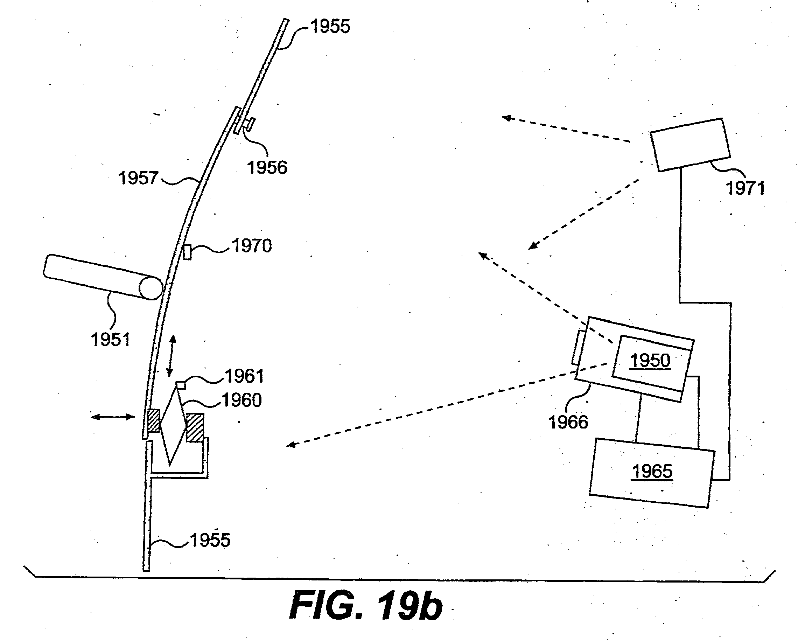

Note that where desired in the examples herein, pixel addressable cameras can be used to speed updatum tracking using such techniques such as described in co-pending applications incorporated by reference herein. With such cameras one only need scan the regions ofthe image where information is expected. Generally speaking, for example if one turns a knob, and the knob image is being observed to change, only the pixels that relate to this knob need be scanned in subsequent camera views unit the knob stops turning.
This is because the driver cannot in general turn two knobs at once, or use a touch screen while turning a knob.This leaves a lot of computer power available to process other data of interest such asthat coming from external sources such as TV cameras or Lidarsensors for example. However, once a knob in this mode ofoperation isdetermined to have dwelled for some small length of time related to human activity, it then becomes necessary to check other positions aswell (for example to catch the condition ofturning the knob such as a Volume knob on a radio to a desired position, and then touching a virtual indicator icon such as a radio preset. If a separate touch sense capability is provided like fig 6 or 19 disclose for example, then this signal can cue the reading, and more processing time can be made available.

### Figure 16

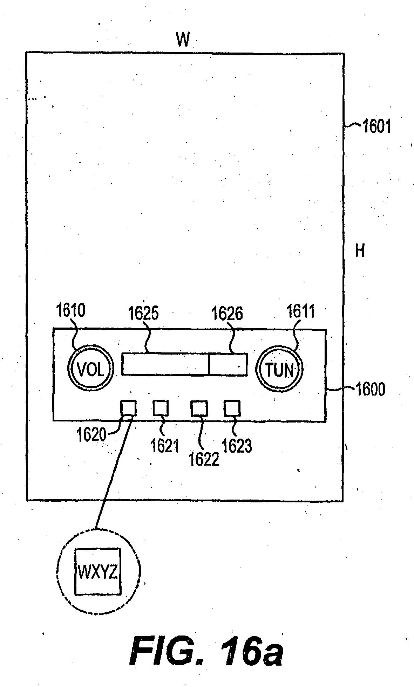

Figure 16a illustrates a front view of apparatus along the lines offig 1, in the form of an example employing knobs offig 1 based on a "traditional" Radio layout 1600, located on screen 1601 inthe center stack
region of the instrument panel.

In fig 16a example, the physical control details on the screen itself are the two knobs 1610 and 1611, and four physical push buttons 1620-1623, such asshown in fig 15. (Note other numbers and sizes of |<nobs and pushbuttons may also be employed, and the buttons can be virtually projected and actuated by touch if desired, rather than physical pressing in). The projected image portions on the screen are the surrounding lettering and graphics, and the radiodial numbers 1625 and indicator needle 1626. This is like many 1950's car radios, and one can even project graphical representations on the screen which can even be copied from actual radios of the era.

Projected graphics and alphanumeric characters are also used to illuminate the knobs, such as Vol and Tune shown. This illumination can be next to the knob, or if the knob is constructed as shown with a transparent center section, right in the middle of the knob. Similarly the buttons can be so illuminated with projected radio station call signs, such as WXYZ, or the frequency, or some other delineator. The knob centers can also contain projected information if desired, as can all regions around the various controls. As shown the function of the knobs, for volume (VOL) and tuner (TUN) are displayed.

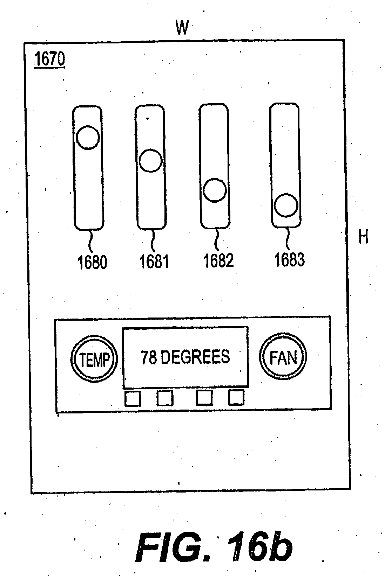

A typical height of such a device located In the center stack of a typical vehicle might be H = 12 inches, and width W = 10 inches. However, if the screen/control surface is curved in the direction into the paper as it often is, the actual surface distance top to bottom is larger than H. Generally, the region at the top of the screen most in the driver's field of view is desirably reserved for key images such as those obtained with backing up cameras or other important data. This area can also be where virtual controls operated by touch are used as desired. Figure 16b illustrates the case where the function is changed from a Radio to a heater, the latter more correctly today called Climate Control or HVAC in the trade (heating ventilating and air conditioning). The buttons and knobs are knob re-labeled in the projected data to suit the new function as shown in the figure. For example the left knob now is the temperature (TEMP) control, and the right knob now controls fan speed (FAN). In this example, pressing one of the button 1620-1623 (either a physical real button as shown, or optionally a virtual projected button, as desired) may be used to control air direction choice (face, feet, windshield, etc) as one example.

Entertainment and Climate are the main control sections found in the vast majority of vehicle center stacks today. Since this one reconfigurable control of the RTD invention accommodates both, this leaves more space for an associated Video display, and/or for larger knobs and lettering, and other functions too, as desired. And they are provided in a manner very similar to today, that is with physical knobs and buttons, in the usual expected places (e.g. with knobs on both sides of scale or other display). The only difference is that the entertainment function is reconfigurable with the climate.

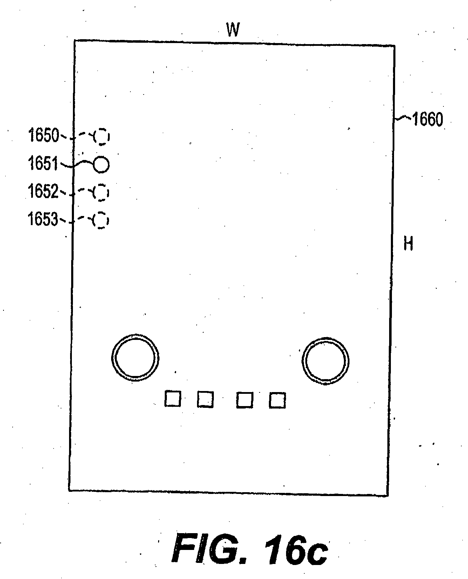

But the versatility needn't stop there. For example fig 16c illustrates the screen center stack with neither radio or heater projected- in other wards in its empty state, with the system off (except for a small ring projection in this illustrative example, to identify switch indent 1651 used to turn the system on). Clearly anything else desired may also be projected which could be controlled with the two knobs (1610 and 1611) and 4 physical buttons (1620-1623) shown.

Where buttons are virtual projected types, small relief details permanently on the screen such as ridges or grooves at the bottom of the button region as taught above are useful for finding the button location by feel. The buttons can be chosen to be projected at the desired locations where the relief details are, for whatever function radio, heat etc is desired.

To switch from one function to another (e.g. Radio to Heat), one can use a variety of means. For example, on the steering wheel one may include switches for the various function groups- climate, entertainment, comfort, etc. Pushing or scroll dialing or otherwise actuating a switch would switch the function to a heater for example from what ever it was (e.g.., a radio). Or one can use a simple touch switch on the steering wheel or elsewhere to scroll through the functions desired. In addition or alternatively one can use voice recognition to do this, by just saying "heater".

In addition or alternatively, function switches can be on the RTD itself, and can be hard physical details like the buttons, or in the case shown, "soft" using projected virtual icons such as 1680-1683 on the RTD screen 1670 shown in fig. 16B, which is equipped as disclosed with touch sensing capability to respond to finger touches thereon. These can be used with relief features to aid their finding by touch as has been pointed out in referenced applications. As shown, round switch icon 1651 is shown illuminated after a touch by a driver to select it (the function selected such as climate, can also be displayed). Conversely the illumination of icons can be under computer control and selected to only illuminate those for which action may be needed.

Other external switches can be used too, for example on the left or right arm rest. This is particularly easy if a limited number of screens are used, for example 3 or 4 (climate, Entertainment, comfort, and safety, as will be described below). The use of such "soft" or "Virtual" functions allows the maximum screen space to be freed up, for example to facilitate display of TV images and other information. One such image is the region behind the vehicle, taken with one or more TV cameras as previously noted. This is Ideally displayed in the region at the top of the screen along the driver's line of sight.

Selection can also be done with a multi-axis knob, which can be pushed in to select in sequence, or a 4 axis knob as disclosed above to allow one to select one of 4 displays simply by momentarily jogging the knob to one of the 4 quadrants. Thus the radio volume knob for example in the figures above could also be a selection knob for 4 different functions- e.g. Radio, Climate, CD/DVD and telecommunications.

A typical scenario for operation is for the driver to unlock the car with a radio transmitter which then signals the computer of the RTD to display in region 1670 shown in figure 16b the view behind the vehicle taken with camera or cameras not shown looking rearward. This view is displayed until forward gear engaged or some manual override occurs, to give the maximum time for the driver to see the image of things or persons behind him.

Also in the initial condition, the Climate control display such as that of 16b also is activated. Settings are made, or not made, by the user, and then after a few seconds of inactivity (variable by user setting) the system may default to the entertainment screen of figure 16a, unless the climate controls are being worked by the operator. Other manual overrides could be to cause an additional screen(s) to be projected and set by the operator.

For those who are audiophiles, the whole region 1670 above the radio/heater section (in many cases not having physical controls but rather being reserved for video and data displays and virtual controls) could for example, be devoted to auxiliary audio controls such as for equalizers, and mixers. This could be presented when in radio mode, or when in other modes such as shown where heater (climate) function is shown in fig 16b using the physical controls while radio controls are in the upper virtual portion, in this case audiophile controls for example using virtual sliders 1680-83 to mix sounds from several sources. These are ideally provided in a virtual manner using the touch sensing capabilities of the invention, but can alternatively be selected with a multi-axis knob such as shown above or another type of selection device such as mouse, joystick or the like. Or alternatively provided as hard physical details.

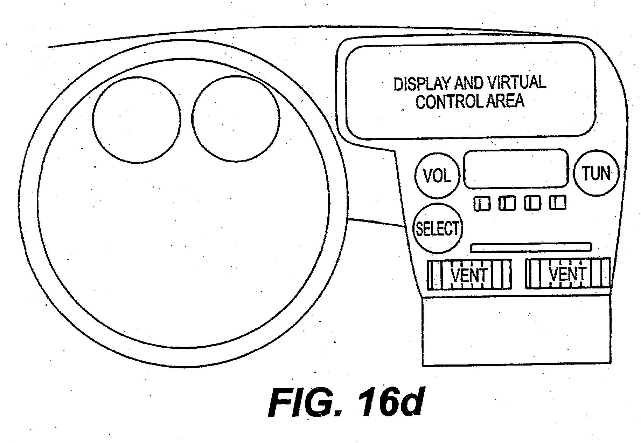

Another center stack control combination and screen/control surface design is shown in figure 16d where one could have the instruments which are shown displayed in the instrument cluster in front of the driver, alternatively displayed the virtual display area of the RTD in the Center stack. In this example selection of function of controls is made with a selection knob which can change "radio", to "heat" to "Navigation" and so forth, as desired.

Another point illustrated in figure 16b is that one can have both heater and radio on the screen at once. In this case with the top one being virtual and the bottom one at least partly physical (permanently in place) controls. Or one can duplicate radio for example in both regions. As might be desired if you want to drive safely without looking down at all, and put the key radio controls (for example volume and tune) in a virtual sense right at the top of the screen, for example while driving in dense traffic. You could make them large size too.

It should also be noted that figure 16a-c illustrates what can for example be a useful control system for use in the home, to control appliances and entertainment equipment, typically from a location on a kitchen or other room wall where it can be easily accessed. It is once again, intuitive and easy to see and use. Here again the familiar metaphor of traditional car radios and heaters can be used, if desired, (to operate the entertainment, heating and appliances of the home) with easy to operate large controls preferred.

The invention contemplates that a preferred mode of operation for many applications and users may be to combine physical detail actuation with virtual, in which one changes function of physical control at same time as enabled virtual controls associated therewith. In other words, one actuates a physical control detail, which then causes not only a control function to be activated, but also brings up a virtual display of control functions. An example would be turn a selector to "radio", in which case the knobs change from heat, to radio (E.g. Vol and Tune) and the virtual functions turn to radio presets. And perhaps to many other controls such as equalizers faders and balance as well depending on how the user wished it to occur.

The opposite case too may be used where a set of virtual controls are present, for example a row of function buttons, and touch of one of those, then causes the virtual controls to change as well as the physical.

One can also use the touch sensing ability of the invention to enable a control when it is touched. For example, by touching a physical knob, which touch is sensed at that knob, and the knob is activated. As opposed to pushing in the knob to activate, one could also sense a finger touch using the invention next to the knob, or on the diffusing surface 1542 say of knob 1530 (the camera can also see finger touch on the diffuser in this example as well, and is not limited just to touch on the screen proper.

It also should be noted that one can have both physical manifestations of heater and radio, one over the other as in most center stacks today. But in one case, the lower one, let us say radio, could be programmed to always stay a radio, where as the upper one, the heater, would change function to navigation, or another function according to the invention

In the home, the screen and control surface can be much larger, if desired, than would be possible on a vehicle instrument panel. For example the buttons (physical or virtual) 1620 -1623 could be used to switch from one appliance to the next, with the two knobs then reconfigured in the computer and the display to be the key controls for that appliance or entertainment device.

In the home application, the upper display area 1670, when not used for virtual controls, can show TV programs from a suitable source, such as a cable connection. Or it can show, via a home network or other means, video data from a baby's room or other location. With suitable optics, not shown and a mirror, the projected information can even be routed outside the enclosure (through a hole in the side, say) to project for example on a nearby family room screen. Or the whole RTD unit might be demountable from the wall (or other suitable location), such that it could be put on a table and used as a projector. In this case, one might just remove the front screen/control surface (held on in an easily demountable manner as with wing nuts for example), and just adjust the focus of the projection lens to cause the projected information to be thrown on a far wall.

It Is noted that this function, of routing projection data to another location can also be done in a car, for example when stopped, so as to project DVDs in a manner similar to the Drive In movie of old. In a minivan, the screen could pull down from the roof, such that passengers in the 2ond and 3rd seats could view the movie projected from the RTD in the instrument panel.

Information for controlling an appliance can be communicated over a home network, which may in the future be wireless. This is perhaps the most economic solution if one were to install the RTD control in an already built home. In that case each controlled appliance or device would have the receiving and transmission capability to communicate with the RTD. This could be bluetooth or other known wireless conventions.

The fact that I have just used figure 16 to illustrate both an automobile instrument panel and a home automation control, is a major advantage of the invention. If such commonality can be achieved, not only does cost drop, but usage and learning becomes easier. The famous VCR programming difficulty in the home could be mitigated if the control layout mimic-ed something one was intuitively familiar with.

In looking at the curved display screen/control surface shapes possible with the invention, for example as illustrated in figure 18, it is also possible to envision the invention built not only into the flat walls of homes or offices, for example, but into various elements of furniture as well where it could also provide a stylistic departure from the usual control panel flatness. Even a small curve can make it distinctive. And as noted, the curve can be compound in two axes for added distinction. It can even be re-entrant, for example S-shaped.

Since the screen can be rugged, one could even sit or lean on it, assuming the rest of the housing could support the weight. And because the system has a light source in it, this light source can be used when desired to simply act as a room light. In this regard the projector can be programmed with pleasing colors, which can also change in power and color to suit the mood desired.

Other aspects of the invention also lend themselves to innovative furniture. Where rear projection is used, features of the application can even protrude through the screen of the invention, such as for example a pole holding an awning, if the screen and control surface formed the base, since the pole could miss the key elements, and the light projected around the pole. Since the screen can be irregular, the pole (or another feature such as vase) could be indented into one side of the screen for example, like the vent 601 of figure 6.

While it may be fanciful to think of sitting on ones control system when it isn't in use, such stylistically attractive controls can be of considerable interest in designing appliances for the home for example. While the RTD is well suited to controlling a group of appliances, for example with a wall mounted unit as discussed, it can also be designed into the individual appliance itself. This is made possible in the future, by vastly less costly component costs. And this appliance can thus have an irregular or curvilinear control panel as taught herein.

The TV set of the home, can be an free standing RTD, as opposed to a wall mounted device as described in figure 16. Here too, the ability to have not only controls for other functions incorporated with the TV, but also to have it be a stylistic piece is of major interest. However, if the curved screen is to be used this assumes that people would want to watch a TV Screen that was not flat. This may not be the case, and if not, the stylistic issue may be to provide a screen surface flat over a large area, with controls and touch functions or other things off to the side in regions which can, if desired, be curved or irregular.

If one considers a home RTD TV with controls on the side (or alternatively along the top of an HDTV 16:9 aspect ratio rear projection set), the control portion could In one instance be not illuminated by the projector, during normal operation of the TV display portion. Thus the presence of the controls would not be distracting to the viewer. Then when control is desired, they could be illuminated and utilized as taught herein. It could be in this case too, that only some portion off to the side would have a touch sensing capability, with the main TV display portion not requiring same. However, it could also be so equipped.

The invention can be used as well for home control applications, for example of ones range, microwave, fridge, washer, dryer, stereo, TV, etc. This desirably shares economies of scale with the automotive application, as well as potentially its control layout which allows ease of operation of both car and home, since the knowledge of its use is also shared with historic devices, particularly washers, dryers, and ranges almost all of which have knob based control panels. The screen of the invention in the home too can show TV programs, especially nice for a control mounted in the Kitchen as it likely would be. With a lens /mirror change a projector version of the invention can even be reconfigured to project large screen TV images on a wall of an adjacent family room for example. The video display can also serve to see live video of baby's room or the front door (assuming cameras are placed there and properly interfaced by wireless or other means), access the internet (also using the computer in the invention, see general purpose discussion below), wireless video feeds from cell phones, etc.

### Figure 17

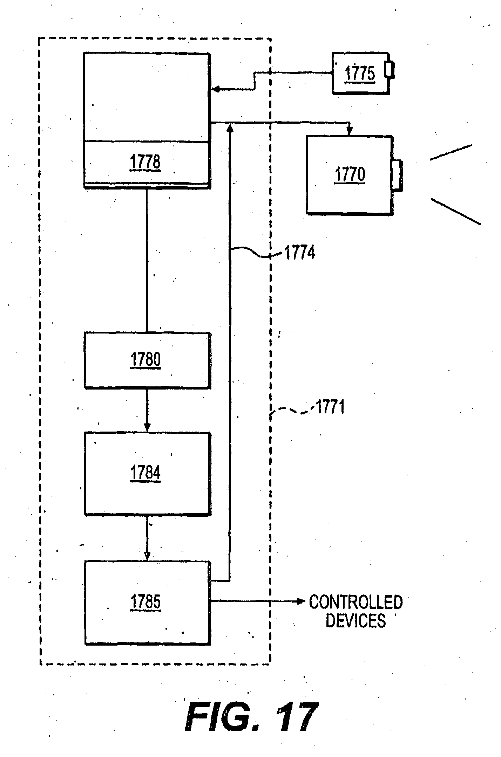

Figure 17 is a block diagram illustrating control of various devices by a PC based version of the invention, in which the projector unit 1770 is controlled by PC 1771 in response to programs resident thereon. Image data 1774 from Camera 1775 is processed 1778 by Matrox MIL software resident in the PC. Data from the processing is analyzed 1780 to determine position of fingers or physical details as for example described above, and from this a determination 1784 is made as to what control actions to take, which action data 1785 are used to control devices such as motors, relays or other devices , and to generate appropriate signals to change the display accordingly.

### Figure 18

Figure 18 illustrates an irregular shaped, curved display panel and control surface 1800, in a configuration suitable for some instrument panel center stack applications. The display surface is shown in this cross sectional example as convex curved in shape and may if desired have a ridge, disc, or other shaped protrusion or depression such as ridge 1805 extending outward or valley 1806 extending inward of the surface, on which information may also be projected or sensed. The depth or height of the valley or ridge may be such that sufficient focus can be maintained, usually not difficult with relatively small depths/heights. The screen is illuminated by a ultra wide angle projector 1810, which in this case does not need a mirror to bend the light path. Physical details and touch points on the screen are sensed as described herein, for example with camera 1820. It should be noted. If desired irregular shaped screen may be used, for example if it is desired to utilize all available instrument panel real estate where it can be seen and controlled by the driver.

While beam paths may be folded via mirror elements to allow less depth to be used in the instrument panel, with the convex curved screen shown it is easier to provide optical elements capable of wide angle illumination and imaging of the screen (while maintaining acceptable degrees of focus). In many cases therefore the need for mirror elements is obviated, resulting in less cost, and a saving of some other space aspects.

With convex curved screens image formation is often easier in the plane of most convex curvature (center near the projector), realizing that the instrument panel as typically constructed in vehicles of today can be much more curved in the vertical plane than in the horizontal, as illustrated in fig 18. Thus very wide angle projection systems can be used in the vehicle - especially since the application is less demanding regarding resolution and color fidelity than HDTV for example. If wide angle optics are used with a mirror, the depth in the fore-aft direction of the vehicle can be just a few inches. Mitsubishi has for example developed a rear projection device having a flat screen using a Texas instruments DLP light valve which appears to use at least an 80 degree field of view as taught in their recent patent USP 6577455. This unit is only 10 inches deep with a 60 inch diagonal 4:3 aspect ratio screen.

In some cases a concave surface can also be used, such as section 1840, though maintenance of focus by the projector is more difficult on large sections of this type unless special optical systems are used. Even combinations of sectional shapes can be used, as long as the projector image can be sufficiently in focus for the intended purposes. The camera image focus is typically not as important as the datum's on the knobs or finger images and the like can generally be quite defocused and still register. In fact some degree of defocusing can be useful in some cases to average over a number of pixels allowing more sub-pixel resolution in the vision processor.

### Figure 19

Figures 6 and 9 have illustrated sensing of force strain or other variables concerning the finger touch or touching of a knob or other physical detail. It is also possible to use electro-optical sensing to determine movement of the screen related to force caused by touching, and in so doing determine either that a touch has occurred, or if more sophisticated processing is used, to determine where it occurred in the area of the screen.

Figure 19a illustrates optical sensing of touch occurrence or position from quasi rigid body movement of the screen/control surface. As shown screen member 1901 (here illustrated as a flat screen for convenience, though any reasonable shape is possible) is mounted to the instrument panel housing 1902 at its four corners, 1905-1908, using compressible supporting members as further described below, which allows displacement under the load caused by the touch of for example, finger 1910 directly on the screen 1901, or alternatively on a physical detail such as knob 1911. The screen is observed through a suitably sized opening in the instrument panel housing by TV camera 1920 whose image information is processed by computer 1921. Both the camera and computer can be the same one as used in other examples herein for knob position and the like. Data is projected by projector 1915.

In one version of the invention of this type, the location of the screen edges such as 1916 can be sensed to determine displacement undertouch load, to indicate touch. Movement of datu m's located on the screen such as a reflective spot 1922 on the rear surface ofthe screen can additionally or alternatively be sensed in their movement inthe z direction undertouch load, and used to determine said condition. Where a single camera such as 1920sees movement at all points required, and is the same camera as used for knobs and other physical details, this typically results in a very low cost system. Typically one might use several datum's such as 1922atdifferent locationsonthe surface nearplacestouched, and in some cases in areas masked by knobs or other physical details, or trim pieces on the screen/control surface. This allows the datum's to be shielded from sun load while at the same time allows it to now be in the way of projection data.

Forsolution oftouch presence, one only need detectthat any of the 4 corners has moved from a previous position, orthat any internal point such as 1922 has moved. The normal untouched reference position for such measurements can
be detected on carstartup orany other time desired (preferably inthe absence of vibrational effects). One can interrogate the movements of all corners as well, and look for a change inavalue proportional to the sum thereof. And one can additionally look at other datum's internal sucl1 as locations of knobs, switches and the like, since they too will move under the force oftouch if secured to a screen which moves In a rigid body manner.

If touch presence is solved for, this can be useful if only one touch icon box is projected for example. Any touch in this condition, means the icon box was touched (in the absence of knob push or other control actuation requirements).

If the supporting members supporting the screen are designed to constrain movement to be effectively only in the z direction, it is relatively simple to solve for , not only the occurrence of touch, but the xy position of touch on the screen, assuming all supporting members have the same resistance to force. This though may be difficult to achieve in practice and thus a combination system such as here proposed is useful.

For actually solving touch location, this requires in general analysis of all 4 signals from the support members, and possibly other points as well internal to the surface, in order to determine where the touch has been. For example in fig 19a, the touch of a radio button Is determined to be, for example, 3 inches from the location of supported edge 1905, and 7 inches from support 1906. If all the touch buttons to be pressed are in a horizontal line such as dotted line buttons (e.g. radio buttons) 1980-1983 extending from one side to the other, then it could be expected that button 1980 had been selected, since movement of datum relative to 1905 was proportionately more than that relative to 1906.

If the screen does not move as a rigid body under touch action, then solution of the position equations is more difficult. But typically in many applications, the degree of accuracy needed to discern what is needed is low (e.g. the choice of 4 radio buttons above). And too, the camera by virtue of its whole field measuring capability allows one to see intermediate parts in the screen surface if needed to aid the solution, for example added datum 1971 in figure 19a which can be put there particularly to aid such solution (and for example could even be a fixed point on a knob holding member of knob 1911 which would be there for another reason, and which would also serve to shadow the point.

When used in automotive applications, It is desirable to have the supporting members be as stiff as possible, to avoid excitation of the screen due to vibration of the vehicle. This in turn implies small displacements under the load of touch, following Hookes law (assuming the support member is completely elastic). And thus the resolution of inward (z or z component) displacement by the camera system has to be quite good. Or multiple cameras may be used to achieve higher resolution, with the field of view of each covering smaller zones, for example encompassing just one of the supporting members. Alternatively other types of sensors of displacement can be used, but this may add cost. In one example, shown in figure 19b, a single camera 1950 is used to observe datum's which move under the load of a finger touch 1951 pushing in on the screen/control surface 1957 which in this case is fastened at the top by pin 1956 through a hole in instrument panel 1955, but free to move a small distance at the bottom against the urging of leaf spring 1960. Attached to the end of the leaf is a target 1961 which moves vertically in the drawing, as the screen 1957 is pressed inward horizontally. This target movement is detected by the camera 1950 whose data is processed by computer 1965 which further controls projector 1966. When movement is detected, the computer causes the camera image to be further interrogated for indications of touch location as discussed above.

As noted relative to figure 1 above, a z axis movement of 0.010 inches can be detected using a 1000x1000 pixel element camera to observe the complete screen of 10x10 inches in extent. In order to see accurately, the datum should be large enough so that many pixels of the camera can be used to determine its location to sub-pixel resolution, in which case a movement of as low as 0.001 inch can be determined.

The datum sensed to determine movement can also be a point such as reflective dot 1970 permanently attached to the screen itself. The movement of this point can be best seen by camera such as 1971 located at an angle such that a movement inward toward the projector creates a movement of the image of point 1970 seen by camera 1971 which can be detected.

The support can be of a plastic or rubber or other such compound which is compressible, rather than elastic members such as steel springs. This is much less costly, but creates a more difficult solution for touch location due a less predictable response to touch forces, which further may not be purely in the z direction.

It should also be noted that the camera can determine the location of datum's relative to a housing that surrounds the screen, rather than to itself. This allows the camera to vibrate slightly without affecting measurements of displacement. For example not only could datum 1960 in figure 19b be determined as to position, but also the datum 1990 on fixed member secured to the instrument panel nearby, with the distance between them in the camera image solved to provide Information as to displacement. This value changes due to the angulation of the camera in this case. Such a fixed member could be a support ring continuing around the whole circumference of the screen for example.

It should also be noted that one can calibrate a screen and its mounting for its deflection characteristics once built. One can just touch the screen with known touch type forces at all the points one would like to sense touch (or z axis knob location, or z axis switch location) at, or at a representative grid of points, and determine the response in terms of displacement. By storing in computer memory the values of displacement obtained, also perhaps at multiple points across the screen surface, In addition to the points supported, one can correlate any future touch to these values. This is particularly effective since one also in many applications has control over where on the screen the touch point icon boxes one might use (e.g. the radio buttons in fig 19) are to be projected. It is often not needed to have a table of more than 50 positions where displacement vs. force is calibrated. Some systems can make do with 10 or less. And one can just assume in many cases a unitary value of force for a typical persons touch. This is not costly in terms of either processing time, or calibration and test in factory. It alternatively can be done in-site after the car is manufactured. This can be done too with neural nets as pointed out elsewhere in other contexts.

### Figure 20

Figure 20 illustrates an alternative display device employing a flying spot scanner and laser or LED sources and the additional use of such scanners to perform sensing of both control details and fingers or other touching objects.

As shown in the figure, a Microvision brand MEMS based xy mirror scanner 2001 driven by drive controller 2002 controlled by computer 2005, Is driven so as to sweep a focused beam 2015 from lens 2006 combined from one or more diode lasers raster fashion across screen/control surface of the invention 2025. In one example of such a flying spot scanner, 4 Diode laser beams of different colors are combined by combiner 2030 using the apparatus of fig 15b, dichroic mirrors, or other suitable means known in the art. Three of the lasers colors are typically are red green and blue, in order to allow multiple colors to be generated by appropriate combination of intensities from each laser. The 4^{th} is purposely chosen to be outside the visible wavelengths (e.g. IR at 880nm) in order to act as an interrogation beam for finger and knob position which can be energized independent of projection color and unseen by the driver.

The reflected IR light 2026 from objects such as a knob or ones finger 2040 in contact with screen surface 2025 is sensed by detector 2050 whose associated lens 2051 aperture is such that light only from a region around the point being swept is accepted, since the lens also looks down the same beam path by virtue of beam splitter 2052. Narrow band Interference filter 2053 accepts only the IR laser wavelength at 880nm in this case, and rejects virtually everything else. Signal processing inthe simplest cases looks for abrupt changes in reflectance, either due to the presence of fingers, or from datum's on knobs and other physical details of the type disclosed above and in copending applications. Such abrupt change detection (e.g. using if desired a high frequency AC bandpass filter such as 2060) coupled with the wavelength bandpass filter, effectively eliminates slowly changing sunlight and other optical noise. The use of a single detector with the flying spot device, also allows one to modulate the light source and correspondingly demodulate the detection at a very high frequency which can further discriminate against background light. It is noted one can also use projector light for the sensing purpose, without the added IRsource. However, this requires coordination of projection with sensing which otherwise is not required.

This flying spot scanning arrangement isthoughtto be the most attractive from a cost and optical noise rejection point of view, and it is noted that a flying spot typescanningprojector can be used even if the sensing is done with a camera as disclosed elsewhere. Conversely, such a detector equipped scanner can be used in any of the examples above as a sensing device only, in place of the camera.

It should be noted that when the surface of screen member 2025 is shaped in certain ways, it maybedesirabletohavethelens2006adjustthefocusofthe projected flying spot so as to dynamically maintain its focus on the screen. This can be achieved for example using micropositioning movements of piezoelectric translation element 2007 controlled accordingly by computer 2005 orother means known in the art., such as Philips newly announced "FluidFocus" lens or other electronically deformable lenses able to varying focal distances (which in this case may hot have to be too great percentage wise, allowing faster dynamic performance). In this case the detector 2050 can be provided as an array in order to be sensitive to the size of the image returned. As the size grows,
proportional to the defocusing of the spot on the screen, the lens system is suitably adjusted to optimally maintain the focus.

The flying spot type scanner can also be used for another form of optical touch sensing, based on light reflected from a member deformed by the finger touch. As can be appreciated as shown in fig 20b, when an outer screen member 2070 is deflected even slightly by a finger 2075, the light beam coming from scanner 2071 is reflected as ray 2072 in a quite different direction than it was 2073 (dotted lines) from the undisturbed surface. By comparing the return signal of an initial no touch state, to that with touch, a determination of touch can be made. In the case where the distortion tends to increase the signal, this adds to any signal from the direct reflection from the finger as well. The sensing ability can be operational while projection of Images is taking place, or alternatively performed during dwell times when it is not. A discussion of a related embodiment may be found in my US patent 6,545,670, Method and Apparatus for Man Machine interfaces and related activity.

It should also be noted that the use of logarithmic or other sensitivities in detectors of light used to scan the surface of the screen in a flying spot manner can be used and most single photodiodes can be made to operate with very high dynamic ranges so this may not be necessary, even where sun load is high. Detector output too can be used to gain control the projection sources (e.g. semi conducting lasers or LEDs), in order to deliver more energy on the screen when viewing conditions are difficult due to high ambient light.

It should also be noted that the scanning unit of fig 20 has a large depth of field, and together with a convex screen shape (with the center of the screen curvature in the projection region), it is possible to project sufficiently focused information on this screen over a wide angle from a short distance behind the screen, from a position toward the center of the arc of the screen, often without the need for mirrors and other elements. This simplifies the system, reducing depth and lowers costs. Costs are also reduced with convex display surfaces, since expensive fresnel lenses may not be required to collimate incident radiation in the situation where limited angles ofacceptance of screen diffusing material (such as the glass bead scatterers of 3M Vikuti) are used. The screen can even have as noted in fig 18 a region with a variation in depth in the direction toward the driver, which might be a jutting out ridge, or an indented large oval screen region orwhatever. This allows a great deal of stylistic variation in the display and control features provided the automobile manufacturer or user. In some cases it is also possible to project data over awide angle on a convex surface, notjust using a flying spot projector scanner of fig 20, but using specialized optics from whole field light valve based projectors such as LCD, LCOS or OLP chips for example,

### Figure21

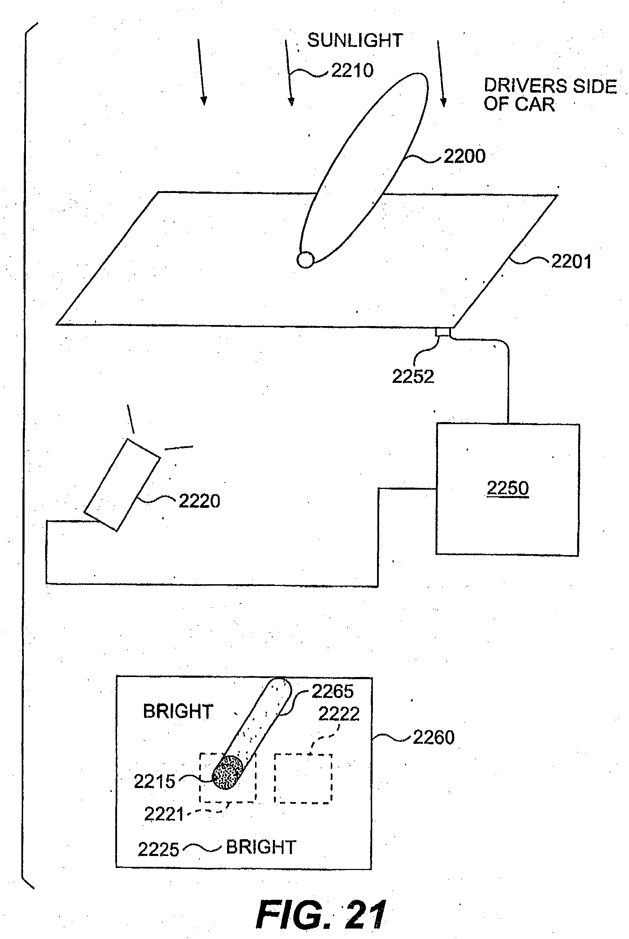

Figure21 illustrates examples for control ofsensing and projection, and image processing steps, including methods for determining fingertouchand physical detail location also in the presence of significant and variant background illumination.

There are basicallytwo issues. First is to see the correct data with the camera or other detector, in the presence ofwhat can be strong background coming from inside the passenger compartment. This situation isdiscussed further In fig 21 below.

The second is to identify from this data the physical detail position or finger location, or the movement of either. This can be done using relatively simple machinevision processing algorithms, such as image subtraction, blob analysis, edge transforms and the like. For the physical details this is made much easier as the knob/slider or switch datum's can be chosen to be of good or excellent contrast, and further can be made in easily recognized shapes, or colors (if
colored light source is used). In addition they are in locations known apriori to the system, such that one can look for the desired characteristic(s) in that location. For example in a certain annular ring, three targets on a knob, or alternatively one radial rectangular target on a knob would have to exist.

In the case of the fingers it is more complex and this is the subject of several figures below. But in the simplest case, and in the absence of strong background, one again is just looking for a round or oblong shaped blob in a certain range of sizes (typically just defined as an pixel area of blob) represented by the finger in contact with the screen. The reflection from flesh in contact with the screen works well in this way, though using IR led sources at 940nm I have found too that gloves, even many black gloves can also be seen.

As pointed out elsewhere and in co pending cases it may be useful to subtract the background with or without the illumination source on from the instant data. Because this can take longer, a higher frame rate than 30 frames per second typical of TV cameras is desirable for best results. This can be achieved locally with ease (e.g. in the region of a knob) using a pixel addressing CMOS camera for example, which can easily provide data to the computer to allow it to do several hundred alternate background subtracts per second

For the sensing of finger locations, generally speaking the touch can be anywhere allowed by the projection program (typically indicating to the person where to touch) or alternatively in areas preprinted on the screen or on an overlay placed on the screen. These latter two alternatives are less generic and less likely to be used. The touch location can be either of an icon box, or on a indent or bump on the screen, or more generally a random gesture such as sliding ones finger along a line of action, possibly guided by an indent or raised ridge on the screen.

For the generic case, one must have the capability to sense anywhere a touch can be registered and thus an ability for deciphering images obtained of the total available region in order to find the touch location. This can be either by directly looking at fingers, or alternatively by looking at something the finger does to cause variation in the electro-optical signal received, either in the intensity of reflected light, or some other effect.

For the direct viewing case of the finger tip, there are several possibilities, some of which have been discussed above. One can look for example for the characteristic shadow produced by the finger when illuminated from behind using light from the user's side. Alternatively, and or in addition, one can search the camera image for the characteristic round or somewhat round blob forming a closed polygon when illuminated from the projector or an independent light source such as a LED from the rear (projection side). This characteristic can be assumed or in some cases taught, by just asking the driver to touch the screen in his usual manner in one or more certain areas, and memorizing in the computer 120 say, the image signature. This can act as a theft prevention mode too by going through this routine each time the car is started, and comparing the instant finger image to one or more previous ones.

One can also train a computer based camera system , for example at the factory, said system having a neural net with different sized drivers fingers and colors of fingers so that it can be taught to recognize all reasonably possible variants. Such training as well could be for all possible positions of knobs sliders and so forth as well, and in the case of different lighting, such as with sunlight effects.

Figure 21 illustrates further processing aspects relating to problem sensing areas, particularly lighting. In a vehicle application, there is a particularly large variation in ambient lighting conditions in the passenger compartment to which the screen/control surface of the invention interfaces. The passenger compartment lighting ranges from dead black at night, with no lights on in the car or in the vicinity, to bright sun pouring down thru the windshield, or a sunroof, directly on the screen. This situation can also occur with sun coming in from the sideatcertaintimes.

The question then is, what does ittake to operate over this range? And secondarily, for the bright direct sun case, is it required to so operate, since such lighting will wash outvirtually any information displayed anyway, as itdoes today on displays which are in the open (and not hooded as most instrument clusters are for this reason). Prismatic or baffled "light control" films to be placed on the screen such as made by 3M optical products division can help with this.

I believe it is generally essential that the unit operate in all cases but the washout one, and even then I feel it should sense the physical details such as knobs, which then could be used for critical items to which washout of projected data was not an issue. (orsuch data was shielded, such as in the center of a knob). In some cases this could require printing of characters on the screen (or an overlay) in addition to projected characters if it was necessary to always read something. Inother cases the system optionally could, upon sensing via the camera of a super bright condition in the region of a certain knob (or the whole screen) switch over to a voice description of knob position for example if the projected knob lettering could not be seen. Or the light energy projected can be increased inthe problem region to allow visibility in sunlight condition. In a flying spot scan system this can be accomplished by scanning the area in question more frequently or more slowly, to allow more energy to be delivered there.

Inwork to date, examples have functioned well for sensing a night or in modest daylight conditions. And it has functioned in all cases for the sensing of physical details. This is largely because the datum's on the knobs for example, are shadowed by the knob itself.

But what about electro-optically sensing the fingers? Clearly direct bright sun can overpower the effect of most practical light sources within the unit. The answer to this is singularly or in combination to:
- Use the peculiar shadow effect of the finger contact area;
- Use the backlit shadow outline of the finger;
- Use specialized cameras or other detectors whose integration time or other sensitivity can accommodate the very wide dynamic range required;
- Use a light deflection under finger touch based system which does not depend on light intensity for the answer;
- Use another form of touch screen entirely, an appendage so to speak.
This is always an option but is not "Free" like the optical ones (assuming the same camera or other optical system is used for sensing physical details such as knobs), and thus is not appealing for high volume use. A high grade touch screen of the capacitive field type can add $100 in volume for example. And such is not available for curved screens to my knowledge.

Let us assume as in the case of touch icon box actuation, that we know the regions of interest where to look for touch apriori. In this case, we can modify camera function locally to optimize exposure for each region independently, and it should be noted this can be done in a general way, even if we don't know where to look a priori. One can also utilize a logarithmic response, or lin-log response CMOS or other camera (e.g. the FUGA 15 for this purpose, which is not bloomed or otherwise made unreliable, or inoperable by bright regions caused by massive sun load.

I have found that by comparing the finger tip image with the projection light on, to that with the projection light off, but shadowed from the sun light at the tip contact region (as it typically is), that a good answer can be found in almost all practical cases. I have also found that just looking at the finger in the high sun load condition, without reliance on the projection light at all (either from an auxiliary IR source or the data projector) can also be used.

Consider fig 21, where finger 2200 is touching screen 2201 of the invention in a typical manner indicative of a push of a button, such as virtual radio presets. The camera 2220 observes the back side of the screen, and the image 2260 obtained is processed by computer 2250. In this case, the finger is flattened a bit at the end 2215 pressed by the person into contact with the screen, and this flattened area effectively shadows the sun light 2210, even though other portions of the screen are extremely bright. As a result shadow region 2215 in the camera image 2260 can be sensed and compared to the bright region 2225 around it.

In the case where we know where the shadow can be to make selections (E.g. on a projected preset) we can just look in those regions (e.g. 2221 and 2222 in image 2260), and if we have sensed a bright sun condition for example by looking at the sum of camera pixels in the image, if a shadow (i.e. a region of dark In a sea of bright) roughly round or somewhat oblong is there, like 2215, then one can assume that's a finger and determine if it is touching the button location in question. In this case it Is determined that it is touching in the region of projected button 2221

Another way to do this is to sense the edges of the shadowed finger such as 2265 and use the edge shape to predict where the finger is. This can make a prediction of location of the tip of the finger, even without the hard contact needed for the black shadow condition above. In this case with the edges off the screen, the finger shadow is grayer but still very distinguishable as a finger. This is also because the typical car of today has nobody in the front middle passenger position, and the driver's finger has to approach a screen in the center stack from a range of known angles from the driver's side. And thus the range of shadows in this manner is relatively limited. However, the variability of this is still a problem.

It should be noted that when a specific shadow condition is indicative of a finger in one instance, and a bright spot (from the projected light) is indicative in another, then one can effectively solve for both, and if either is present, one can determine finger presence. And certainly if both are in the same place one can conclude the finger is present. This can occur when the finger reflects projected light from the region being shadowed due to finger contact, but where the background light is intense enough to shadow the remaining part of the finger around this zone, which does not reflect sufficiently as it is not in contact with the screen.

A shadow can be caused on the screen by something other than a finger, so it is important to look for shadows that have finger like shape and/or reflection characteristics. This also includes the unusual effects around the edge of the finger when strongly illuminated from behind which creates a gray boundary apparently due to light leakage around the finger and through the skin at the edge of the finger.

It is also or additionally possible to determine the general edge outline of this gray region and predict where the finger tip is using for example a transform of the image to give the outline in many cases of the total finger extension, particularly when the projection device (E.g. projector or IR LED) is turned off such that no projected light returns from the finger. This technique can act as a check on a finger location determined from the black contact shadow indication 2215 or the projected light reflection or the comparison of those two. One image transform that can also be used is Hough's.

A method of discriminating against sunlight or other ambient background illumination is to use a monochromatic wavelength of illumination, such as an IR LED or laser and to band pass filter the return to the camera. With the LED sources of choice this can by itself discriminate against most conditions other than direct sun. With laser sources, the band pass discrimination can be even better using narrow band interference filters.

Yet another method to discriminate against sunlight background is to modulate the light source at a high frequency and demodulate the detection. With CMOS and other such TV cameras this can be achieved to a degree by electronically shuttering the camera, leaving it open, only when illumination light (e.g. from an IR LED) is projected

Another method is to compare touch at different locations. For example, assume there are 5 virtual icon projected radio buttons more or less In the same region of the screen. It is known logically that only one of the 5 will be touched and the other 4 purposely not touched. By cross comparison of light from the area of the buttons (no matter on what principle is used) one can find the one (touched) whose signal that does not correlate with the others (untouched).

Another method is to look for movement of the point of touch, due to the touch , for example as one uses ones finger as a slider, moving across the screen as described elsewhere herein. This is more difficult as a tracking function is required. But if one takes "N" readings of data, one can determine a trend in the data (e.g. movement from right to left on the screen). In many instances, even if a particular reading cannot be obtained, the function can be satisfactorily provided to the user (e.g. heat increased).

To recap, for bright sun conditions, all knobs and other physical devices can typically be constructed in such a way that their very shape and location shadows light from the sun or other sources in the passenger compartment. Thus for those items, the projected light is what is typically used to sense, in any day or night condition.

For the case of fingers sensed by machine vision processing of direct camera images, then for sunlit conditions, it is useful to look for the black shadow of the contacted finger and compare that to the projected reflection image at the same location - which is thus shadowed. This answer can be further compared to the finger edge outline condition, which if present confirms the finger location. We note however, that sometimes other fingers can also be seen under such shadow conditions, so the edge outline case may not by itself be satisfactory.

It should also be noted that for extreme sun conditions, when the screen washes out at least in ones ability to view it satisfactorily, that the invention comprehends sensing this condition, and increasing the projection or other display brightness or contrast. In addition, the display can change color, even to the point of switching to a negative image of what was previously displayed, if that aids in distinguishing data in sunlit conditions.

This change in brightness, contrast or color can also be performed selectively in those regions washed out, leaving the others unaltered, or not as much changed, to leave a degree of continuity with previous information. This is also true because in many cases the sun problem is fleeting, and adequate display conditions are restored after a short while.

It should be noted that the camera sensor system of the invention can identify touch on the screen, or a short distance from the screen, if sensitivity is increased, though when the finger is off the screen, the problems of sun discrimination increase substantially, due to the lack of a black finger tip contact image and/or a considerably more blurred backlit edge image.. Where this is not a problem one thus can operate the system in two modes, only touch (also the occurrence of which can be verified with force or acceleration sensing), or with gestures which are directly in front of the screen, without necessarily touching.

The ability to see out in front of the screen, also allows one to place an overlay on top of the screen and view projected touch icons through it, with the finger touching the icon on the overlay, and sensed by a camera or other means looking through the screen, and the overlay. This was shown in figure 8.

It should also be noted that LED sources can be utilized with a normal white light projector to be used as a back up to a white light bulb, so that in the case of bulb failure, the LED or LEDs can be used to provide usable screen illumination if need be. The LED can be on all the time as a supplemental source, or energized when bulb burn out is detected. And it may not be necessary in this case to have all colors displayed, thus LEDs with particularly powerful and visible wavelengths may be used, with out regard for having a beautiful white balance. To a degree this is true in all cases, if one does not wish to represent true color images on the screen. The later is desirable surely, but not needed for control or other vehicle operational purposes.

Another method of helping keep things going in case of bulb failure is to illuminate only key portions of the RTD screen with the LED or LEDs.

Finally, another example is the case of an RTD control using virtual controls on the touch screen portion, and physical controls (knobs, dials, sliders, switches, any or all) on another portion (which also may have touch capability too). Typically the virtual portion would be the top portion, the physical the lower, but not necessarily. The reason for this would be to put the expansive image portion capable of providing backup and other images in the line of sight of the driver. This portion would not be cluttered with physical devices, generally speaking. And key controls could be a bit lower and out of main the sunlight load (see below).

It is desirable that the most critical controls be physical, since they are easiest for people to understand today, and importantly, they can be easily grasped and worked. In the car this Is important as this holds true even if the total control space is brightly illuminated by sunlight which can tend to wipe out both the displayed image and cause potential trouble for some kinds of touch sensing.

It is desirable to make the display optimally bright (as viewed by the driver) in critical areas where control functions need to be executed. In is not necessary on a large area display having video Image areas not used at a given time for control purposes, to necessarily increase all areas at once. Thus in some cases such as scanned laser projectors disclosed as fig 20 above, one would then scan for example only the key areas, but one could scan them at a higher repetition rate or other ways effectively increasing the duty cycle for those regions and thus the perceived light in them.

The invention may operate using a powerful general purpose microcomputer such as an Intel Pentium 4, equipped with image processing software. Where general purpose processing is involved, at different points in time the processor can deal with different things. Not only can it serve, with its large display and touch screen as a computer and keyboard or other device when the vehicle is stopped for example, but the camera and sensory processing capability can be time shared with that required for the control and display of normal instrument panel functions, which at most times require very little processing power. video camera applications such as those above as well as other tasks can be economically automated In some measure as a result.

Where the computer used in the RTD invention for image processing and display is a general purpose processor (e.g. Intel Pentium 4 based) and software (such as a Microsoft Windows), it is possible for the computer to be used for general use in the home, or in the car when stopped, and the system is easily integrated with other optional hardware or software from others. And because the machine vision processing is include to solve for knob or finger location, it Is possible to use the image processing function to solve for other events as well. This is especially true, since the demands for control per se using turning of physical details or finger touch are relatively infrequent.

For example, it can be used to monitor baby position, in the car or in the home. It can be used for vehicular tasks such as lane following, observation of cars on the right or left and their position, and so forth. All this is possible as the vision is essentially free, if one has it there anyway and provides it in general purpose form. And, in this situation, where processing capability Is being shared, it is desirable to prioritize the tasks to be performed, giving priority to acting on the drivers commands, and safety issues such as imminent crash threats exterior to the vehicle, with relatively lesser priority to those not related to vehicle control or crash situations, such as monitoring persons or objects in the vehicle

Another point is that because the screen may be a touch screen, the user may touch an object image displayed (e.g. a car ahead) or with a finger gesture he can quickly draw a circle around the object, which data can be sensed and using the machine vision system decoded as to intent of the user, and the appropriate action taken, such as locking the system on that image to track it (and the object it represents) relative to the users car.

It is noted that a general purpose vision processor to share tasks can be provided independent of the Instrument panel tasks. In addition another display than that of the RTD can be used to display video data or information. However when all these functions are combined, maximum cost effectiveness results.

It should be noted that for near term use in automobile Instrument panels, full color presentation is desirable, but not required. The same holds true for high display resolution. The invention can use monochrome, two color, three color or any combination of colors including full renditions, as the financial justification of the application allows. This Issue is particularly of interest as one considers ultra long lifetime solid state sources which today may not have high grade color rendition

On a given physical screen and control surface of the invention, the driver knows, or can soon learn where the physical features are. This isn't just the knobs and other physically protruding control details, but also the shallow indents bumps ridges and grooves. Note person can soon learn location of grooves relative to control data.

If the user always uses just these (at least doing one particular regime of operation of the system), then from a sensing point of view, this simplifies image processing considerably. The camera can preferentially be windowed so as to only look in the known regions when this regime is operative. This is a major processing difference, and it may also be simplified further if the types of driver inputs looked for are limited. (one example would be an instrument panel which was limited in the regime in question to responding to Knob turning and finger line of action movements in certain regions)

One of the most exciting examples of application is to an economy car, which often must economically appeal to two sets of customers with much different outlooks and needs:
Retired persons on a budget, whose first concern is safety and ease and familiarity of normal operation, and who may be reluctant to try new things;
College kids, who are technically astute and given to try new things.

Historically economy cars have been simple, with minimal equipment, which means little if any added functions were available to the driver. However, the invention can provide, in a single affordable system, vastly different features and benefits to these two classes of drivers (and everyone else in between). And the invention can provide new intelligent safety features for both.

Elderly persons will appreciate the large displays and easy to operate knobs, while the young will appreciate the vast ability of a completely reconfigurable dash to access technical and telematic features. It should be noted that not only would the software and displayed digital data and Video be different, it is very likely the two cars would have different tactile layouts as well- made easy by the interchangeable screen and control surface aspects of the invention herein.

In a family travel example of the invention, let us consider the screen of fig 2 similar to what could be installed in a 2002 Chrysler Minivan. The family is driving down the road and is able to access via telematic means lists of motels in the vicinity to include large pictures which can be displayed on the screen, able to be seen by the driver and other passengers. Alternatively, the screen can display pictures of the kids in the third seat, or a baby in a rear facing child seat, taken using low cost cameras within the vehicle. When inclement weather approaches, the screen provides a display of infrared able to see thru fog or at night using an infrared camera located in the front of the vehicle, a feature now available on some vehicles, but requiring an extra "heads up" display. Again, the large display, typically located high in the center and center left portion of the dash, allows the driver to see easily. Other display locations can also be employed.

The same vehicle as either example above for example, can also be fitted with the invention with a layout aimed at safe telephone communication and project activity while driving, two concerns of the business user. The dash of this car, can at virtually no extra cost, be laid out quite differently than say a vehicle aimed , temporarily at least, at serving a family vacation function. (since the layout can be changed via the invention, the vehicle can be one and the same)

For example, for the business user, the rapid access to lower level vehicle functions such as seat and mirror adjustment, or even climate control and entertainment system is of relatively small importance, compared to the ability to easily use the controls related to telematics and business project activity (for example relating to tasks involved in formulating a proposal capable of winning a big order).

The reconfigurability of interchangeable and fixed screen aspects ofthe instrument panel can provide specialized computer generated and mechanically different screens for young or old, those with bad eyesight or hand coordination, (accessibility), those with difficulty understanding technological functions, and the like. Red-green Color blind drivers (such as the inventor) can tailor their instrumentation to suit as well. For example, for them Blue and yellow are much easier to see than the common red and green used historically to signify certain conditions.

Totally unique is the fact that the physical layout of the dash control surface can be changed as well as the computer represented "Computer screens" ofthe display, with the two aspects synergistically in concert. In addition, some changed portions can be in effect, sub screens, which can be created at home, purchased instores, delivered incereal boxes and a host of otherthings, not necessarily solely limited to vehicle control.

While shown with one projector in rear projection examples above, a number of projectors for example in fig 3 may be used in a "tiled" fashion, much asone sees "video walls" today. Each projector displays on a portion ofthe total screen area. This also can be advantageous in that it subdivides the area into different regions-some maybe more important than others, perhaps having more reliability, or resolution, or some otherfeature. One can also consider having screen/control surfaces ofthe invention used in concert with sections of conventional controls.

More than one camera can be used to see the control details and other information such as finger touch locations on the screen, in order to provide more resolution. It should be noted that displayed data next to (or even within same, if the device is big enough) a knob or other tactile physical selection or adjustment means usually at a minimum displays the selection or adjustment choices - e.g. wipers, heat, air, cruise; or lo, med, hi for example. Alternatively or in addition, pictographs, colors or patterns may be used for example. In addition other information can also be displayed, such as more detail about what the choice means. This can even include effectively displaying the instruction manual for that function If desired.

The displayed data possibilities above do not represent the totality of novel functions hich may be provided, but are ones that I feel are of considerable utility. They may also have:
- An ability to switch automatically to a new safety oriented state on input of data from sensors which indicate such is called for. This state can be activated manually as well
- an ability to switch among several screens
- an ability to be switched from one to another, as well has have individual functions triggered from a variety of human command inputs, including touch related activities of various sorts

### Stylistic issues

The screen Is typically clear high optical quality plastic (E.g. Lexan, Plexiglas) with a diffusive outer surface. The screen material may be darkened if desired, to make the system innocuous and or invisible when not turned on. This is also achieved by having myriads of diffusing beads, which make vision into the device impractical. 3M Vikuiti black beaded screen material also is specially designed to be dark for contrast enhancement purposes, and fulfills this goal as well. This material exists as a film with embedded beads which can be laminated onto most screen materials. For example in some cases it may be desired that the screen be extra rugged, for example of laminated bullet proof plastic in a military vehicle. Or one might alternatively chose a softer material with more "give" in case of accident. It can for example be of colored plasticsuch as black, which while attenuating projector light in rear projection (and thus requiring more lamp power, also reduces sunlight entering the optical system and prevents visual sensing of the innards of the device.

The screen can be surrounded with a bezel, such as brushed aluminum orwood, which can also be removable to attach interchanged screen faces. An overlay on the screen can also be so composed.

Generally speaking excessively variant form ortexture on the screen surface is notdesirable for either display or touch purposes. However, if used, the location of significant such details can be sensed when the system is in a set up state, and stored in memory so that these details do not interfere with data to be sensed.

The invention has been described herein primarily for automotive instrumentation use. However some of the embodiments and examples can be useful for home automation, military vehicles and fire control systems, and video gaming. Everywhere that intuitive and reconfigurable controls are needed with little learning curve.
Reconfiguration ability may be desirable where space limits having numerous different devices too.

Because ofthe design of a rear projection device, the airvents typically located at the top of the instrument panel can alternatively be located in the control surface/screen itself and if desired be interchanged for the screen ora portion thereof. For example, one can vent air from the region behind thescreenth rough slots at the screen edges, orelsewhere on the screen. Or the region in
which the vent is located can be replaced with a screen portion not having a vent, ifthisisok with the customer for climate control purposes. In other words, the customer can choose whether he wants lots of central air venting, or can live without such, in favor of more display screen space. To make this substitution,
may require in certain cars a change in the programming of the climate control algorithms used. The projection and detection of light in providing function of the invention, does not get in the way of the air molecules which can be vented thru the screen

Also noted is that the display of the device, could display information from PDAs or lap top computers or cell phones, if same were plugged in. Particularly of interest are small devices for example Palm pilot PDA, 159, and cell phones, whose normal controls are hard to use. They may be connected into the system of the invention , for example through a USB port or firewire (IEEE 1394) port of computer 120, perhaps using a connector plug right into the screen/control surface of the RTD itself such as receptacle 158 in figure 2D. With suitable software for the RTD control panel in question, one could then employ the various knobs, buttons and virtual displays of the invention for use in activities connected with the plugged in device or devices, for example searching a contact list on a PDA using a knob of the RTD. The RTD has an advantage here too, like the CD example mentioned elsewhere, that information concerning the connection of something electrical can be displayed right next to the connection if desired, helping understanding. Or it can be displayed in big letters say, somewhere else. One region of the screen for example, could be reserved for such information, allowing one to form a habit of looking there for same.

While machine vision and electro-optical techniques have been shown to determine control detail and/or finger position, other techniques, while less preferable may be used such as inductive or capacitive devices. It is possible to consider sensing methods contacting the screen as well, but the elegance and interchangeability of the invention is diminished. And there is likely a cost penalty.

It also should be noted that while automotive applications have been highlighted, because of their need for tactile function, the invention is usable for a multitude of such as point of sale devices, to information kiosks, to home automation and control functions, to factory controls, etc.

The screen layouts of the invention above do not represent the totality of novel functions which may be provided, but are ones that I feel are of considerable utility. Generically, these novel screens generally have one or more of these common threads.
∘ An ability to switch automatically to a new safety oriented state on input of data from sensors which indicate such is called for. This state can be activated manually as well.
∘ An ability to switch among several screens, both computer generated virtual displays, and inter changeable tactile screens
o An ability to switch (line of site, larger print), to higher clarity for key data and/or elimination of non critical information. This also be a function of the individual safety or other needs of different drivers.
∘ An ability, related to the above, to reduce distraction via a choice of distraction reducing screen which provides minimal vehicle information, but maximum assistance with distracting influences.
∘ An ability to be switched from one to another, as well has have individual functions triggered from a variety of human command inputs, including touch related activities of various sorts, plus hand motions, head motions, finger motions, and the like.

In operating the invention or other novel instrument panels, there are various ways to signal the system (for example to change the function of the screen or a portion thereof), aside from the actual turning of a knob say, controlling or selecting the function in question. For example, voice recognition to determine a desired action from the driver's spoken word or words. For example, one can say "Heat" and after the voice recognition program such as IBM Via Voice recognizes the word(s), the heat screen related portions can be displayed. This could be a complete heat related screen, even including graphs of temperatures, temperatures in and outside the car and so forth, or it could just be the heat portion of a screen which would continue to display other information.

Such signalling can also be done using proximity / range detectors, such as shown in USP 5,362,970 5,880,459 , 5,877,491, 5,734,172 , 5,670,787 and others by the inventor and his colleagues, to determine the position of a persons hand or finger which he can wave or point at some aspect of the device which would cue the function desired

It should be noted that the sensing of a persons finger position or motion gesture thereof in the air in front of the display or other instrument panel portion is made easier, as one typically knows where to look. (e.g., near a particular knob). And the illumination is also controlled in the sense that the projector of the display, maybe used to favourably Illuminate the region as well.

The invention allows the driver to signal the control system in some additional ways which can be quite useful. For example, using the invention's unique ability to determine finger gestures from screen indications.

Let us further consider the situation of using the system to sense locations and gestures where the fingers are either in contact with the screen or very near it. This is the sensing situation illustrated in fig 4 above, but in this case with several other examples of finger combinations or movement.

Some choices are:
5. Number of fingers touching the screen can signify an answer: one or two fingers typically, usually right thumb and forefinger;
6. Cartesian position of one finger on screen, typically right forefinger;
7. Difference in position of two fingers (spacing)- typically thumb and forefinger;
8. Angular position of axis line between contact points of two fingers (knob twist /rotate gesture)- typically thumb and forefinger. See description of function in fig 11;
9. Angular pointing direction of one finger.

These commands are quite powerful, and several are innately intuitive.
They are sensed by sensing finger position or change in position of one or more fingers, using any of the means disclosed, and where applicable, analyzing with a computer sequential readings in order to determine the result desired

For example, One finger hit could be on, while two is off. Alternatively one can touch the screen with two fingers if you hit the left finger against the screen twice, or leave it on longer, you signify something different than doing the same with the right one, and so on. Or you can just hit the right side of the screen with one finger, or the left side to signify something

It is further noted that the methods of detecting touch disclosed above are able to detect the touch of multiple points at once- a major advantage over many conventional touch screen devices. This allows unique advantages. For example functions to be touched can be interconnected in their operation. It is possible to with one finger touch a point on a card of the invention signifying a person, while with the thumb or other finger touch a icon signifying a telephone (thus commanding the computer of the car to call that person). While this could be done in sequence, it is often easier to just rest ones fingers simultaneously.

Note that the screen surface, or an overlay thereon, can be changed to create different indented or raised styles to suit different user needs. These could be specified when ordering from the factory, or dealer installed, or even user interchangeable. They can also incorporate customized printed on writing or designs, or contains specially added features, such as more knobs, or bigger knobs or keys (for elderly drivers, say). Similarly, the projected Images could be bigger too.

It should be noted that displayed data next to (or even within same, if room exists) a knob or other tactile physical selection or adjustment means usually at a minimum displays the selection or adjustment choices - e.g. wipers, heat, air, cruise; or lo, med, hi for example. Alternatively or in addition, pictographs, colors or patterns may be used for example.

In addition other information can also be displayed, such as more detail about what the choice means. This can even include effectively displaying the instruction manual for that function if desired.

The camera system of figure 2-4 as noted can be completely separate from the projector, if an auxiliary light source is used. Particularly of interest are long lived solid state sources such as white light LEDS or IR lasers.

It should also be noted that using the computer controlled projector (or other screen) display, a variety of visual cues can be used to signal a function or state has been reached. For example, not only can one display a word such as "high" to indicate high heat on knob 116, but one can also have it blink 3 times when reached. This could correspond to an acoustic or other tactile signal comprising three pulses, or a sound generated, as well. The sound too might be coded by three beeps as well.

Also it is possible for the colors or patterns of the words or figures to be changed programmably. For example, in the figure 1 case the whole knob, or its surroundings could be illuminated through use of an appropriate computer program for the display, in bright red when the highest heat position was chosen (with blue, for the lowest, for example). And for example, the knob surroundings could be projected on the display in polka-dots, if the knob was not in a position that actuated a function (e.g. a dead zone).

Where desired (e.g. with elderly drivers) the writing on or near the knob, might be in large letters, which could even be so large that the words, such as "high", for a heater blower speed selected, would need to be abbreviated as HI" for example. And in addition, if desired for maximum comprehension, the word HEAT could even be displayed in giant one or two inch high letters across the screen, optionally with the temperature setting desired, or actual or both.

While the projector source disclosed may be used to light one or more features of any knob slider, switch or other selection or adjustment means, or a marker or other member whose position or movement is proportional in position thereto, a separate light source such as a LED or laser light source (typically in the near IR) can alternatively be used. In this instance, the camera, can for example see as is known in the art, using an interference filter placed in front of the lens or camera array, a filtered image responsive only to laser light, the knob mark reflection. This makes the sensing of knob position independent of what is being projected, and it can operate with no projection at all. Its noted that if the laser (or alternatively for example an LED source) is in the near IR (e.g. 0.9 microns) the user will not see any indication of this. If desired for further contrast, the knob can employ a dichroic mirror reflecting only laser light substantially

Often, the projector source itself is used for knob (or other feature) illumination. The illumination while It can be anything desired on the screen, is typically chosen to provide a uniform light intensity in the region of the datum's on the knobs (or other feature) which are being observed in order to determine their rotational position. Since the knobs periphery can actually block the light, it can be seen from fig 3b that it is possible to project even visible light for knob detail illumination purposes which is not apparent to the passengers of the vehicle. The Toffolo invention referenced above has a desirable property of making an optimum display. The invention herein goes further and has a programmable "fitting" program to maximally fit as large as possible version of the desired video or other download information to be displayed on the display, using the fit program to take into account the knobs and other tactile control features (not present on the display of Toffolo). Or there can be fit programs which keep data away from tactile ridges and knobs. And unlike Toffolo, data can be momentarily given precedence over other features of normal importance.

It is again noted that one can have knobs or other controls whose function goes back to standard function after amount of time. And the standard function can be changeable if conditions change. For example if rain is detected, the standard can migrate to one where wiper speed and selection is one of knobs (whereas ordinarily wiper issues would have been a secondary function).

And at night, headlight and viewing aids such as IR may become part of standard screen and control surface, which would not be the case in daylight. This is commonly sensed by a photo detector today.

The user can select in some versions if he wants one knob to all the time be something. - e.g. heat speed or heat items constant. For some users constancy is a desirable trait. For others it is inhibiting.

The camera utilized can be any commercial camera, such as a CCD type capable of producing images which can be interrogated as just discussed. However, best results may be obtained in some conditions of operation by using a camera which can be addressed on an individual pixel basis, to achieve faster operation. In such cameras, typically of the CMOS type, one can interrogate only those areas of screen 200 of figure 3a for example, known to contain pixels of interest. For example these would in figure 3c be the regions where one might find the location of what ever knobs or other control details were on the screen. In this case of knob 201 this would include the pixels in an annulus 221 (the same ones preferentially illuminated if desired by the projector for example).

The regions of interest may include other pixels as well, for example those near tactile relief items used to input data. By only looking where data is known to be, the camera speed can be increased to even 1000 frames of data pixels a second for a screen having only a few control details to be interrogated. This is more than ample for any control purposes (typically 30 frames per second is sufficient, the rate of change of manually controlled functions being generally slow (though tracking finger tips and other functions of the invention to be further described can require higher frequencies).

It should be noted too that once a single knob for example is detected to be being changed in its position (by comparison in computer memory for example, to its previous position), the camera can often be directed to concentrate image processing activity largely in this specific location as the driver in the general case does not usually with one hand turn two knobs at once, as an example.

It may be desirable in situations of high ambient sunlight in the car passenger compartment to use a camera such as the FUGA 15 or the color version FUGA 15 RGB (www.vector-international.be) which is pixel addressable as well. This camera has a logarithmic response curve, and can resolve data over huge dynamic light intensity range. Thus in a situation where sunlight was entering the passenger compartment and hitting the screen 200 in figure 3a right next to knob 201, the Intense light would not disturb the camera in its ability to see marker 207 on the rear of the knob, which knob would act to shadow the sunlight in the annular region in question (or over a whole circular area if the knob was opaque rather than transmissive in its center portion. Other types of cameras, particularly CCD types, can "Bloom" under such conditions, and destroy data of neighbouring pixels.

Similarly ones finger tends to shadow the finger tip seen by the camera through the screen from the rear, when touch location or other touch variables are of interest.

One can also control light the light source whether the projector, or a separate source. For example, if the camera unit when set at the maximum integration time conducive with not causing bad effects such as blooming at near by pixels, has insufficient light to determine the presence of marker 207, the light source intensity if desired can be increased for the time needed to make the measurement, thus allowing higher signal to noise and/or faster measurements.

In addition it is contemplated that the projector could have a function (discussed also in fig 13) where it projects infrared radiation just outside the visible range such that nothing on the screen can be seen (or a dull red background for some people with enhanced red vision), and then the measurements of knob position etc taken during the brief period when this situation is the case.

A pixel addressing camera such as the Fuga 15 can also have application to other high dynamic range sensing applications within the vehicle such as the many camera based ones mentioned in copending applications, and in my applications copending with Peter Smith or Shesh Sharma as co-inventors.

Applications can include looking at objects in the car such as children or pets, or in a towed vehicle such as a house trailer. Or a camera (or pair for stereo) can be used behind the towed vehicle to provide information about vehicles following. OR a camera can be located in a pickup bed, to allow the display of the invention to see objects in the bed, or in an enclosed truck or pulled boat or anything else where such things would aid in vehicle navigation (e.g. backing up) safety or relieving distraction influences.

The invention allows the commonly used controls, like the climate control or radio to be utilized in a conventional manner, compliant with FMVSS 101. But the space may also be shared with other control functions. In addition,
a large display is provided in addition, which
serves as well as an auxiliary control surface to have virtual controls

FMVSS 101 is contained in USA CFR Title 49 part 571 "Light" as used herein includes all electro-magnetic wavelengths from ultraviolet to near infrared

The foregoing discussion should be understood as illustrative and should not be considered to be limiting in any sense.

## Claims

1. A method for associating operations in a touch-sensitive device, the method comprising:
displaying a plurality of icons on a touch-sensitive display of the touch-sensitive device, at least two of the plurality of icons representing a function at the touch sensitive device;
detecting positions of a plurality of objects in contact with the touch-sensitive display at the same time;
determining two or more icons corresponding to the detected positions of the plurality of objects;
interconnecting the functions represented by the determined icons in their operation; and
causing the touch-sensitive device to perform the interconnected operation.

2. The method of claim 1, wherein the two or more icons corresponding to the detected positions of the plurality of objects are at least partially covered by the plurality of objects.

3. The method of claim 1, wherein the detected plurality of objects initiate contact with the touch-sensitive display in sequence.

4. The method of claim 1, wherein the detected plurality of objects initiate contact with the touch-sensitive display at about the same time.

5. A computer-readable medium comprising program code for associating system functions in a touch-sensitive device, the program code for causing performance of the method of any preceding claim.

6. An apparatus, comprising:
a touch screen; and
a processor coupled to the touch screen, the processor capable of
displaying a plurality of icons on the touch screen, at least two of the plurality of icons representing functions;
detecting positions of a plurality of objects in contact with the touch screen at the same time,
determining two or more icons corresponding to the detected positions of the plurality of objects,
interconnecting the functions represented by the determined icons in their operation and
causing the apparatus to perform the interconnected operation.

7. The apparatus of claim 6, wherein the two or more icons corresponding to the detected positions of the plurality of objects are at least partially covered by the plurality of objects.

8. The apparatus of claim 6, wherein the detected plurality of objects initiate contact with the touch-sensitive display in sequence.

9. The apparatus of claim 6, wherein the detected plurality of objects initiate contact with the touch-sensitive display at about the same time.

10. A method for associating different applications triggered by concurrent touch inputs, the method comprising:
displaying a plurality of application icons on a display of a computer system, each application icon signifying an application capable of being performed by the computer system;
receiving two or more concurrent touch inputs on a touch-sensitive surface coupled to the computer system;
identifying two or more displayed application icons corresponding to the two or more concurrent touch inputs; and
determining an interconnected operation based on the two or more application icons.

11. The method of claim 10, further comprising causing the computer system to perform the interconnected operation.

12. A computing system configured for associating different applications triggered by concurrent touch inputs, the computing system comprising:
a processor capable of
controlling a display device coupled to the processor to display a plurality of application icons, each application icon signifying an application capable of being performed by the computer system,
receiving two or more concurrent touch inputs from a touch-sensitive surface coupled to the computing system,
identifying two or more displayed application icons corresponding to the two or more concurrent touch inputs, and
determining an interconnected operation based on the two or more application icons.

13. The computing system of claim 12, the processor further capable of performing the interconnected operation.

## Patentansprüche

1. Verfahren zum Assoziieren von Operationen in einer berührungsempfindlichen Vorrichtung, das Verfahren umfassend:
Anzeigen einer Vielzahl von Symbolen auf einer berührungsempfindlichen Anzeige der berührungsempfindlichen Vorrichtung, wobei zumindest zwei der Vielzahl von Symbolen eine Funktion auf der berührungsempfindlichen Vorrichtung darstellen;
Erkennen von Positionen einer Vielzahl von Objekten, die zur gleichen Zeit mit der berührungsempfindlichen Anzeige in Kontakt stehen;
Bestimmen von zwei oder mehr Symbolen entsprechend der erkannten Positionen der Vielzahl von Objekten;
Zusammenschalten der Funktionen, welche durch die bestimmten Symbole dargestellt sind in ihrer Operation; und
Veranlassen der berührungsempfindlichen Vorrichtung, die zusammengeschaltete Operation durchzuführen.

2. Verfahren nach Anspruch 1, wobei die zwei oder mehr Symbole entsprechend der erkannten Positionen der Vielzahl von Objekten zumindest teilweise durch die Vielzahl von Objekten überdeckt werden.

3. Verfahren nach Anspruch 1, wobei die erkannte Vielzahl von Objekten der Reihe nach einen Kontakt mit der berührungsempfindlichen Anzeige initiieren.

4. Verfahren nach Anspruch 1, wobei die erkannte Vielzahl von Objekten ungefähr zur gleichen Zeit einen Kontakt mit der berührungsempfindlichen Anzeige initiieren.

5. Computerlesbares Medium, welches Programmcode zum Assoziieren von Systemfunktionen in einer berührungsempfindlichen Vorrichtung umfasst, wobei der Programmcode die Durchführung des Verfahrens nach einem vorhergehenden Anspruch veranlasst.

6. Vorrichtung, umfassend:
ein Berührungsbildschirm; und
ein Prozessor, der an den Berührungsbildschirm gekoppelt ist, wobei der Prozessor in der Lage ist, eine Vielzahl von Symbolen auf dem Berührungsbildschirm anzuzeigen, zumindest zwei der Vielzahl von Symbolen, welche Funktonen darstellen;
Erkennen von Positionen einer Vielzahl von Objekten, die zur gleichen Zeit mit dem Berührungsbildschirm in Kontakt stehen,
Bestimmen von zwei oder mehr Symbolen, entsprechend der erkannten Positionen der Vielzahl von Objekten,
Zusammenschalten der Funktionen, die durch die bestimmten Symbole dargestellt sind, in ihrer Operation und
Veranlassen der Vorrichtung, die zusammengeschaltete Operation durchzuführen.

7. Vorrichtung nach Anspruch 6, wobei die zwei oder mehr Symbole entsprechend der erkannten Positionen der Vielzahl von Objekten zumindest teilweise durch die Vielzahl von Objekten überdeckt werden.

8. Vorrichtung nach Anspruch 6, wobei die erkannte Vielzahl von Objekten der Reihe nach einen Kontakt mit der berührungsempfindlichen Anzeige initiieren.

9. Vorrichtung nach Anspruch 6, wobei die erkannte Vielzahl von Objekten ungefähr zur gleichen Zeit einen Kontakt mit der berührungsempfindlichen Anzeige initiieren.

10. Verfahren zum Assoziieren von unterschiedlichen Anwendungen, ausgelöst durch gleichzeitige Berührungseingaben, das Verfahren umfassend:
Anzeigen einer Vielzahl von Anwendungssymbolen auf einer Anzeige eines Computersystems, wobei jedes Anwendungssymbol eine Anwendung bedeutet, welche in der Lage ist, durch das Computersystem durchgeführt zu werden;
Empfangen von zwei oder mehr gleichzeitigen Berührungseingaben auf einer berührungsempfindlichen Oberfläche, die an das Computersystem gekoppelt ist;
Identifizieren von zwei oder mehr angezeigten Anwendungssymbolen entsprechend der zwei oder mehr gleichzeitigen Berührungseingaben; und
Bestimmen einer zusammengeschalteten Operation, basierend auf den zwei oder mehr Anwendungssymbolen.

11. Verfahren nach Anspruch 10, weiter umfassend Veranlassen des Computersystems zum Durchführen der zusammengeschalteten Operation.

12. Computersystem eingerichtet zum Assoziieren von unterschiedlichen Anwendungen, ausgelöst durch gleichzeitige Berührungseingaben, wobei das Computersystem umfasst:
einen Prozessor, der in der Lage ist zum
Steuern einer Anzeigevorrichtung, die an den Prozessor gekoppelt ist, zum Anzeigen der Vielzahl von Anwendungssymbolen, wobei jedes Anwendungssymbol eine Anwendung bedeutet, welche in der Lage ist, durch das Computersystem ausgeführt zu werden,
Empfangen von zwei oder mehr gleichzeitigen Berührungseingaben von einer berührungsempfindlichen Oberfläche, die an das Computersystem gekoppelt ist,
Identifizieren von zwei oder mehr angezeigten Anwendungssymbolen,
entsprechend der zwei oder mehr gleichzeitigen Berührungseingaben, und Bestimmen einer zusammengeschalteten Operation basierend auf den zwei oder mehr Anwendungssymbolen.

13. Computersystem nach Anspruch 12, wobei der Prozessor weiterhin in der Lage ist, die zusammengeschaltete Operation durchzuführen.

## Revendications

1. Procédé pour associer des opérations dans un dispositif tactile, le procédé comprenant :
l'affichage d'une pluralité d'icônes sur un affichage tactile du dispositif tactile, au moins deux de la pluralité d'icônes représentant une fonction au niveau du dispositif tactile ;
la détection de positions d'une pluralité d'objets en contact avec l'affichage tactile au même instant ;
la détermination d'au moins deux icônes correspondant aux positions détectées de la pluralité d'objets ;
l'interconnexion des fonctions représentées par les icônes déterminées dans leur opération ; et
le fait d'amener le dispositif tactile à exécuter l'opération interconnectée.

2. Procédé selon la revendication 1, dans lequel les au moins deux icônes correspondant aux positions détectées de la pluralité d'objets sont couvertes au moins partiellement par la pluralité d'objets.

3. Procédé selon la revendication 1, dans lequel la pluralité d'objets détectée initie le contact avec l'affichage tactile en séquence.

4. Procédé selon la revendication 1, dans lequel la pluralité d'objets détectée initie le contact avec l'affichage tactile à peu près en même temps.

5. Support lisible par ordinateur comprenant un code de programme pour associer des opérations de système dans un dispositif tactile, le code de programme étant adapté pour forcer l'exécution du procédé selon une quelconque revendication précédente.

6. Dispositif comprenant :
un écran tactile ; et
un processeur couplé à l'écran tactile, le processeur étant adapté pour
afficher une pluralité d'icônes sur un affichage tactile du dispositif tactile, au moins deux de la pluralité d'icônes représentant des fonctions ;
détecter des positions d'une pluralité d'objets en contact avec l'affichage tactile au même instant,
déterminer au moins deux icônes correspondant aux positions détectées de la pluralité d'objets,
interconnecter les fonctions représentées par les icônes déterminées dans leur opération et
amener le dispositif à exécuter l'opération interconnectée.

7. Dispositif selon la revendication 6, dans lequel les au moins deux icônes correspondant aux positions détectées de la pluralité d'objets sont couvertes au moins partiellement par la pluralité d'objets.

8. Dispositif selon la revendication 6, dans lequel la pluralité d'objets détectée initie le contact avec l'affichage tactile en séquence.

9. Dispositif selon la revendication 6, dans lequel la pluralité d'objets détectée initie le contact avec l'affichage tactile à peu près en même temps.

10. Procédé pour associer des applications différentes déclenchées par des entrées tactiles simultanées, le procédé comprenant :
l'affichage d'une pluralité d'icônes d'application sur un affichage d'un système informatique, chaque icône d'application signifiant une application adaptée pour être exécutée par le système informatique ;
la réception d'au moins deux entrées tactiles simultanées sur une surface tactile couplée au système informatique ;
l'identification d'au moins deux icônes d'application affichées correspondant aux au moins deux entrées tactiles simultanées ; et
la détermination d'une opération interconnectée sur la base des au moins deux icônes d'application.

11. Procédé selon la revendication 10, comprenant en outre le fait d'amener le système informatique à exécuter l'opération interconnectée.

12. Système informatique configuré pour associer des applications différentes déclenchées par des entrées tactiles simultanées, le système informatique comprenant :
un processeur adapté pour :
commander un dispositif d'affichage couplé au processeur pour afficher une pluralité d'icônes d'application, chaque icône d'application signifiant une application adaptée pour être exécutée par le système informatique,
recevoir au moins deux entrées tactiles simultanées provenant d'une surface tactile couplée au système informatique,
identifier au moins deux icônes d'application affichées correspondant aux au moins deux entrées tactiles simultanées, et
déterminer une opération interconnectée sur la base des au moins deux icônes d'application.

13. Système informatique selon la revendication 12, le processeur étant adapté en outre pour exécuter l'opération interconnectée.
